# EUROPEAN PATENT APPLICATION

(11) **EP 2 647 285 A2**
(43) Date of publication of application: **09.10.2013**
(21) Application number: 11176363.7
(22) Date of filing: 03.08.2011

(54) **Pest control composition**

(30) Priority: 03.08.2010 JP 2010174938
(71) Applicant: Sumitomo Chemical Company, Limited, Tokyo 104-8260 (JP)
(72) Inventor: Ikari, Kaori, Hyogo 665-8555 (JP)
(74) Representative: Hofmann, Andreas

(57) **Abstract**

A composition having an excellent control activity on pests is provided.

Means of Achievement:
A pest control composition comprising
(i) a hydrazide compound shown by the following formula (1) [wherein G, M, Q¹, Q², Q³, Q⁴, R², R⁴, R⁵, R⁶ and m have the meanings listed in the specification], and
(ii) pyriproxyfen.

A pest control method comprising a step of applying effective amounts of
(i) a hydrazide compound shown by the following formula (1) [wherein G, M, Q¹, Q², Q³, Q⁴, R², R⁴, R⁵, R⁶ and m have the meanings listed in the specification], and
(ii) pyriproxyfen

to pests or pest habitats.

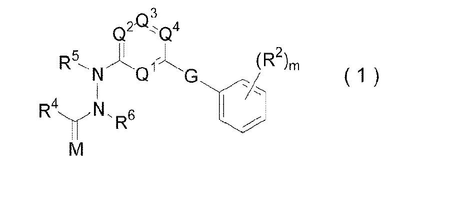

## Description

### FIELD OF THE INVENTION

The present invention relates to a pest control composition that comprises a hydrazide compound and pyriproxyfen.

### DESCRIPTION OF THE RELATED ART

Compositions comprising at least one compound selected from 1-(tetrahydrofuran-3-yl)methyl-3-methyl-2-nitroguanidine and 3-[(2-chloro-5-thiazolyl)methyl]-5-methyl-4-nitroiminotetrahydro-1,3,5-oxadiazine, and pyriproxyfen are known to have control activity against harmful arthropods (for example, see Japanese Unexamined Patent Application No. 2000-109403).

Better control activity is sometimes necessary, depending on the target organism.

The object of the present invention is to provide a composition having a superior control activity suited to the control of pests.

### DISCLOSURE OF THE INVENTION

As a result of in-depth studies intended to discover compositions having superior control activity, the present inventors discovered that a composition that comprises the following (i) and (ii):
(i) a hydrazide compound shown by formula (1): 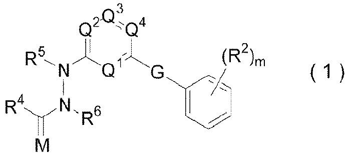 wherein
   G represents a group shown by any of the following formulas G-1 to G-3: 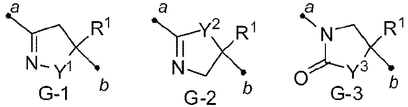 wherein each of a point (a) and point (b) represents a bond, and the point (b) represents a bond with a phenyl ring,
   R¹ represents a C₁-C₄ haloalkyl group,
   Y¹ represents: an oxygen atom; a sulfur atom; or an NR⁷ group,
   Y² represents: an oxygen atom; a sulfur atom; an NR⁷ group; or a methylene group, and
   Y³ represents: an oxygen atom; a sulfur atom; an NR⁷ group; or a methylene group,
   wherein R⁷ represents: a C₁-C₆ alkyl group; a C₂-C₆ alkenyl group; a C₂-C₆ alkynyl grou; a C₃-C₆ cycloalkyl group; a C₄-C₇ cycloalkylalkyl group; a C₂-C₆ alkylcarbonyl group; a C₂-C₆ alkoxycarbonyl group; a C₂-C₆ alkylaminocarbonyl group; a C₃-C₉ dialkylaminocarbonyl group; a phenyl group; a cyano group; a formyl group; or a hydrogen atom,
   M represents: an oxygen atom; or a sulfur atom,
   Q¹, Q², Q³, and Q⁴ are the same or different, each of which independently represents: a nitrogen atom; or a CR³ group,
   wherein each R³ independently represents: a C₁-C₆ alkyl group optionally substituted by a halogen atom; a C₁-C₆ alkoxy group optionally substituted by a halogen atom; a nitro group; a cyano group; a halogen atom; or a hydrogen atom,
   m represents an integer of from 0 to 5,
   R² represents: a C₁-C₆ alkyl group optionally substituted by a halogen atom; a C₁-C₆ alkoxy group optionally substituted by a halogen atom; a C₁-C₆ alkylthio group; a C₁-C₆ alkylsulfinyl group; a C₁-C₆ alkylsulfonyl group; a nitro group; a cyano group; or a halogen atom, with the proviso that R² are the same or different when m is any integer of 2-5,
   R⁵ and R⁶ are the same or different, each of which independently represents: a C₁-C₁₂ chain hydrocarbon group optionally substituted by a group selected from Group E1; a benzoyl group optionally substituted by a group selected from Group E2; a C₂-C₆ alkylcarbonyl group; a C₂-C₆ alkoxycarbonyl group; a C₃-C₁₂ cycloalkyl group; a formyl group; or a hydrogen atom,
   R⁴ represents: a C₁-C₁₂ chain hydrocarbon group optionally substituted by a group selected from the Group E1; a C₃-C₁₂ cyclic hydrocarbon group optionally substituted by a group selected from the Group E2; a 5- to 6-membered heterocyclic group optionally substituted by a group selected from the Group E2; an OR⁸ group; an N(R⁹)R¹⁰ group; or a hydrogen atom,
   wherein R⁸ represents: a C₁-C₁₂ chain hydrocarbon group optionally substituted by a group selected from the Group E1; a C₃-C₁₂ cyclic hydrocarbon group optionally substituted by a group selected from the Group E2; or a 5- to 6-membered heterocyclic group optionally substituted by a group selected from the Group E2,
   R⁹ represents: a C₁-C₁₂ chain hydrocarbon group optionally substituted by a group selected from the Group E1; or a C₃-C₁₂ cyclic hydrocarbon group optionally substituted by a group selected from the Group E2, and
   R¹⁰ represents: a C₁-C₁₂ chain hydrocarbon group optionally substituted by a group selected from the Group E1; or a hydrogen atom, or R⁹ and R¹⁰ are bonded at the ends to represent a C₂-C₉ alkanediyl group,
   said Group E1 consisting of: a C₃-C₁₂ cyclic hydrocarbon group optionally substituted by a group selected from the Group E2; a 5- to 6-membered heterocyclic group optionally substituted by a group selected from the Group E2; a phenoxy group optionally substituted by a group selected from the Group E2; a phenylamino group optionally substituted by a group selected from the Group E2; a C₂-C₆ alkylcarbonyl group; a C₂-C₆ alkoxycarbonyl group; a C₁-C₆ alkoxy group; a C₁-C₆ alkylamino group; a C₂-C₁₂ dialkylamino group; a nitro group; a cyano group; a formyl group; and a halogen atom,
   said Group E2 consisting of: a C₁-C₆ alkyl group optionally substituted by a halogen atom; a C₁-C₆ alkoxy group optionally substituted by a halogen atom; a C₂-C₆ alkylcarbonyl group; a C₂-C₆ alkoxycarbonyl group; a C₁-C₆ alkylamino group; a C₂-C₁₂ dialkylamino group; a nitro group; a cyano group; a formyl group; and a halogen atom; and
(ii) pyriproxyfen has an excellent control activity against pests and thereby achieved the present invention.

Specifically, the present invention includes a pest control composition comprising a hydrazide compound shown by formula (1) and pyriproxyfen.

According to an advantageous embodiment of the present invention, in the formula (1), G is a group shown by G-1, Y¹ is an oxygen atom, R¹ is a trifluoromethyl group, Q¹, Q³, and Q⁴ are CH group, Q² is a CR³ group, R³ is a group defined above, m is 2, (R²)ₘ represents substituents at position 3 and position 5, and R² is a chlorine atom.

According to an expedient embodiment of the present invention, in the formula (1), R⁶ is a hydrogen atom.

According to a preferred embodiment of the present invention, in the formula (1), R⁵ is a hydrogen atom or a methyl group.

According to an advantageous embodiment of the present invention, in the formula (1), R³ is a halogen atom.

According to an expedient embodiment of the present invention, in the formula (1), R³ is a chlorine atom.

According to a preferred embodiment of the present invention, in the formula (1), R⁴ is a C₂-C₆ alkyl group, a C₁-C₆ haloalkyl group, a C₃-C₆ cycloalkyl group or a (C₁-C₆ alkoxy) C₁-C₆ alkyl group.

According to an advantageous embodiment of the present invention, in the formula (1), R⁴ is a C₂-C₆ alkyl group or R⁴ is a C₁-C₆ haloalkyl group or R⁴ is a C₃-C₆ cycloalkyl group or R⁴ is a (C₁-C₆ alkoxy) C₁-C₆ alkyl group.

The present invention further includes a pest control method comprising a step of applying effective amounts of the hydrazide compound shown by the formula (1) as indicated above and pyriproxyfen to pests or pest habitats.

The present invention finally includes a combination use of a hydrazide compound shown by the formula (1) as indicated above and pyriproxyfen to control pests.

The pest control composition of the present invention has an excellent ability to control pests.

### DETAILED DESCRIPTION OF THE EMBODIMENTS

The weight ratio of a hydrazide compound shown by formula (1) (referred to hereinafter as hydrazide compound) and pyriproxyfen in the pest control composition of the present invention is preferably in the 5000:1-1:5000 range, more preferably in the 5000:1-1:1 range.

The term phenyl ring in "G represents a group shown by any of the following formulas G-1 to G-3: 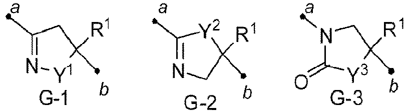 wherein each of a point (a) and point (b) represents a bond, and the point (b) represents a bond with a phenyl ring," means a phenyl ring shown by 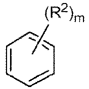 wherein R² and m represents the same as above. For example, "a hydrazide compound, wherein in formula (1), G is a group shown by G-1" means a compound shown by the following formula (a) 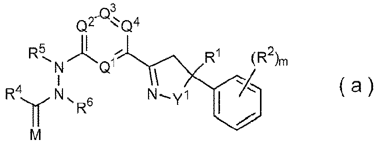 wherein Q¹, Q², Q³, Q⁴, R¹, R², R⁴, R⁵, R⁶, M, Y¹, and m represents the same as above.

In the present invention, "halogen atom" means a fluorine atom, a chlorine atom, a bromine atom, or an iodine atom. In this specification as well, the description of "C₂-C₆" shown, for example, by a "C₂-C₆ alkylaminocarbonyl group" means that the number of carbon atoms that constitute the entire alkylaminocarbonyl group is in the 2-6 range.

Examples of substituents of the hydrazide compound appear below.
The following groups can be given as examples of group shown by any of G-1 to G-3.

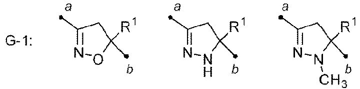

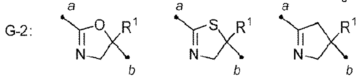

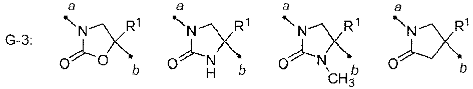

In this specification:
Examples of "C₁-C₄ haloalkyl group" include a fluoromethyl group, a difluoromethyl group, a dichloromethyl group, a trifluoromethyl group, a chlorofluoromethyl group, a bromofluoromethyl group, a chlorodifluoromethyl group, a bromodifluoromethyl group, a 1-fluoroethyl group, a 1,1-difluoroethyl group, a 1,1,2,2,2-pentafluoroethyl group, a 1,1,2,2,3,3,3-heptafluoropropyl group, and a 1,2,2,2-tetrafluoro-1-(trifluoromethyl)ethyl group.
Examples of "C₁-C₆ alkyl group" include a methyl group, a ethyl group, propyl group, an isopropyl group, a butyl group, an isobutyl group, a sec-butyl group, a tert-butyl group, a pentyl group, a 1-methylbutyl group, a 2-methylbutyl group, a 3-methylbutyl group, a 1-ethylpropyl group, a 1,1-dimethylpropyl group, a 1,2-dimethylpropyl group, a 2,2-dimethylpropyl group, a hexyl group, a 1-methylpentyl group, a 2-methylpentyl group, a 1,1-dimethylbutyl group, and a 1,3-dimethylbutyl group.
Examples of "C₂-C₆ alkenyl group" include a vinyl group, a 1-propenyl group, a 2-propenyl group, a 1-methyl-2-propenyl group, a 2-methyl-2-propenyl group, a 1-butenyl group, 2-butenyl group, a 3-butenyl group, a 1-pentenyl group, a 2-pentenyl group, a 3-pentenyl group, a 4-pentenyl group, a 1-hexenyl group, a 2-hexenyl group, a 3-hexenyl group, a 4-hexenyl group, and a 5-hexenyl group.
Examples of "C₂-C₆ alkynyl group" include an ethynyl group, a 1-propynyl group, a 2-propynyl group, a 1-butynyl group, a 2-butynyl group, a 3-butynyl group, a 1-pentynyl group, a 2-pentynyl group, a 3-pentynyl group, a 4-pentynyl group, a 1-hexynyl group, a 2-hexynyl group, a 3-hexynyl group, a 4-hexynyl group, and a 5-hexynyl group.
Examples of "C₃-C₆ cycloalkyl group" include a cyclopropyl group, a 1-methylcyclopropyl group, a 2-methylcyclopropyl group, a 2,2-dimethylcyclopropyl group, a cyclobutyl group, cyclopentyl group, a 1-methylcyclopentyl group, a 2-methylcyclopentyl group, a 3-methylcyclopentyl group, and a cyclohexyl group.
Examples of "C₄-C₇ cycloalkylalkyl group" include a cyclopropylmethyl group, a 1-cyclopropylethyl group, a 2-cyclopropylethyl group, a cyclobutylmethyl group, a cyclopentylmethyl group, and a cyclohexylmethyl group.

Examples of "C₂-C₆ alkylcarbonyl group" include an acetyl group, a propionyl group, a butyloyl group, an isobutyloyl group, and a pivaloyl group.
Examples of "C₂-C₆ alkoxycarbonyl group" include a methoxycarbonyl group, an ethoxycarbonyl group, an isopropyloxycarbonyl group, a butoxycarbonyl group, a tert-butoxycarbonyl group, and a pentyloxycarbonyl group. Examples of "C₂-C₆ alkylaminocarbonyl group" include an N-methylaminocarbonyl group, an N-ethylaminocarbonyl group, an N-propylaminocarbonyl group, an N-butylaminocarbonyl group, and an N-pentylaminocarbonyl group. Examples of "C₃-C₉ dialkylaminocarbonyl group" include an N,N-dimethylaminocarbonyl group and an N,N-diethylaminocarbonyl group.

Examples of "C₁-C₆ alkoxy group" include a methoxy group, an ethoxy group, a propoxy group, an isopropoxy group, a butoxy group, an isobutoxy group, a sec-butoxy group, a tert-butoxy group, a pentyloxy group, and a hexyloxy group.

Examples of "C₁-C₆ alkyl group optionally substituted by a halogen atom" include a methyl group, a ethyl group, a propyl group, an isopropyl group, a butyl group, an isobutyl group, a sec-butyl group, a tert-butyl group, a pentyl group, a 1-methylbutyl group, a 2-methylbutyl group, a 3-methylbutyl group, a 1-ethylpropyl group, a 1,1-dimethylpropyl group, a 1,2-dimethylpropyl group, a 2,2-dimethylpropyl group, a hexyl group, a 1-methylpentyl group, a 2-methylpentyl group, a 1,1-dimethylbutyl group, a 1,3-dimethylbutyl group, and other such C₁-C₆ alkyl group; fluoromethyl group, a difluoromethyl group, a dichloromethyl group, a trifluoromethyl group, a chlorofluoromethyl group, a bromofluoromethyl group, a chlorodifluoromethyl group, a bromodifluoromethyl group, a 1-fluoroethyl group, a 1,1-difluoroethyl group, a 1,1,2,2,2-pentafluoroethyl group, a 1,1,2,2,3,3,3-heptafluoropropyl group, a 1,2,2,2-tetrafluoro-1-(trifluoromethyl)ethyl group, and other such C₁-C₆ haloalkyl group.
Examples of "C₁-C₆ alkoxy group optionally substituted by a halogen atom" include a methoxy group, an ethoxy group, a propoxy group, an isopropoxy group, a butoxy group, an isobutoxy group, a sec-butoxy group, a tert-butoxy group, a pentyloxy group, a hexyloxy group, and other such C₁-C₆ alkoxy group; a difluoromethoxy group, a trifluoromethoxy group, a chlorodifluoromethoxy group, a bromodifluoromethoxy group, a 2-fluoroethoxy group, a 2-chloroethoxy group, a 2,2,2-trifluoroethoxy group, a 1,1,2,2-tetrafluoroethoxy group, a 2-chloro-1,1,2-trifluoroethoxy group, a 2-bromo-1,1,2-trifluoroethoxy group, a 1,1,2,2,2-pentafluoroethoxy group, a 2,2-dichloro-1,1,2-trifluoroethoxy group, a 2,2,2-trichloro-1,1-difluoroethoxy group, a 2-bromo-1,1,2,2-tetrafluoroethoxy group, a 2,2,3,3-tetrafluoropropyloxy group, a 1,1,2,3,3,3-hexafluoropropyloxy group, a 2,2,2-trifluoro-1-(trifluoromethyl)ethoxy group, a 1,1,2,2,3,3,3-heptafluoropropyloxy group, a 2-bromo-1,1,2,3,3,3-hexafluoropropyloxy group, and other such C₁-C₆ haloalkoxy group.

Examples of "C₁-C₆ alkylthio group" include a methylthio group, an ethylthio group, a propylthio group, an isopropylthio group, a butylthio group, a pentylthio group, and a hexylthio group.
Examples of "C₁-C₆ alkylsulfinyl group" include a methanesulfinyl group, an ethylsulfinyl group, a propylsulfinyl group, an isopropylsulfinyl group, a butylsulfinyl group, a pentylsulfinyl group, and a hexylsulfinyl group.
Examples of "C₁-C₆ alkylsulfonyl group" include a methanesulfonyl group, an ethylsulfonyl group, a propylsulfonyl group, an isopropylsulfonyl group, a butylsulfonyl group, a pentylsulfonyl group, and a hexylsulfonyl group.

Examples of "C₃-C₁₂ cycloalkyl group" include a cyclopropyl group, a 1-methylcyclopropyl group, a 2-methylcyclopropyl group, a 2,2-dimethylcyclopropyl group, a 2,2,3,3-tetramethylcyclopropyl group, a cyclobutyl group, a cyclopentyl group, a 1-methylcyclopentyl group, a 2-methylcyclopentyl group, a 3-methylcyclopentyl group, a cyclohexyl group, a 1-methylcyclohexyl group, a 2-methylcyclohexyl group, a 3-methylcyclohexyl group, a 4-methylcyclohexyl group, a cycloheptyl group, and a cyclooctyl group.
Examples of "C₂-C₉ alkanediyl group" include a 1,2-ethylene group, a 1,4-tetramethylene group, and a 1,5-pentamethylene group.

Examples of "C₁-C₁₂ chain hydrocarbon group in "C₁-C₁₂ chain hydrocarbon group optionally substituted by a group selected from Group E1" include a C₁-C₁₂ alkyl group, a C₂-C₁₂ alkenyl group, and a C₂-C₁₂ alkynyl group.

Examples of "C₁-C₁₂ chain hydrocarbon group optionally substituted by a group selected from Group E1" include a methyl group, an ethyl group, a propyl group, an isopropyl group, a butyl group, an isobutyl group, a sec-butyl group, a tert-butyl group, a pentyl group, a 1-methylbutyl group, a 2-methylbutyl group, a 3-methylbutyl group, a 1-ethylpropyl group, a 1,1-dimethylpropyl group, a 1,2-dimethylpropyl group, a 2,2-dimethylpropyl group, hexyl group, a 1-methylpentyl group, a 2-methylpentyl group, a 1,1-dimethylbutyl group, a 1,3-dimethylbutyl group, a heptyl group, an octyl group, a nonyl group, a decyl group, an undecyl group, a dodecyl group, and other such C₁-C₁₂ alkyl group; a vinyl group, a 1-methylvinyl group, a 1-phenylvinyl group, a 1-propenyl group, a 2-propenyl group, a 2-butenyl group, a 1-methyl-2-propenyl group, a 2-methyl-2-propenyl group, a 2-pentenyl group, a 2-methyl-2-butenyl group, a 3-methyl-2-butenyl group, a 2-ethyl-2-propenyl group, a 1,1-dimethyl-2-propenyl group, a 2-hexenyl group, a 2-methyl-2-pentenyl group, a 2,4-dimethyl-2,6-heptadienyl group, a 3,7-dimethyl-2,6-octadienyl group, and other such C₂-C₁₂ alkenyl group;
a 2-propynyl group, a 2-butynyl group, a 1-methyl-2-propynyl group, a 2-pentynyl group, a 1-methyl-2-butynyl group, a 1,1-dimethyl-2-propynyl group, a 2-hexynyl group, and other such C₂-C₁₂ alkynyl group;
a fluoromethyl group, a chloromethyl group, a bromomethyl group, an iodomethyl group, a difluoromethyl group, a chlorofluoromethyl group, a dichloromethyl group, a bromofluoromethyl group, a trifluoromethyl group, a chlorodifluoromethyl group, a dichlorofluoromethyl group, a trichloromethyl group, a bromodifluoromethyl group, a bromochlorofluoromethyl group, a difluoroiodomethyl group, a 2-fluoroethyl group, a 2-chloroethyl group, a 2-bromoethyl group, a 2,2-difluoroethyl group, a 2-chloro-2-fluoroethyl group, a 2,2-dichloroethyl group, a 2-bromo-2-fluoroethyl group, a 2,2,2-trifluoroethyl group, a 2-chloro-2,2-difluoroethyl group, a 2,2-dichloro-2-fluoroethyl group, a 2,2,2-trichloroethyl group, a 2-bromo-2,2-difluoroethyl group, a 1,1,2,2-tetrafluoroethyl group, a 1,1,2,2,2-pentafluoroethyl group, a 1-chloro-1,2,2,2-tetrafluoroethyl group, a 2-chloro-1,1,2,2-tetrafluoroethyl group, a 1,2-dichloro-1,2,2-trifluoroethyl group, a 1-bromo-1,2,2,2-tetrafluoroethyl group, a 2-bromo-1,1,2,2-tetrafluoroethyl group, a 2-fluoropropyl group, a 2-chloropropyl group, a 2,3-dichloropropyl group, a 3,3,3-trifluoropropyl group, a 3-bromo-3,3-difluoropropyl group, a 2,2,3,3-tetrafluoropropyl group, a 2,2,3,3,3-pentafluoropropyl group, a 1,1,2,3,3,3-hexafluoropropyl group, a 1,1,2,2,3,3,3-heptafluoropropyl group, a 2,3-dichloro-1,1,2,3,3-pentafluoropropyl group, a 2-fluoro-1-methylethyl group, a 2-chloro-1-methylethyl group, a 2-bromo-1-methylethyl group, a 2,2,2-trifluoro-1-(trifluoromethyl)ethyl group, a 1,2,2,2-tetrafluoro-1-(trifluoromethyl)ethyl group, a 1,1,2,2,3,3,4,4,4-nonafluorobutyl group, and other such C₁-C₁₂ haloalkyl group;
a 2,2-fluorovinyl group, a 2,2-dichlorovinyl group, a 2-fluoro-2-propenyl group, a 2-chloro-2-propenyl group, a 3-chloro-2-propenyl group, a 2-bromo-2-propenyl group, a 3-bromo-2-propenyl group, a 3,3-difluoro-2-propenyl group, a 2,3-dichloro-2-propenyl group, a 3,3-dichloro-2-propenyl group, a 2,3-dibromo-2-propenyl group, a 2,3,3-trifluoro-2-propenyl group, a 2,3,3-trichloro-2-propenyl group, a 3-chloro-2-butenyl group, a 3-bromo-2-butenyl group, a 4,4-difluoro-3-butenyl group, a 3,4,4-trifluoro-3-butenyl group, a 3-chloro-3,4,4-trifluoro-2-butenyl group, a 3-bromo-2-methyl-2-propenyl group, and other such C₂-C₁₂ haloalkenyl group;
a 3-chloro-2-propynyl group, a 3-bromo-2-propynyl group, a 3-iodo-2-propynyl group, and other such C₂-C₁₂ haloalkynyl group;
a cyanomethyl group and other such cyano (C1-C12 alkyl) group;
a nitromethyl group and other such C₁-C₁₂ nitroalkyl group;
an N,N-dimethylaminomethyl group and other such (C₂-C₁₂ dialkylamino) C₁-C₁₂ alkyl group;
an N-ethylaminomethyl group and other such (C₁-C₆ alkylamino) C₁-C₁₂ alkyl group;
a methoxymethyl group, a 2-methoxyethyl group, a 2-ethoxyethyl group, a 2-propoxyethyl group, a 2-isopropoxyethyl group, a 2-butoxyethyl group, a 2-isobutoxyethyl group, a 2-(1-methylpropyloxy)ethyl group, a 2-(1,1-dimethylethoxy)ethyl group, and other such (C₁-C₆ alkoxy) C₁-C₁₂ alkyl group;
a methoxycarbonylmethyl group, an ethoxycarbonylmethyl group, a propoxycarbonylmethyl group, an isopropoxycarbonylmethyl group, a tert-butoxycarbonylmethyl group, and other such (C₂-C₆ alkoxycarbonyl) C₁-C₁₂ alkyl group;
an acetylmethyl group, a 2-acetylethyl group, and other such (C₂-C₆ alkylcarbonyl) C₁-C₁₂ alkyl group;
a phenoxymethyl group, a 4-chlorophenoxymethyl group, a phenoxyethyl group, and other such phenoxy group-substituted C₁-C₁₂ alkyl group optionally substituted by a group selected from Group E2;
a phenylaminomethyl group, a 4-chlorophenylaminomethyl group, a phenylaminoethyl group, and other such phenylamino group-substituted C₁-C₁₂ alkyl group optionally substituted by a group selected from Group E2;
a group shown by the following formulas: 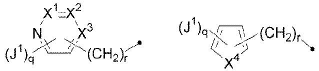 wherein X¹, X², and X³ represent a combination in which all three show a CH group or a combination in which any one is a nitrogen atom and the other two show a CH group, X⁴ represents an oxygen atom, a sulfur atom, or an NH group, r represents an integer of 1-12, q represents an integer of 0-3, J¹ represents a C₁-C₆ alkyl group optionally substituted by a halogen atom, a C₁-C₆ alkoxy group optionally substituted by a halogen atom, a C₂-C₆ alkylcarbonyl group, a C₂-C₆ alkoxycarbonyl group, a C₁-C₆ alkylamino group, a C₂-C₁₂ dialkylamino group, a nitro group, a cyano group, a formyl group, or a halogen atom, and other such 5- to 6-membered heterocyclic group-substituted C₁-C₁₂ alkyl group optionally substituted by a group selected from Group E2;
a benzyl group, a phenethyl group, a 4-methylbenzyl group, a 4-chlorobenzyl group, a 2-(cyclopropyl)ethyl group, a cyclopropylmethyl, and other such C₃-C₁₂ cyclic hydrocarbon group-substituted C₁-C₁₂ alkyl group optionally substituted by a group selected from Group E2.

Examples of "benzoyl group optionally substituted by a group selected from Group E2" include a benzoyl group, a 2-fluorobenzoyl group, a 3-fluorobenzoyl group, a 4-fluorobenzoyl group, a 2-chlorobenzoyl group, a 3-chlorobenzoyl group, a 4-chlorobenzoyl group, a 2-methoxybenzoyl group, a 3-methoxybenzoyl group, a 4-methoxybenzoyl group, a 2-cyanobenzoyl group, a 3-cyanobenzoyl group, a 4-cyanobenzoyl group, a 2-nitrobenzoyl group, a 3-nitrobenzoyl group, and a 4-nitrobenzoyl group.

Examples of C₃-C₁₂ cyclic hydrocarbon group in the hydrazide compound include a phenyl group, a naphthyl group, and a C₃-C₁₂ cycloalkyl group,
Examples of "C₃-C₁₂ cyclic hydrocarbon group optionally substituted by a group selected from Group E2" include a phenyl group, a 2-methylphenyl group, a 3-methylphenyl group, a 4-methylphenyl group, a 2-(trifluoromethyl)phenyl group, a 3-(trifluoromethyl)phenyl group, a 4-(trifluoromethyl)-phenyl group, a 2-fluorophenyl group, a 3-fluorophenyl group, a 4-fluorophenyl group, a 2-chlorophenyl group, a 3-chlorophenyl group, a 4-chlorophenyl group, a 2-bromophenyl group, a 3-bromophenyl group, a 4-bromophenyl group, a 2-iodophenyl group, a 3-iodophenyl group, a 4-iodophenyl group, a 2-cyanophenyl group, a 3-cyanophenyl group, a 4-cyanophenyl group, a 2-nitrophenyl group, a 3-nitrophenyl group, a 4-nitrophenyl group, a 2-methoxyphenyl group, a 3-methoxyphenyl group, a 4-methoxyphenyl group, a 2-(trifluoromethoxy)phenyl group, a 3-(trifluoromethoxy)phenyl group, a 4-(trifluoromethoxy)phenyl group, a 2,3-dichlorophenyl group, a 2,4-dichlorophenyl group, a 2,5-dichlorophenyl group, a 2,6-dichlorophenyl group, a 3,4-dichlorophenyl group, a 3,5-dichlorophenyl group, a 2,3,4-trichlorophenyl group, a 2,3,5-trichlorophenyl group, a 3,4,5-trichlorophenyl group, a 2,4,6-trichlorophenyl group, a 2,3-difluorophenyl group, a 2,4-difluorophenyl group, a 2,5-difluorophenyl group, a 2,6-difluorophenyl group, a 3,4-difluorophenyl group, a 3,5-difluorophenyl group, a 3,4,5-trifluorophenyl group, a 2,3,5,6-tetrafluorophenyl group, a 2,3,4,5,6-pentafluorophenyl group, a 3,5-bis(trifluoromethyl)phenyl group, a 2,3-dimethoxyphenyl group, a 2,4-dimethoxyphenyl group, a 2,5-dimethoxyphenyl group, a 2,6-dimethoxyphenyl group, a 3,4-dimethoxyphenyl group, a 3,5-dimethoxyphenyl group, a 4-methoxycarbonylphenyl group, a 4-ethoxycarbonylphenyl group, and other such phenyl group; a cyclopropyl group, a 1-methylcyclopropyl group, a 2-methylcyclopropyl group, a 2,2-dimethylcyclopropyl group, a 2,2,3,3-tetramethylcyclopropyl group, a cyclobutyl group, cyclopentyl group, a 1-methylcyclopentyl group, a 2-methylcyclopentyl group, a 3-methylcyclopentyl group, a cyclohexyl group, a 1-methylcyclohexyl group, a 2-methylcyclohexyl group, a 3-methylcyclohexyl group, a 4-methylcyclohexyl group, a cycloheptyl group, a cyclooctyl group, and other such C₃-C₁₂ cycloalkyl group.

Examples of the 5- to 6-membered heterocyclic group in the "5- to 6-membered heterocyclic group optionally substituted by a group selected from Group E2" include a tetrahydrofuranyl group, a furanyl group, a thienyl group, a pyrrolyl group, an imidazolyl group, an isothiazolyl group, and other such 5-membered heterocyclic group in which the hetero atom is an oxygen atom, a sulfur atom and/or a nitrogen atom;
a piperidino group, a morpholino group, a pyridyl group, a pyridazinyl group, a pyrimidyl group, a pyrazinyl group, and other such 6-membered heterocyclic group in which the hetero atom is an oxygen atom, a sulfur atom and/or a nitrogen atom.

Examples of the "5- to 6-membered heterocyclic group optionally substituted by a group selected from Group E2" include a 1-pyrrolyl group, a 2-pyrrolyl group, a 3-pyrrolyl group, a 2-furanyl group, a 3-furanyl group, a 2-thienyl group, a 3-thienyl group, a 1-pyrazolyl group, a 3-pyrazolyl group, a 4-pyrazolyl group, a 3-isoxazolyl group, a 4-isoxazolyl group, a 5-isoxazolyl group, a 3-isothiazolyl group, a 4-isothiazolyl group, a 5-isothiazolyl group, a 1-imidazolyl group, a 2-imidazolyl group, a 4-imidazolyl group, a 2-oxazolyl group, a 4-oxazolyl group, a 5-oxazolyl group, a 2-thiazolyl group, a 4-thiazolyl group, a 5-thiazolyl group, a 1,2,4-triazol-1-yl group, a 1,2,4-triazol-3-yl group, a 1,3,4-oxadiazol-2-yl group, a 1,3,4-thiadiazol-2-yl group, a 1,2,4-oxadiazol-3-yl group, a 1,2,4-oxadiazol-5-yl group, a 1,2,4-thiadiazol-3-yl group, a 1,2,4-thiadiazole-5-yl group, a 1-pyrrolidinyl group, a 2-pyrrolidinyl group, a 3-pyrrolidinyl group, a 2-tetrahydrofuranyl group, a 3-tetrahydrofuranyl group, a 1-piperidino group, a 1-morpholino group, a 2-pyridyl group, a 3-pyridyl group, a 4-pyridyl group, a 3-pyridazinyl group, a 4-pyridazinyl group, a 2-pyrimidinyl group, a 4-pyrimidinyl group, a 5-pyrimidinyl group, a 2-pyrazinyl group, a 1,2,4-triazin-3-yl group, a 1,2,4-triazin-5-yl group, a 1,2,4-triazin-6-yl group, and a 1,3,5-triazin-2-yl group.
Examples of "C₁-C₆ alkylamino group" include an N-methylamino group, an N-ethylamino group, an N-propylamino group, an N-butylamino group, and an N-pentylamino group.
Examples of "C₂-C₁₂ dialkylamino group" include an N,N-dimethylamino group and an N,N-diethylamino group.
Examples of the above OR⁸ group include a methoxy group, an ethoxy group, a propoxy group, an isopropoxy group, a butoxy group, an isobutoxy group, a sec-butoxy group, a tert-butoxy group, a vinyloxy group, an allyloxy group, a 2,2,2-trifluoroethoxy group, a cyanomethoxy group, a 2-(N,N-dimethylamino)ethoxy group, a 2-(N-methylamino)ethoxy group, a 2-methoxyethoxy group, a methoxycarbonylmethoxy group, an acetylmethoxy group, a 2-phenoxyethoxy group, a 2-(phenylamino)ethoxy group, a 2-pyridyloxy group, a benzyloxy group, a phenoxy group, a cyclohexyloxy group, a furan-2-oxy group, a pyridin-2-oxy group, and the like.
Examples of the above N(R⁹)R¹⁰ group include an N-methylamino group, an N,N-dimethylamino group, an N-ethylamino group, an N,N-diethylamino group, an N-methyl-N-ethylamino group, an N-allylamino group, an N-(2,2,2-trifluoroethyl)amino group, an N-(2-(N,N-dimethylamino)ethyl)amino group, an N-(2-(N-methylamino)ethyl)amino group, an N-(2-methoxyethyl)amino group, an N-(methoxycarbonylmethyl)amino group, an N-(2-phenoxyethyl)amino group, an N-(2-(phenylamino)ethyl)amino group, an N-benzylamino group, N-phenylamino group, an N-phenyl-N-methylamino group, an N-cyclohexylamino group, an N-cyclohexyl-N-methylamino group, a pyrrolidin-1-yl group, a piperizin-1-yl group, and the like.

The following hydrazide compounds can be given as examples of embodiments of the hydrazide compound. 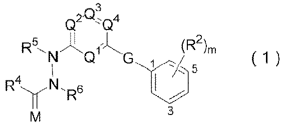 Hydrazide compounds wherein in formula (1), G is a group shown by G-1;
Hydrazide compounds wherein in formula (1), G is a group shown by G-1 and Y¹ is an oxygen atom;
Hydrazide compounds wherein in formula (1), R¹ is a trifluoromethyl group;
Hydrazide compounds wherein in formula (1), Q¹, Q², Q³, and Q⁴ are CH group;
Hydrazide compounds wherein in formula (1), Q¹, Q³, and Q⁴ are CH group, Q² is a CR³ group, and R³ is as defined above;
Hydrazide compounds wherein in formula (1), Q¹, Q³, and Q⁴ are CH group, Q² is a CR³ group, and R³ is a C₁-C₆ alkyl group;
Hydrazide compounds wherein in formula (1), Q¹, Q³, and Q⁴ are CH group, Q² is a CR³ group, and R³ is a methyl group;
Hydrazide compounds wherein in formula (1), Q¹, Q³, and Q⁴ are CH group, Q² is a CR³ group, and R³ is an ethyl group;
Hydrazide compounds wherein in formula (1), Q¹, Q³, and Q⁴ are CH group, Q² is a CR³ group, and R³ is a halogen atom;
Hydrazide compounds wherein in formula (1), Q¹, Q³, and Q⁴ are CH group, Q² is a CR³ group, and R³ is a fluorine atom;
Hydrazide compounds wherein in formula (1), Q¹, Q³, and Q⁴ are CH group, Q² is a CR³ group, and R³ is a chlorine atom;
Hydrazide compounds wherein in formula (1), Q¹, Q³, and Q⁴ are CH group, Q² is a CR³ group, and R³ is a bromine atom;

Hydrazide compounds wherein in formula (1), m is 2 and R² is respectively a halogen atom;
Hydrazide compounds wherein in formula (1), m is 2 and R² is respectively a chlorine atoms;
Hydrazide compounds wherein in formula (1), m is 2, (R²)ₘ is a substituent at position 3 and position 5, and R² is respectively a chlorine atoms;
Hydrazide compounds wherein in formula (1), R⁴ is a C₁-C₁₂ chain hydrocarbon group optionally substituted by a group selected from Group E1;
Hydrazide compounds wherein in formula (1), R⁴ is a C₃-C₁₂ cyclic hydrocarbon group optionally substituted by a group selected from Group E2;
Hydrazide compounds wherein in formula (1), R⁴ is a 5- to 6-membered heterocyclic group optionally substituted by a group selected from Group E2;
Hydrazide compounds wherein in formula (1), R⁴ is an OR⁸ group and R⁸ is as defined above;
Hydrazide compounds wherein in formula (1), R⁴ is an N(R⁹)R¹⁰ group and R⁹ and R¹⁰ are as defined above; Hydrazide compounds wherein in formula (1), R⁵ is a hydrogen atom;
Hydrazide compounds wherein in formula (1), R⁵ is a C₁-C₁₂ chain hydrocarbon group optionally substituted by a group selected from Group E1;
Hydrazide compounds wherein in formula (1), R⁵ is a methyl group;
Hydrazide compounds wherein in formula (1), R⁵ is a C₂-C₆ alkoxycarbonyl group;
Hydrazide compounds wherein in formula (1), R⁵ is a C₂-C₆ alkylcarbonyl group;
Hydrazide compounds wherein in formula (1), R⁵ is an acetyl group;
Hydrazide compounds wherein in formula (1), R⁵ is a benzoyl group optionally substituted by a group selected from Group E2;
Hydrazide compounds wherein in formula (1), R⁵ is a benzoyl group;
Hydrazide compounds wherein in formula (1), R⁶ is a hydrogen atom;
Hydrazide compounds wherein in formula (1), R⁶ is a C₁-C₁₂ chain hydrocarbon group optionally substituted by a group selected from Group E1;
Hydrazide compounds wherein in formula (1), R⁶ is a methyl group;

Hydrazide compounds wherein in formula (1), G is a group shown by G-1, Y¹ is an oxygen atom, and R¹ is a trifluoromethyl group;
Hydrazide compounds wherein in formula (1), G is a group shown by G-1, Y¹ is an oxygen atom, R¹ is a trifluoromethyl group, and Q¹, Q², Q³, and Q⁴ are CH group;

Hydrazide compounds wherein in formula (1), G is a group shown by G-1, Y¹ is an oxygen atom, R¹ is a trifluoromethyl group, Q¹, Q³, and Q⁴ are CH group, Q² is a CR³ group, and R³ is as defined above;
Hydrazide compounds shown by the following formula (1-A) wherein in formula (1), G is a group shown by G-1, Y¹ is an oxygen atom, R¹ is a trifluoromethyl group, Q¹, Q³, and Q⁴ are CH group, Q² is a CR³ group, R³ is as defined above, m is 2, (R²)ₘ is a substituent at position 3 and position 5, and R² is respectively a chlorine atom; 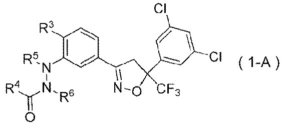 Hydrazide compounds wherein in formula (1-A), R³ is a hydrogen atom;
Hydrazide compounds wherein in formula (1-A), R³ is a methyl group;
Hydrazide compounds wherein in formula (1-A), R³ is a ethyl group;
Hydrazide compounds wherein in formula (1-A), R³ is a halogen atom;
Hydrazide compounds wherein in formula (1-A), R³ is a fluorine atom;
Hydrazide compounds wherein in formula (1-A), R³ is a chlorine atom;
Hydrazide compounds wherein in formula (1-A), R³ is a bromine atom;
Hydrazide compounds wherein in formula (1-A), R⁵ is a hydrogen atom;
Hydrazide compounds wherein in formula (1-A), R⁵ is a methyl group;
Hydrazide compounds wherein in formula (1-A), R⁶ is a hydrogen atom;
Hydrazide compounds wherein in formula (1-A), R⁶ is a methyl group;

Hydrazide compounds wherein in formula (1-A), R⁵ is a hydrogen atom and R⁶ is a hydrogen atom;
Hydrazide compounds wherein in formula (1-A), R⁵ is a hydrogen atom and R⁶ is a methyl group;
Hydrazide compounds wherein in formula (1-A), R⁵ is a methyl group and R⁶ is a hydrogen atom;
Hydrazide compounds wherein in formula (1-A), R⁵ is a methyl group and R⁶ is a methyl group;
Hydrazide compounds wherein in formula (1-A), R³ is a halogen atom and R⁵ is a hydrogen atom;
Hydrazide compounds wherein in formula (1-A), R³ is a halogen atom and R⁵ is a methyl group;
Hydrazide compounds wherein in formula (1-A), R³ is a halogen atom and R⁶ is a hydrogen atom;
Hydrazide compounds wherein in formula (1-A), R³ is a halogen atom and R⁶ is a methyl group;
Hydrazide compounds wherein in formula (1-A), R³ is a chlorine atom and R⁵ is a hydrogen atom;
Hydrazide compounds wherein in formula (1-A), R³ is a chlorine atom and R⁵ is a methyl group;
Hydrazide compounds wherein in formula (1-A), R³ is a chlorine atom and R⁶ is a hydrogen atom;
Hydrazide compounds wherein in formula (1-A), R³ is a chlorine atom and R⁶ is a methyl group;

Hydrazide compounds wherein in formula (1-A), R³ is a hydrogen atom, R⁵ is a hydrogen atom, and R⁶ is a hydrogen atom;
Hydrazide compounds wherein in formula (1-A), R³ is a methyl group, R⁵ is a hydrogen atom, and R⁶ is a hydrogen atom;
Hydrazide compounds wherein in formula (1-A), R³ is an ethyl group, R⁵ is a hydrogen atom, and R⁶ is a hydrogen atom;
Hydrazide compounds wherein in formula (1-A), R³ is a halogen atom, R⁵ is a hydrogen atom, and R⁶ is a hydrogen atom;
Hydrazide compounds wherein in formula (1-A), R³ is a fluorine atom, R⁵ is a hydrogen atom, and R⁶ is a hydrogen atom;
Hydrazide compounds wherein in formula (1-A), R³ is a chlorine atom, R⁵ is a hydrogen atom, and R⁶ is a hydrogen atom;
Hydrazide compounds wherein in formula (1-A), R³ is a bromine atom, R⁵ is a hydrogen atom, and R⁶ is a hydrogen atom;
Hydrazide compounds wherein in formula (1-A), R³ is a hydrogen atom, R⁵ is a methyl group, and R⁶ is a hydrogen atom;
Hydrazide compounds wherein in formula (1-A), R³ is a methyl group, R⁵ is a methyl group, and R⁶ is a hydrogen atom;
Hydrazide compounds wherein in formula (1-A), R³ is an ethyl group, R⁵ is a methyl group, and R⁶ is a hydrogen atom;
Hydrazide compounds wherein in formula (1-A), R³ is a halogen atom, R⁵ is a methyl group, and R⁶ is a hydrogen atom;
Hydrazide compounds wherein in formula (1-A), R³ is a fluorine atom, R⁵ is a methyl group, and R⁶ is a hydrogen atom;
Hydrazide compounds wherein in formula (1-A), R³ is a chlorine atom, R⁵ is a methyl group, and R⁶ is a hydrogen atom;
Hydrazide compounds wherein in formula (1-A), R³ is a bromine atom, R⁵ is a methyl group, and R⁶ is a hydrogen atom;

Hydrazide compounds wherein in formula (1-A), R³ is a hydrogen atom, R⁵ is a hydrogen atom, and R⁶ is a methyl group;
Hydrazide compounds wherein in formula (1-A), R³ is a methyl group, R⁵ is a hydrogen atom, and R⁶ is a methyl group;
Hydrazide compounds wherein in formula (1-A), R³ is an ethyl group, R⁵ is a hydrogen atom, and R⁶ is a methyl group;
Hydrazide compounds wherein in formula (1-A), R³ is a halogen atom, R⁵ is a hydrogen atom, and R⁶ is a methyl group;
Hydrazide compounds wherein in formula (1-A), R³ is a fluorine atom, R⁵ is a hydrogen atom, and R⁶ is a methyl group;
Hydrazide compounds wherein in formula (1-A), R³ is a chlorine atom, R⁵ is a hydrogen atom, and R⁶ is a methyl group;
Hydrazide compounds wherein in formula (1-A), R³ is a bromine atom, R⁵ is a hydrogen atom, and R⁶ is a methyl group;
Hydrazide compounds wherein in formula (1-A), R³ is a hydrogen atom, R⁵ is a methyl group, and R⁶ is a methyl group;
Hydrazide compounds wherein in formula (1-A), R³ is a methyl group, R⁵ is a methyl group, and R⁶ is a methyl group;
Hydrazide compounds wherein in formula (1-A), R³ is an ethyl group, R⁵ is a methyl group, and R⁶ is a methyl group;
Hydrazide compounds wherein in formula (1-A), R³ is a halogen atom, R⁵ is a methyl group, and R⁶ is a methyl group;
Hydrazide compounds wherein in formula (1-A), R³ is a fluorine atom, R⁵ is a methyl group, and R⁶ is a methyl group;
Hydrazide compounds wherein in formula (1-A), R³ is a chlorine atom, R⁵ is a methyl group, and R⁶ is a methyl group;
Hydrazide compounds wherein in formula (1-A), R³ is a bromine atom, R⁵ is a methyl group, and R⁶ is a methyl group;

Hydrazide compounds wherein in formula (1-A), R⁴ is a C₂-C₆ alkyl group, a C₁-C₆ haloalkyl group, a C₃-C₆ cycloalkyl group or a (C₁-C₆ alkoxy) C₁-C₆ alkyl group;
Hydrazide compounds wherein in formula (1-A), R⁴ is a C₂-C₆ alkyl group, a C₁-C₆ haloalkyl group, a C₃-C₆ cycloalkyl group or a (C₁-C₆ alkoxy) C₁-C₆ alkyl group, and R⁵ is a hydrogen atom;
Hydrazide compounds wherein in formula (1-A), R⁴ is a C₂-C₆ alkyl group, a C₁-C₆ haloalkyl group, a C₃-C₆ cycloalkyl group or a (C₁-C₆ alkoxy) C₁-C₆ alkyl group, and R⁵ is a methyl group;
Hydrazide compounds wherein in formula (1-A), R⁴ is a C₂-C₆ alkyl group, a C₁-C₆ haloalkyl group, a C₃-C₆ cycloalkyl group or a (C₁-C₆ alkoxy) C₁-C₆ alkyl group, and R⁶ is a hydrogen atom;
Hydrazide compounds wherein in formula (1-A), R⁴ is a C₂-C₆ alkyl group, a C₁-C₆ haloalkyl group, a C₃-C₆ cycloalkyl group or a (C₁-C₆ alkoxy) C₁-C₆ alkyl group, R⁵ is a hydrogen atom, and R⁶ is a hydrogen atom;
Hydrazide compounds wherein in formula (1-A), R⁴ is a C₂-C₆ alkyl group, a C₁-C₆ haloalkyl group, a C₃-C₆ cycloalkyl group or a (C₁-C₆ alkoxy) C₁-C₆ alkyl group, R⁵ is a methyl group, and R⁶ is a hydrogen atom;

Hydrazide compounds wherein in formula (1-A), R³ is a C₁-C₆ alkyl group, a halogen atom, or a hydrogen atom, and R⁴ is a C₂-C₆ alkyl group, a C₁-C₆ haloalkyl group, a C₃-C₆ cycloalkyl group or a (C₁-C₆ alkoxy) C₁-C₆ alkyl group; Hydrazide compounds wherein in formula (1-A), R³ is a C₁-C₆ alkyl group, a halogen atom, or a hydrogen atom, R⁴ is a C₂-C₆ alkyl group, a C₁-C₆ haloalkyl group, a C₃-C₆ cycloalkyl group or a (C₁-C₆ alkoxy) C₁-C₆ alkyl group, and R⁵ is a hydrogen atom;
Hydrazide compounds wherein in formula (1-A), R³ is a C₁-C₆ alkyl group, a halogen atom, or a hydrogen atom, R⁴ is a C₂-C₆ alkyl group, a C₁-C₆ haloalkyl group, a C₃-C₆ cycloalkyl group or a (C₁-C₆ alkoxy) C₁-C₆ alkyl group, and R⁵ is a methyl group;
Hydrazide compounds wherein in formula (1-A), R³ is a C₁-C₆ alkyl group, a halogen atom, or a hydrogen atom, R⁴ is a C₂-C₆ alkyl group, a C₁-C₆ haloalkyl group, a C₃-C₆ cycloalkyl group or a (C₁-C₆ alkoxy) C₁-C₆ alkyl group, and R⁶ is a hydrogen atom;
Hydrazide compounds wherein in formula (1-A), R³ is a C₁-C₆ alkyl group, a halogen atom, or a hydrogen atom, R⁴ is a C₂-C₆ alkyl group, a C₁-C₆ haloalkyl group, a C₃-C₆ cycloalkyl group or a (C₁-C₆ alkoxy) C₁-C₆ alkyl group, R⁵ is a hydrogen atom, and R⁶ is a hydrogen atom;
Hydrazide compounds wherein in formula (1-A), R³ is a C₁-C₆ alkyl group, a halogen atom, or a hydrogen atom, R⁴ is a C₂-C₆ alkyl group, a C₁-C₆ haloalkyl group, a C₃-C₆ cycloalkyl group or a (C₁-C₆ alkoxy) C₁-C₆ alkyl group, R⁵ is a methyl group, and R⁶ is a hydrogen atom;
Hydrazide compounds wherein in formula (1-A), R³ is a chlorine atom and R⁴ is a C₂-C₆ alkyl group, a C₁-C₆ haloalkyl group, a C₃-C₆ cycloalkyl group or a (C₁-C₆ alkoxy) C₁-C₆ alkyl group;
Hydrazide compounds wherein in formula (1-A), R³ is a chlorine atom, R⁴ is a C₂-C₆ alkyl group, a C₁-C₆ haloalkyl group, a C₃-C₆ cycloalkyl group or a (C₁-C₆ alkoxy) C₁-C₆ alkyl group, and R⁵ is a hydrogen atom;
Hydrazide compounds wherein in formula (1-A), R³ is a chlorine atom, R⁴ is a C₂-C₆ alkyl group, a C₁-C₆ haloalkyl group, a C₃-C₆ cycloalkyl group or a (C₁-C₆ alkoxy) C₁-C₆ alkyl group, and R⁵ is a methyl group;
Hydrazide compounds wherein in formula (1-A), R³ is a chlorine atom, R⁴ is a C₂-C₆ alkyl group, a C₁-C₆ haloalkyl group, a C₃-C₆ cycloalkyl group or a (C₁-C₆ alkoxy) C₁-C₆ alkyl group, and R⁶ is a hydrogen atom;
Hydrazide compounds wherein in formula (1-A), R³ is a chlorine atom, R⁴ is a C₂-C₆ alkyl group, a C₁-C₆ haloalkyl group, a C₃-C₆ cycloalkyl group or a (C₁-C₆ alkoxy) C₁-C₆ alkyl group, and R⁵ is a hydrogen atom, and R⁶ is a hydrogen atom;
Hydrazide compounds wherein in formula (1-A), R³ is a chlorine atom, R⁴ is a C₂-C₆ alkyl group, a C₁-C₆ haloalkyl group, a C₃-C₆ cycloalkyl group or a (C₁-C₆ alkoxy) C₁-C₆ alkyl group, and R⁵ is a methyl group, and R⁶ is a hydrogen atom;

Hydrazide compounds wherein in formula (1-A), R⁴ is a C₁-C₆ alkyl group;
Hydrazide compounds wherein in formula (1-A), R⁴ is a C₂-C₆ alkyl group;
Hydrazide compounds wherein in formula (1-A), R⁴ is a methyl group;
Hydrazide compounds wherein in formula (1-A), R⁴ is an ethyl group;
Hydrazide compounds wherein in formula (1-A), R⁴ is a propyl group;
Hydrazide compounds wherein in formula (1-A), R⁴ is an isopropyl group;
Hydrazide compounds wherein in formula (1-A), R⁴ is a butyl group;
Hydrazide compounds wherein in formula (1-A), R⁴ is a tert-butyl group;
Hydrazide compounds wherein in formula (1-A), R⁴ is a 2-methylpropyl group;
Hydrazide compounds wherein in formula (1-A), R⁴ is a pentyl group;

Hydrazide compounds wherein in formula (1-A), R³ is a halogen atom, and R⁴ is a C₂-C₆ alkyl group;
Hydrazide compounds wherein in formula (1-A), R³ is a halogen atom, R⁴ is a C₂-C₆ alkyl group, and R⁶ is a hydrogen atom;
Hydrazide compounds wherein in formula (1-A), R³ is a halogen atom, R⁴ is a C₂-C₆ alkyl group, R⁵ is a hydrogen atom, and R⁶ is a hydrogen atom;
Hydrazide compounds wherein in formula (1-A), R³ is a halogen atom, R⁴ is a C₂-C₆ alkyl group, R⁵ is a methyl group, and R⁶ is a hydrogen atom;
Hydrazide compounds wherein in formula (1-A), R³ is a chlorine atom and R⁴ is a C₂-C₆ alkyl group;
Hydrazide compounds wherein in formula (1-A), R³ is a chlorine atom, R⁴ is a C₂-C₆ alkyl group, and R⁶ is a hydrogen atom;
Hydrazide compounds wherein in formula (1-A), R³ is a chlorine atom, R⁴ is a C₂-C₆ alkyl group, R⁵ is a hydrogen atom, and R⁶ is a hydrogen atom;
Hydrazide compounds wherein in formula (1-A), R³ is a chlorine atom, R⁴ is a C₂-C₆ alkyl group, R⁵ is a methyl group, and R⁶ is a hydrogen atom;

Hydrazide compounds wherein in formula (1-A), R⁴ is a methyl group and R⁵ is a hydrogen atom;
Hydrazide compounds wherein in formula (1-A), R⁴ is a methyl group and R⁵ is a methyl group;
Hydrazide compounds wherein in formula (1-A), R⁴ is a methyl group and R⁶ is a hydrogen atom;
Hydrazide compounds wherein in formula (1-A), R⁴ is a methyl group and R⁶ is a methyl group;
Hydrazide compounds wherein in formula (1-A), R⁴ is a methyl group, R⁵ is a hydrogen atom, and R⁶ is a hydrogen atom;
Hydrazide compounds wherein in formula (1-A), R⁴ is a methyl group, R⁵ is a methyl group, and R⁶ is a hydrogen atom;
Hydrazide compounds wherein in formula (1-A), R⁴ is a methyl group, R⁵ is a hydrogen atom, and R⁶ is a methyl group;
Hydrazide compounds wherein in formula (1-A), R⁴ is a methyl group, R⁵ is a methyl group, and R⁶ is a methyl group;

Hydrazide compounds wherein in formula (1-A), R⁴ is an ethyl group and R⁵ is a hydrogen atom;
Hydrazide compounds wherein in formula (1-A), R⁴ is an ethyl group and R⁵ is a methyl group;
Hydrazide compounds wherein in formula (1-A), R⁴ is an ethyl group and R⁶ is a hydrogen atom;
Hydrazide compounds wherein in formula (1-A), R⁴ is an ethyl group and R⁶ is a methyl group;
Hydrazide compounds wherein in formula (1-A), R⁴ is an ethyl group, R⁵ is a hydrogen atom, and R⁶ is a hydrogen atom;
Hydrazide compounds wherein in formula (1-A), R⁴ is an ethyl group, R⁵ is a methyl group, and R⁶ is a hydrogen atom;
Hydrazide compounds wherein in formula (1-A), R⁴ is an ethyl group, R⁵ is a hydrogen atom, and R⁶ is a methyl group;
Hydrazide compounds wherein in formula (1-A), R⁴ is an ethyl group, R⁵ is a methyl group, and R⁶ is a methyl group;

Hydrazide compounds wherein in formula (1-A), R⁴ is a propyl group and R⁵ is a hydrogen atom;
Hydrazide compounds wherein in formula (1-A), R⁴ is a propyl group and R⁵ is a methyl group;
Hydrazide compounds wherein in formula (1-A), R⁴ is a propyl group and R⁶ is a hydrogen atom;
Hydrazide compounds wherein in formula (1-A), R⁴ is a propyl group and R⁶ is a methyl group;
Hydrazide compounds wherein in formula (1-A), R⁴ is a propyl group, R⁵ is a hydrogen atom, and R⁶ is a hydrogen atom;
Hydrazide compounds wherein in formula (1-A), R⁴ is a propyl group, R⁵ is a methyl group, and R⁶ is a hydrogen atom;
Hydrazide compounds wherein in formula (1-A), R⁴ is a propyl group, R⁵ is a hydrogen atom, and R⁶ is a methyl group;
Hydrazide compounds wherein in formula (1-A), R⁴ is a propyl group, R⁵ is a methyl group, and R⁶ is a methyl group;

Hydrazide compounds wherein in formula (1-A), R⁴ is an isopropyl group and R⁵ is a hydrogen atom;
Hydrazide compounds wherein in formula (1-A), R⁴ is an isopropyl group and R⁵ is a methyl group;
Hydrazide compounds wherein in formula (1-A), R⁴ is an isopropyl group and R⁶ is a hydrogen atom;
Hydrazide compounds wherein in formula (1-A), R⁴ is an isopropyl group and R⁶ is a methyl group;
Hydrazide compounds wherein in formula (1-A), R⁴ is an isopropyl group, R⁵ is a hydrogen atom, and R⁶ is a hydrogen atom;
Hydrazide compounds wherein in formula (1-A), R⁴ is an isopropyl group, R⁵ is a methyl group, and R⁶ is a hydrogen atom;
Hydrazide compounds wherein in formula (1-A), R⁴ is an isopropyl group, R⁵ is a hydrogen atom, and R⁶ is a methyl group;
Hydrazide compounds wherein in formula (1-A), R⁴ is an isopropyl group, R⁵ is a methyl group, and R⁶ is a methyl group;
Hydrazide compounds wherein in formula (1-A), R⁴ is a butyl group and R⁵ is a hydrogen atom;
Hydrazide compounds wherein in formula (1-A), R⁴ is a butyl group and R⁵ is a methyl group;
Hydrazide compounds wherein in formula (1-A), R⁴ is a butyl group and R⁶ is a hydrogen atom;
Hydrazide compounds wherein in formula (1-A), R⁴ is a butyl group and R⁶ is a methyl group;
Hydrazide compounds wherein in formula (1-A), R⁴ is a butyl group, R⁵ is a hydrogen atom, and R⁶ is a hydrogen atom;
Hydrazide compounds wherein in formula (1-A), R⁴ is a butyl group, R⁵ is a methyl group, and R⁶ is a hydrogen atom;
Hydrazide compounds wherein in formula (1-A), R⁴ is a butyl group, R⁵ is a hydrogen atom, and R⁶ is a methyl group;
Hydrazide compounds wherein in formula (1-A), R⁴ is a butyl group, R⁵ is a methyl group, and R⁶ is a methyl group;

Hydrazide compounds wherein in formula (1-A), R⁴ is a tert-butyl group and R⁵ is a hydrogen atom;
Hydrazide compounds wherein in formula (1-A), R⁴ is a tert-butyl group and R⁵ is a methyl group;
Hydrazide compounds wherein in formula (1-A), R⁴ is a tert-butyl group and R⁶ is a hydrogen atom;
Hydrazide compounds wherein in formula (1-A), R⁴ is a tert-butyl group and R⁶ is a methyl group;
Hydrazide compounds wherein in formula (1-A), R⁴ is a tert-butyl group, R⁵ is a hydrogen atom, and R⁶ is a hydrogen atom;
Hydrazide compounds wherein in formula (1-A), R⁴ is a tert-butyl group, R⁵ is a methyl group, and R⁶ is a hydrogen atom;
Hydrazide compounds wherein in formula (1-A), R⁴ is a tert-butyl group, R⁵ is a hydrogen atom, and R⁶ is a methyl group;
Hydrazide compounds wherein in formula (1-A), R⁴ is a tert-butyl group, R⁵ is a methyl group, and R⁶ is a methyl group;

Hydrazide compounds wherein in formula (1-A), R⁴ is a 2-methylpropyl group and R⁵ is a hydrogen atom;
Hydrazide compounds wherein in formula (1-A), R⁴ is a 2-methylpropyl group and R⁵ is a methyl group;
Hydrazide compounds wherein in formula (1-A), R⁴ is a 2-methylpropyl group and R⁶ is a hydrogen atom;
Hydrazide compounds wherein in formula (1-A), R⁴ is a 2-methylpropyl group and R⁶ is a methyl group;
Hydrazide compounds wherein in formula (1-A), R⁴ is a 2-methylpropyl group, R⁵ is a hydrogen atom, and R⁶ is a hydrogen atom;
Hydrazide compounds wherein in formula (1-A), R⁴ is a 2-methylpropyl group, R⁵ is a methyl group, and R⁶ is a hydrogen atom;
Hydrazide compounds wherein in formula (1-A), R⁴ is a 2-methylpropyl group, R⁵ is a hydrogen atom, and R⁶ is a methyl group;
Hydrazide compounds wherein in formula (1-A), R⁴ is a 2-methylpropyl group, R⁵ is a methyl group, and R⁶ is a methyl group;

Hydrazide compounds wherein in formula (1-A), R⁴ is a pentyl group and R⁵ is a hydrogen atom;
Hydrazide compounds wherein in formula (1-A), R⁴ is a pentyl group and R⁵ is a methyl group;
Hydrazide compounds wherein in formula (1-A), R⁴ is a pentyl group and R⁶ is a hydrogen atom;
Hydrazide compounds wherein in formula (1-A), R⁴ is a pentyl group and R⁶ is a methyl group;
Hydrazide compounds wherein in formula (1-A), R⁴ is a pentyl group, R⁵ is a hydrogen atom, and R⁶ is a hydrogen atom;
Hydrazide compounds wherein in formula (1-A), R⁴ is a pentyl group, R⁵ is a methyl group, and R⁶ is a hydrogen atom;
Hydrazide compounds wherein in formula (1-A), R⁴ is a pentyl group, R⁵ is a hydrogen atom, and R⁶ is a methyl group;
Hydrazide compounds wherein in formula (1-A), R⁴ is a pentyl group, R⁵ is a methyl group, and R⁶ is a methyl group;

Hydrazide compounds wherein in formula (1-A), R⁴ is a C₁-C₆ haloalkyl group;
Hydrazide compounds wherein in formula (1-A), R⁴ is a C₁-C₆ fluoroalkyl group;
Hydrazide compounds wherein in formula (1-A), R⁴ is a 2,2,2-trifluoroethyl group;
Hydrazide compounds wherein in formula (1-A), R⁴ is a 3,3,3-trifluoropropyl group;
Hydrazide compounds wherein in formula (1-A), R⁴ is a 4,4,4-trifluorobutyl group;
Hydrazide compounds wherein in formula (1-A), R³ is a halogen atom and R⁴ is a C₁-C₆ fluoroalkyl group;
Hydrazide compounds wherein in formula (1-A), R³ is a halogen atom and R⁴ is a 2,2,2-trifluoroethyl group
Hydrazide compounds wherein in formula (1-A), R³ is a halogen atom and R⁴ is a 3,3,3-trifluoropropyl group;
Hydrazide compounds wherein in formula (1-A), R³ is a halogen atom and R⁴ is a 4,4,4-trifluorobutyl group;

Hydrazide compounds wherein in formula (1-A), R³ is a halogen atom, R⁴ is a C₁-C₆ fluoroalkyl group, and R⁵ is a hydrogen atom;
Hydrazide compounds wherein in formula (1-A), R³ is a halogen atom, R⁴ is a C₁-C₆ fluoroalkyl group, and R⁵ is a methyl group;
Hydrazide compounds wherein in formula (1-A), R³ is a halogen atom, R⁴ is a C₁-C₆ fluoroalkyl group, and R⁶ is a hydrogen atom;
Hydrazide compounds wherein in formula (1-A), R³ is a halogen atom, R⁴ is a C₁-C₆ fluoroalkyl group, and R⁶ is a methyl group;
Hydrazide compounds wherein in formula (1-A), R³ is a halogen atom, R⁴ is a C₁-C₆ fluoroalkyl group, R⁵ is a hydrogen atom, and R⁶ is a hydrogen atom;
Hydrazide compounds wherein in formula (1-A), R³ is a halogen atom, R⁴ is a C₁-C₆ fluoroalkyl group, R⁵ is a methyl group, and R⁶ is a hydrogen atom;

Hydrazide compounds wherein in formula (1-A), R³ is a chlorine atom and R⁴ is a C₁-C₆ fluoroalkyl group;
Hydrazide compounds wherein in formula (1-A), R³ is a chlorine atom and R⁴ is a 2,2,2-trifluoroethyl group;
Hydrazide compounds wherein in formula (1-A), R³ is a chlorine atom and R⁴ is a 3,3,3-trifluoropropyl group;
Hydrazide compounds wherein in formula (1-A), R³ is a chlorine atom and R⁴ is a 4,4,4-trifluorobutyl group;
Hydrazide compounds wherein in formula (1-A), R³ is a chlorine atom, R⁴ is a C₁-C₆ fluoroalkyl group, and R⁵ is a hydrogen atom;
Hydrazide compounds wherein in formula (1-A), R³ is a chlorine atom, R⁴ is a C₁-C₆ fluoroalkyl group, and R⁵ is a methyl group;
Hydrazide compounds wherein in formula (1-A), R³ is a chlorine atom, R⁴ is a C₁-C₆ fluoroalkyl group, and R⁶ is a hydrogen atom;
Hydrazide compounds wherein in formula (1-A), R³ is a chlorine atom, R⁴ is a C₁-C₆ fluoroalkyl group, and R⁶ is a methyl group;
Hydrazide compounds wherein in formula (1-A), R³ is a chlorine atom, R⁴ is a C₁-C₆ fluoroalkyl group, R⁵ is a hydrogen atom, and R⁶ is a hydrogen atom;
Hydrazide compounds wherein in formula (1-A), R³ is a chlorine atom, R⁴ is a C₁-C₆ fluoroalkyl group, R⁵ is a methyl group, and R⁶ is a hydrogen atom;

Hydrazide compounds wherein in formula (1-A), R⁴ is a 2,2,2-trifluoroethyl group and R⁵ is a hydrogen atom;
Hydrazide compounds wherein in formula (1-A), R⁴ is a 2,2,2-trifluoroethyl group and R⁵ is a methyl group;
Hydrazide compounds wherein in formula (1-A), R⁴ is a 2,2,2-trifluoroethyl group and R⁶ is a hydrogen atom;
Hydrazide compounds wherein in formula (1-A), R⁴ is a 2,2,2-trifluoroethyl group and R⁶ is a methyl group;
Hydrazide compounds wherein in formula (1-A), R⁴ is a 2,2,2-trifluoroethyl group, R⁵ is a hydrogen atom, and R⁶ is a hydrogen atom;
Hydrazide compounds wherein in formula (1-A), R⁴ is a 2,2,2-trifluoroethyl group, R⁵ is a methyl group, and R⁶ is a hydrogen atom;
Hydrazide compounds wherein in formula (1-A), R⁴ is a 2,2,2-trifluoroethyl group, R⁵ is a hydrogen atom, and R⁶ is a methyl group;
Hydrazide compounds wherein in formula (1-A), R⁴ is a 2,2,2-trifluoroethyl group, R⁵ is a methyl group, and R⁶ is a methyl group;

Hydrazide compounds wherein in formula (1-A), R⁴ is a 3,3,3-trifluoropropyl group and R⁵ is a hydrogen atom;
Hydrazide compounds wherein in formula (1-A), R⁴ is a 3,3,3-trifluoropropyl group and R⁵ is a methyl group;
Hydrazide compounds wherein in formula (1-A), R⁴ is a 3,3,3-trifluoropropyl group and R⁶ is a hydrogen atom;
Hydrazide compounds wherein in formula (1-A), R⁴ is a 3,3,3-trifluoropropyl group and R⁶ is a methyl group;
Hydrazide compounds wherein in formula (1-A), R⁴ is a 3,3,3-trifluoropropyl group, R⁵ is a hydrogen atom, and R⁶ is a hydrogen atom;
Hydrazide compounds wherein in formula (1-A), R⁴ is a 3,3,3-trifluoropropyl group, R⁵ is a methyl group, and R⁶ is a hydrogen atom;
Hydrazide compounds wherein in formula (1-A), R⁴ is a 3,3,3-trifluoropropyl group, R⁵ is a hydrogen atom, and R⁶ is a methyl group;
Hydrazide compounds wherein in formula (1-A), R⁴ is a 3,3,3-trifluoropropyl group, R⁵ is a methyl group, and R⁶ is a methyl group;

Hydrazide compounds wherein in formula (1-A), R⁴ is a 4,4,4-trifluorobutyl group and R⁵ is a hydrogen atom;
Hydrazide compounds wherein in formula (1-A), R⁴ is a 4,4,4-trifluorobutyl group and R⁵ is a methyl group;
Hydrazide compounds wherein in formula (1-A), R⁴ is a 4,4,4-trifluorobutyl group and R⁶ is a hydrogen atom;
Hydrazide compounds wherein in formula (1-A), R⁴ is a 4,4,4-trifluorobutyl group and R⁶ is a methyl group;
Hydrazide compounds wherein in formula (1-A), R⁴ is a 4,4,4-trifluorobutyl group, R⁵ is a hydrogen atom, and R⁶ is a hydrogen atom;
Hydrazide compounds wherein in formula (1-A), R⁴ is a 4,4,4-trifluorobutyl group, R⁵ is a methyl group, and R⁶ is a hydrogen atom;
Hydrazide compounds wherein in formula (1-A), R⁴ is a 4,4,4-trifluorobutyl group, R⁵ is a hydrogen atom, and R⁶ is a methyl group;
Hydrazide compounds wherein in formula (1-A), R⁴ is a 4,4,4-trifluorobutyl group, R⁵ is a methyl group, and R⁶ is a methyl group;

Hydrazide compounds wherein in formula (1-A), R⁴ is a C₃-C₆ cycloalkyl group;
Hydrazide compounds wherein in formula (1-A), R⁴ is a cyclopropyl group;
Hydrazide compounds wherein in formula (1-A), R⁴ is a cyclobutyl group;
Hydrazide compounds wherein in formula (1-A), R⁴ is a cyclopentyl group;
Hydrazide compounds wherein in formula (1-A), R⁴ is a cyclohexyl group;

Hydrazide compounds wherein in formula (1-A), R³ is a halogen atom and R⁴ is a cyclopropyl group;
Hydrazide compounds wherein in formula (1-A), R³ is a halogen atom, R⁴ is a cyclopropyl group, and R⁶ is a hydrogen atom;
Hydrazide compounds wherein in formula (1-A), R³ is a halogen atom and R⁴ is a cyclobutyl group;
Hydrazide compounds wherein in formula (1-A), R³ is a halogen atom, R⁴ is a cyclobutyl group, and R⁶ is a hydrogen atom;
Hydrazide compounds wherein in formula (1-A), R³ is a halogen atom and R⁴ is a cyclopentyl group;
Hydrazide compounds wherein in formula (1-A), R³ is a halogen atom, R⁴ is a cyclopentyl group, and R⁶ is a hydrogen atom;
Hydrazide compounds wherein in formula (1-A), R³ is a halogen atom and R⁴ is a cyclohexyl group;
Hydrazide compounds wherein in formula (1-A), R³ is a halogen atom, R⁴ is a cyclohexyl group, and R⁶ is a hydrogen atom;

Hydrazide compounds wherein in formula (1-A), R³ is a chlorine atom and R⁴ is a cyclopropyl group;
Hydrazide compounds wherein in formula (1-A), R³ is a chlorine atom, R⁴ is a cyclopropyl group, and R⁶ is a hydrogen atom;
Hydrazide compounds wherein in formula (1-A), R³ is a chlorine atom and R⁴ is a cyclobutyl group;
Hydrazide compounds wherein in formula (1-A), R³ is a chlorine atom, R⁴ is a cyclobutyl group, and R⁶ is a hydrogen atom;
Hydrazide compounds wherein in formula (1-A), R³ is a chlorine atom and R⁴ is a cyclopentyl group;
Hydrazide compounds wherein in formula (1-A), R³ is a chlorine atom, R⁴ is a cyclopentyl group, and R⁶ is a hydrogen atom;
Hydrazide compounds wherein in formula (1-A), R³ is a chlorine atom and R⁴ is a cyclohexyl group;
Hydrazide compounds wherein in formula (1-A), R³ is a chlorine atom, R⁴ is a cyclohexyl group, and R⁶ is a hydrogen atom;

Hydrazide compounds wherein in formula (1-A), R⁴ is a cyclopropyl group and R⁵ is a hydrogen atom;
Hydrazide compounds wherein in formula (1-A), R⁴ is a cyclopropyl group and R⁵ is a methyl group;
Hydrazide compounds wherein in formula (1-A), R⁴ is a cyclopropyl group and R⁶ is a hydrogen atom;
Hydrazide compounds wherein in formula (1-A), R⁴ is a cyclopropyl group and R⁶ is a methyl group;
Hydrazide compounds wherein in formula (1-A), R⁴ is a cyclopropyl group, R⁵ is a hydrogen atom, and R⁶ is a hydrogen atom;
Hydrazide compounds wherein in formula (1-A), R⁴ is a cyclopropyl group, R⁵ is a methyl group, and R⁶ is a hydrogen atom;
Hydrazide compounds wherein in formula (1-A), R⁴ is a cyclopropyl group, R⁵ is a hydrogen atom, and R⁶ is a methyl group;
Hydrazide compounds wherein in formula (1-A), R⁴ is a cyclopropyl group, R⁵ is a methyl group, and R⁶ is a methyl group;

Hydrazide compounds wherein in formula (1-A), R⁴ is a cyclobutyl group and R⁵ is a hydrogen atom;
Hydrazide compounds wherein in formula (1-A), R⁴ is a cyclobutyl group and R⁵ is a methyl group;
Hydrazide compounds wherein in formula (1-A), R⁴ is a cyclobutyl group and R⁶ is a hydrogen atom;
Hydrazide compounds wherein in formula (1-A), R⁴ is a cyclobutyl group and R⁶ is a methyl group;
Hydrazide compounds wherein in formula (1-A), R⁴ is a cyclobutyl group, R⁵ is a hydrogen atom, and R⁶ is a hydrogen atom;
Hydrazide compounds wherein in formula (1-A), R⁴ is a cyclobutyl group, R⁵ is a methyl group, and R⁶ is a hydrogen atom;
Hydrazide compounds wherein in formula (1-A), R⁴ is a cyclobutyl group, R⁵ is a hydrogen atom, and R⁶ is a methyl group;
Hydrazide compounds wherein in formula (1-A), R⁴ is a cyclobutyl group, R⁵ is a methyl group, and R⁶ is a methyl group;

Hydrazide compounds wherein in formula (1-A), R⁴ is a cyclopentyl group and R⁵ is a hydrogen atom;
Hydrazide compounds wherein in formula (1-A), R⁴ is a cyclopentyl group and R⁵ is a methyl group;
Hydrazide compounds wherein in formula (1-A), R⁴ is a cyclopentyl group and R⁶ is a hydrogen atom;
Hydrazide compounds wherein in formula (1-A), R⁴ is a cyclopentyl group and R⁶ is a methyl group;
Hydrazide compounds wherein in formula (1-A), R⁴ is a cyclopentyl group, R⁵ is a hydrogen atom, and R⁶ is a hydrogen atom;
Hydrazide compounds wherein in formula (1-A), R⁴ is a cyclopentyl group, R⁵ is a methyl group, and R⁶ is a hydrogen atom;
Hydrazide compounds wherein in formula (1-A), R⁴ is a cyclopentyl group, R⁵ is a hydrogen atom, and R⁶ is a methyl group;
Hydrazide compounds wherein in formula (1-A), R⁴ is a cyclopentyl group, R⁵ is a methyl group, and R⁶ is a methyl group;

Hydrazide compounds wherein in formula (1-A), R⁴ is a cyclohexyl group and R⁵ is a hydrogen atom;
Hydrazide compounds wherein in formula (1-A), R⁴ is a cyclohexyl group and R⁵ is a methyl group;
Hydrazide compounds wherein in formula (1-A), R⁴ is a cyclohexyl group and R⁶ is a hydrogen atom;
Hydrazide compounds wherein in formula (1-A), R⁴ is a cyclohexyl group and R⁶ is a methyl group;
Hydrazide compounds wherein in formula (1-A), R⁴ is a cyclohexyl group, R⁵ is a hydrogen atom, and R⁶ is a hydrogen atom;
Hydrazide compounds wherein in formula (1-A), R⁴ is a cyclohexyl group, R⁵ is a methyl group, and R⁶ is a hydrogen atom;
Hydrazide compounds wherein in formula (1-A), R⁴ is a cyclohexyl group, R⁵ is a hydrogen atom, and R⁶ is a methyl group;
Hydrazide compounds wherein in formula (1-A), R⁴ is a cyclohexyl group, R⁵ is a methyl group, and R⁶ is a methyl group;

Hydrazide compounds wherein in formula (1-A), R⁴ is a (C₁-C₆ alkoxy)C₁-C₆ alkyl group;
Hydrazide compounds wherein in formula (1-A), R⁴ is a (C₁-C₆ alkoxy) methyl group;
Hydrazide compounds wherein in formula (1-A), R⁴ is a methoxymethyl group;
Hydrazide compounds wherein in formula (1-A), R⁴ is a ethoxymethyl group;

Hydrazide compounds wherein in formula (1-A), R⁴ is a (C₁-C₆ alkoxy) methyl group and R⁵ is a hydrogen atom;
Hydrazide compounds wherein in formula (1-A), R⁴ is a (C₁-C₆ alkoxy) methyl group and R⁵ is a methyl group;
Hydrazide compounds wherein in formula (1-A), R⁴ is a (C₁-C₆ alkoxy) methyl group and R⁶ is a hydrogen atom;
Hydrazide compounds wherein in formula (1-A), R⁴ is a (C₁-C₆ alkoxy) methyl group and R⁶ is a methyl group;
Hydrazide compounds wherein in formula (1-A), R⁴ is a (C₁-C₆ alkoxy) methyl group, R⁵ is a hydrogen atom, and R⁶ is a hydrogen atom;
Hydrazide compounds wherein in formula (1-A), R⁴ is a (C₁-C₆ alkoxy) methyl group, R⁵ is a methyl group, and R⁶ is a hydrogen atom;
Hydrazide compounds wherein in formula (1-A), R⁴ is a (C₁-C₆ alkoxy) methyl group, R⁵ is a hydrogen atom, and R⁶ is a methyl group;
Hydrazide compounds wherein in formula (1-A), R⁴ is a (C₁-C₆ alkoxy) methyl group, R⁵ is a methyl group, and R⁶ is a methyl group;

Hydrazide compounds wherein in formula (1-A), R⁴ is a methoxymethyl group and R⁵ is a hydrogen atom;
Hydrazide compounds wherein in formula (1-A), R⁴ is a methoxymethyl group and R⁵ is a methyl group;
Hydrazide compounds wherein in formula (1-A), R⁴ is a methoxymethyl group and R⁶ is a hydrogen atom;
Hydrazide compounds wherein in formula (1-A), R⁴ is a methoxymethyl group and R⁶ is a methyl group;
Hydrazide compounds wherein in formula (1-A), R⁴ is a methoxymethyl group, R⁵ is a hydrogen atom, and R⁶ is a hydrogen atom;
Hydrazide compounds wherein in formula (1-A), R⁴ is a methoxymethyl group, R⁵ is a methyl group, and R⁶ is a hydrogen atom;
Hydrazide compounds wherein in formula (1-A), R⁴ is a methoxymethyl group, R⁵ is a hydrogen atom, and R⁶ is a methyl group;
Hydrazide compounds wherein in formula (1-A), R⁴ is a methoxymethyl group, R⁵ is a methyl group, and R⁶ is a methyl group;

Hydrazide compounds wherein in formula (1-A), R³ is a halogen atom and R⁴ is a (C₁-C₆ alkoxy) methyl group;
Hydrazide compounds wherein in formula (1-A), R³ is a halogen atom, R⁴ is a (C₁-C₆ alkoxy) methyl group, and R⁵ is a hydrogen atom;
Hydrazide compounds wherein in formula (1-A), R³ is a halogen atom, R⁴ is a (C₁-C₆ alkoxy) methyl group, and R⁵ is a methyl group;
Hydrazide compounds wherein in formula (1-A), R³ is a halogen atom, R⁴ is a (C₁-C₆ alkoxy) methyl group, and R⁶ is a hydrogen atom;
Hydrazide compounds wherein in formula (1-A), R³ is a halogen atom, R⁴ is a (C₁-C₆ alkoxy) methyl group, and R⁶ is a methyl group;
Hydrazide compounds wherein in formula (1-A), R³ is a halogen atom, R⁴ is a (C₁-C₆ alkoxy) methyl group, R⁵ is a hydrogen atom, and R⁶ is a hydrogen atom;
Hydrazide compounds wherein in formula (1-A), R³ is a halogen atom, R⁴ is a (C₁-C₆ alkoxy) methyl group, R⁵ is a methyl group, and R⁶ is a hydrogen atom;
Hydrazide compounds wherein in formula (1-A), R³ is a halogen atom, R⁴ is a (C₁-C₆ alkoxy) methyl group, R⁵ is a hydrogen atom, and R⁶ is a methyl group;
Hydrazide compounds wherein in formula (1-A), R³ is a halogen atom, R⁴ is a (C₁-C₆ alkoxy) methyl group, R⁵ is a methyl group, and R⁶ is a methyl group;

Hydrazide compounds wherein in formula (1-A), R³ is a chlorine atom and R⁴ is a (C₁-C₆ alkoxy) methyl group;
Hydrazide compounds wherein in formula (1-A), R³ is a chlorine atom, R⁴ is a (C₁-C₆ alkoxy) methyl group, and R⁵ is a hydrogen atom;
Hydrazide compounds wherein in formula (1-A), R³ is a chlorine atom, R⁴ is a (C₁-C₆ alkoxy) methyl group, and R⁵ is a methyl group;
Hydrazide compounds wherein in formula (1-A), R³ is a chlorine atom, R⁴ is a (C₁-C₆ alkoxy) methyl group, and R⁶ is a hydrogen atom;
Hydrazide compounds wherein in formula (1-A), R³ is a chlorine atom, R⁴ is a (C₁-C₆ alkoxy) methyl group, and R⁶ is a methyl group;
Hydrazide compounds wherein in formula (1-A), R³ is a chlorine atom, R⁴ is a (C₁-C₆ alkoxy) methyl group, R⁵ is a hydrogen atom, and R⁶ is a hydrogen atom;
Hydrazide compounds wherein in formula (1-A), R³ is a chlorine atom, R⁴ is a (C₁-C₆ alkoxy) methyl group, R⁵ is a methyl group, and R⁶ is a hydrogen atom;
Hydrazide compounds wherein in formula (1-A), R³ is a chlorine atom, R⁴ is a (C₁-C₆ alkoxy) methyl group, R⁵ is a hydrogen atom, and R⁶ is a methyl group;
Hydrazide compounds wherein in formula (1-A), R³ is a chlorine atom, R⁴ is a (C₁-C₆ alkoxy) methyl group, R⁵ is a methyl group, and R⁶ is a methyl group;

The following can be given as examples of embodiments of the pest control composition of the present invention.
Compositions comprising one hydrazide compound selected from the group consisting of hydrazide compounds (1)-(63) shown in the production examples discussed below and pyriproxyfen;
Compositions comprising one hydrazide compound selected from the group consisting of hydrazide compounds (1)-(63) and pyriproxyfen in a weight ratio of hydrazide compound: pyriproxyfen = 5000:1-1:5000, more preferably 5000:1-1:1.

The production of these hydrazide compounds will be explained below.
A compound shown by the formula (α) is sometimes expressed as "compound (α)" below.

### Production process 1:

The hydrazide compound can be produced by reacting compound (2) and compound (3). 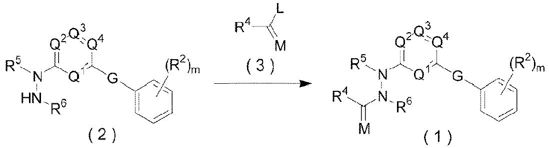 [In the formula, Q¹, Q², Q³, Q⁴, R², R⁴, R⁵, R⁶, G, M, and m have the same meanings as above and L is a hydroxyl group or chlorine atom.]
The reaction is usually carried out in a solvent.
Examples of the solvent used in the reaction include tetrahydrofuran, diethyl ether, tert-butyl methyl ether, ethylene glycol dimethyl ether, 1,4-dioxane, and other such ethers; N,N-dimethylformamide and other such acid amides; acetonitrile and other such nitriles; toluene, xylene, and other such aromatic hydrocarbons; ethyl acetate and other such esters; dimethyl sulfoxide and other such sulfoxides; sulfolane; 1,2-dichloroethane, chloroform, chlorobenzene, and other such halogenated hydrocarbons; and mixtures of these.
When L is a chlorine atom, the reaction is usually carried out in the presence of a base.
Examples of the base used in the reaction include sodium hydride and other such alkali metal hydrides; potassium carbonate and other such carbonates; potassium tert-butoxide and other such alkali metal alkoxides; and triethylamine, pyridine, and other such organic amines.
When L is a hydroxyl group, the reaction is carried out in the presence of a condensing agent.
Examples of the condensing agent used in the reaction include dicyclohexylcarbodiimide and 1-(3-dimethylaminopropyl)-3-ethylcarbodiimide hydrochloride.
The amounts of reagents used in the reaction are usually a proportion of 1-10 mol of compound (3) and 1-10 mol of base or condensing agent per mol of compound (2).
The reaction temperature of this reaction is usually in the 0-100°C range, and the reaction time is usually in the 0.5-24 hour range.

After the reaction has been completed, the hydrazide compound can be isolated by extracting the reaction mixture with an organic solvent and conducting drying, concentration, and other such post-treatment procedures. The isolated hydrazide compound can also be refined further by chromatography, recrystallization, and the like.

### Production process 2:

The hydrazide compound can also be produced by reacting compound (4) and compound (5).

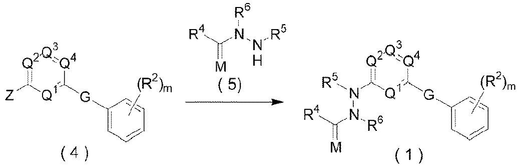

[In the formula, Q², Q², Q³, Q⁴, R², R⁴, R⁵, R⁶, G, M, and m have the same meanings as above and Z is a fluorine atom, chlorine atom, bromine atom, iodine atom, methanesulfonyloxy group, p-toluenesulfonyloxy group, trifluoromethanesulfonyloxy group, or other such elimination group.
The reaction is usually carried out in a solvent.
Examples of the solvent used in the reaction include tetrahydrofuran, diethyl ether, tert-butyl methyl ether, ethylene glycol dimethyl ether, 1,4-dioxane, and other such ethers; N,N-dimethylformamide and other such acid amides; acetonitrile and other such nitriles; toluene, xylene, and other such aromatic hydrocarbons; ethyl acetate and other such esters; dimethyl sulfoxide and other such sulfoxides; sulfolane; 1,2-dichloroethane, chloroform, chlorobenzene, and other such halogenated hydrocarbons; and mixtures of these.
The reaction is carried out in the presence of a base if necessary.
Examples of the base used in the reaction include sodium hydride and other such alkali metal hydrides; potassium carbonate and other such carbonates; potassium tert-butoxide and other such alkali metal alkoxides; and triethylamine, pyridine, and other such organic amines.
The amounts of reagents used in the reaction are usually a proportion of 1-5 mol of compound shown by formula (5) and 1-5 mol of base per mol of compound shown by formula (4).
The reaction temperature of this reaction is usually in the 0-100°C range, and the reaction time is usually in the 0.1-24 hour range.
After the reaction has been completed, the hydrazide compound can be isolated by extracting the reaction mixture with an organic solvent and conducting drying, concentration, and other such post-treatment procedures. The isolated hydrazide compound can also be refined further by chromatography, recrystallization, and the like.
This reaction can also be carried out by a coupling reaction using a common transition metal catalyst described in the literature, for example, in accordance with the reaction conditions described in Org. Lett., 3, 3803-3805 (2001).

### Production process 3:

Compounds (1-1), which are hydrazide compounds in which R⁵ is a hydrogen atom, can also be produced by reacting a compound (1-2), which is a hydrazide compound in which R⁵ is R⁵⁻², with an acid or base. 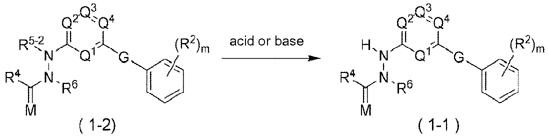 [In the formula, Q¹, Q², Q³, Q⁴, R², R⁴, R⁶, G, M, and m have the same meanings as above and R⁵⁻² represents a benzoyl group optionally substituted by a group selected from Group E2, C₂-C₆ alkylcarbonyl group, or C₂-C₆ alkoxycarbonyl group.]
The reaction can also be carried out using a solvent if necessary.
Examples of the solvent include water, tetrahydrofuran, diethyl ether, tert-butyl methyl ether, ethylene glycol dimethyl ether, 1,4-dioxane, and other such ethers; N,N-dimethylformamide and other such acid amides; acetonitrile and other such nitriles; toluene, xylene, and other such aromatic hydrocarbons; ethyl acetate and other such esters; dimethyl sulfoxide and other such sulfoxides; sulfolane; 1,2-dichloroethane, chloroform, chlorobenzene, and other such halogenated hydrocarbons; methanol, ethanol, n-propanol, and other such alcohols; and mixtures of these.
Examples of the acid include acetic acid, trifluoroacetic acid, and other such organic acids and hydrochloric acid, hydrobromic acid, sulfuric acid, and other such inorganic acids.
Examples of the base include sodium hydride and other such alkali metal hydrides; potassium carbonate and other such carbonates; potassium tert-butoxide and other such alkali metal alkoxides; and triethylamine, pyridine, and other such organic amines.
The above acid is usually used in a quantity of 1-100 mol per mol of compound (1-2).
The above base is usually used in a quantity of 1-100 mol per mol of compound (1-2).
The reaction temperature is usually in the 0-100°C range, and the reaction time is usually in the 0.1-24 hour range. After the reaction has been completed, the hydrazide compound can be isolated by extracting the reaction mixture with an organic solvent and conducting drying, concentration, and other such post-treatment procedures. The isolated hydrazide compound can also be refined further by chromatography, recrystallization, and the like.

### Production process 4:

Compounds (1-3), which are hydrazide compounds in which R⁴ is an N(R⁹)R¹⁰ group and R¹⁰ is a hydrogen atom, can also be produced by reacting compound (2) and compound (19). 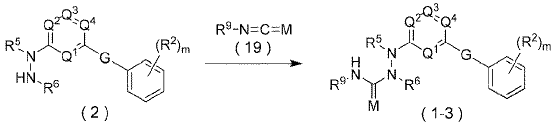 [In the formula, Q¹, Q², Q³, Q⁴, R², R⁵, R⁶, R⁹, G, M, and m have the same meanings as above.]
The reaction is usually carried out in a solvent. It can also be carried out in the presence of a base if necessary.
Examples of the solvent include tetrahydrofuran, diethyl ether, tert-butyl methyl ether, ethylene glycol dimethyl ether, 1,4-dioxane, and other such ethers; N,N-dimethylformamide and other such acid amides; acetonitrile and other such nitriles; toluene, xylene, and other such aromatic hydrocarbons; ethyl acetate and other such esters; dimethyl sulfoxide and other such sulfoxides; sulfolane; 1,2-dichloroethane, chloroform, chlorobenzene, and other such halogenated hydrocarbons; and mixtures of these.
Examples of the above base include potassium carbonate, sodium carbonate, and other such carbonates and triethylamine, pyridine, 4-(dimethylamino)pyridine, imidazole, 1,8-diazabicyclo[5,4,0]-7-undecene, and other such organic amines.
In the above reaction, compound (19) is usually used in a quantity of 1-5 mol per mol of compound (2). When it is necessary to add the above base, it is usually used in a quantity of 1-5 mol per mol of compound (2).
The reaction temperature is usually in the 0-100°C range, and the reaction time is usually in the 0.1-24 hour range.
After the reaction has been completed, the hydrazide compound can be isolated by extracting the reaction mixture with an organic solvent and conducting drying, concentration, and other such post-treatment procedures. The isolated hydrazide compound can also be refined further by chromatography, recrystallization, and the like.

### Production process 5:

Compounds (1-4), which are hydrazide compounds in which R⁴ is R⁴⁻¹ and M is an oxygen atom, can be produced by reacting compound (2) and compound (21). 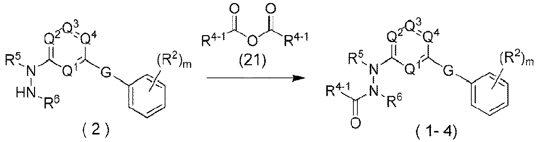 [In the formula, Q¹, Q², Q³, Q⁴, R², R⁵, R⁶, G, and m have the same meanings as above, R⁴⁻¹ represents a C₁-C₁₂ chain hydrocarbon group optionally substituted by a group selected from Group E1, C₃-C₁₂ cyclic hydrocarbon group optionally substituted by a group selected from Group E2, 5- to 6-membered heterocyclic group optionally substituted by a group selected from Group E2, or OR⁸ group, and R⁸ has the same meaning as above.]
The reaction can also be carried out using a solvent if necessary.
Examples of the solvent include tetrahydrofuran, diethyl ether, tert-butyl methyl ether, ethylene glycol dimethyl ether, 1,4-dioxane, and other such ethers; N,N-dimethylformamide and other such acid amides; acetonitrile and other such nitriles; toluene, xylene, and other such aromatic hydrocarbons; ethyl acetate and other such esters; dimethyl sulfoxide and other such sulfoxides; sulfolane; 1,2-dichloroethane, chloroform, chlorobenzene, and other such halogenated hydrocarbons; and mixtures of these.
The reaction can also be carried out in the presence of a base if necessary.
Examples of the base include sodium hydride and other such alkali metal hydrides; potassium carbonate and other such carbonates; potassium tert-butoxide and other such alkali metal alkoxides; and triethylamine, pyridine, 4-(dimethylamino)pyridine, imidazole, and other such organic bases.
In the above reaction, compound (21) is usually used in a quantity of 1-10 mol per mol of compound (2) and can also be used as a solvent if necessary. When it is necessary to add the above base, it is usually used in a quantity of 1-10 mol per mol of compound (2).
The reaction temperature is usually in the 0-100°C range, and the reaction time is usually in the 0.5-24 hour range. After the reaction has been completed, compound (1-4)can also be isolated by extracting the reaction mixture with an organic solvent and conducting drying, concentration, and other such post-treatment procedures. The isolated compound (1-4) can also be refined further by chromatography, recrystallization, and the like.

Methods of producing intermediates used in the production of these hydrazide compounds will be explained next.

### Reference production process 1:

Compounds (2-1), which are compounds (2) in which R⁶ is a hydrogen atom, can be produced by reacting compound (6) and nitrite compound (7), then reacting with a reducing agent (8). 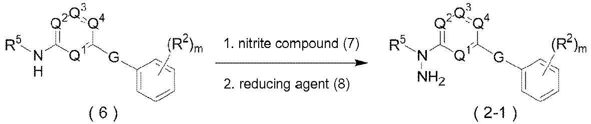 [In the formula, Q¹, Q², Q³, Q⁴, R², R⁵, G, and m have the same meanings as above.]
The reaction is usually carried out in a solvent.
Examples of the solvent used in the reaction include water, tetrahydrofuran, diethyl ether, tert-butyl methyl ether, ethylene glycol dimethyl ether, 1,4-dioxane, and other such ethers; N,N-dimethylformamide and other such acid amides; acetonitrile and other such nitriles; toluene, xylene, and other such aromatic hydrocarbons; ethyl acetate and other such esters; dimethyl sulfoxide and other such sulfoxides; sulfolane; 1,2-dichloroethane, chloroform, chlorobenzene, and other such halogenated hydrocarbons; and mixtures of these.
Examples of the nitrite compound (7) used in the reaction include sodium nitrite and other such nitrites and ethyl nitrite and other such nitrous acid esters.
Examples of the reducing agent (8) used in the reaction include sodium sulfite and other such sulfites; zinc and other such metals; tin(II) chloride, and the like.
The amounts of reagents used in the reaction are usually a proportion of 1-10 mol of nitrite compound (7) and 1-10 mol of reducing agent (8) per mol of compound shown by formula (6).
The reaction temperature in the step that reacts a compound shown by formula (6) and nitrite compound (7) in this reaction is usually in the -20 to 30°C range, and the reaction time is usually in the 0.5-24 hour range.
The reaction mixture obtained in the step that reacts compound (6) and nitrite compound (7) can be used as it is in the step where it is reacted with the reducing agent (8). The reaction temperature in that step is usually in the -20 to 50°C range, and the reaction time is usually in the range up to 24 hours.
After the reaction has been completed, compound (2-1) can also be isolated by extracting the reaction mixture with an organic solvent and conducting drying, concentration, and other such post-treatment procedures. The isolated compound (2-1) can also be refined further by chromatography, recrystallization, and the like.

### Reference production process 2:

Compounds (2-1), which are compounds (2) in which R⁶ is a hydrogen atom, can also be produced by reacting compound (6) and an aminating agent (9). 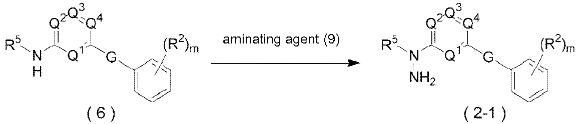 [In the formula, Q¹, Q², Q³, Q⁴, R², R⁵, G, and m have the same meanings as above.]
The reaction is usually carried out in a solvent.
Examples of the solvent used in the reaction include water, tetrahydrofuran, diethyl ether, tert-butyl methyl ether, ethylene glycol dimethyl ether, 1,4-dioxane, and other such ethers; N,N-dimethylformamide and other such acid amides; acetonitrile and other such nitriles; toluene, xylene, and other such aromatic hydrocarbons; ethyl acetate and other such esters; dimethyl sulfoxide and other such sulfoxides; sulfolane; 1,2-dichloroethane, chloroform, chlorobenzene, and other such halogenated hydrocarbons; and mixtures of these.
The reaction is usually carried out in the presence of a base.
Examples of the base used in the reaction include sodium hydride and other such alkali metal hydrides; potassium carbonate and other such carbonates; potassium tert-butoxide and other such alkali metal alkoxides; and triethylamine, pyridine, and other such organic amines.
Examples of the aminating agent (9) used in the reaction include chloramine and other such chloramines; O-mesitoylhydroxylamine and other such O-acylhydroxylamines; O-sulfonylhydroxylamines; and hydroxylamine-o-sulfonic acid.
The above aminating agent (9) can also be generated in the reaction system in this reaction. For example, when chloramine is used as the above aminating agent (9), chloramine may be generated by using sodium hypochlorite and ammonia as raw materials and mixing them in the reaction system.
The amounts of reagents used in the reaction are usually a proportion of 1-10 mol of aminating agent (9) and 1-10 mol of base per mol of compound shown by formula (6).
The reaction temperature of this reaction is usually in the 0-100°C range, and the reaction time is usually in the 0.5-24 hour range.

After the reaction has been completed, compound (2-1) can also be isolated by extracting the reaction mixture with an organic solvent and conducting drying, concentration, and other such post-treatment procedures. The isolated compound (2-1) can also be refined further by chromatography, recrystallization, and the like.

### Reference production process 3:

Compounds (2-2), which are compounds (2) in which R⁶ is R⁶⁻¹, can be produced by reacting compound (2-1) and compound (10). 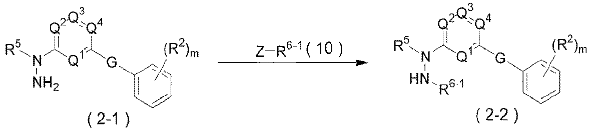 [In the formula, Q¹, Q², Q³, Q⁴, R², R⁵, G, Z, and m have the same meanings as above and R⁶⁻¹ represents a C₁-C₁₂ chain hydrocarbon group optionally substituted by a group selected from Group E1, benzoyl group optionally substituted by a group selected from Group E2, C₂-C₆ alkylcarbonyl group, C₂-C₆ alkoxycarbonyl group, C₃-C₁₂ cycloalkyl group, or formyl group.]
The reaction is usually carried out in a solvent.
Examples of the solvent used in the reaction include tetrahydrofuran, diethyl ether, tert-butyl methyl ether, ethylene glycol dimethyl ether, 1,4-dioxane, and other such ethers; N,N-dimethylformamide and other such acid amides; acetonitrile and other such nitriles; toluene, xylene, and other such aromatic hydrocarbons; ethyl acetate and other such esters; dimethyl sulfoxide and other such sulfoxides; sulfolane; 1,2-dichloroethane, chloroform, chlorobenzene, and other such halogenated hydrocarbons; and mixtures of these.
The reaction is usually carried out in the presence of a base.
Examples of the base used in the reaction include sodium hydride and other such alkali metal hydrides; potassium carbonate and other such carbonates; potassium tert-butoxide and other such alkali metal alkoxides; and triethylamine, pyridine, and other such organic bases.
The amounts of reagents used in the reaction are usually a proportion of 1-10 mol of compound (10) and 1-10 mol of base per mol of compound shown by formula (2-1).
The reaction temperature of this reaction is usually in the 0-100°C range, and the reaction time is usually in the 0.5-24 hour range.
After the reaction has been completed, compound (2-2) can also be isolated by extracting the reaction mixture with an organic solvent and conducting drying, concentration, and other such post-treatment procedures. The isolated compound (2-2) can also be refined further by chromatography, recrystallization, and the like.

### Reference production process 4:

Compounds (2-3), which are compounds (2) in which R⁶ is R⁶⁻², can be produced by reacting compound (2-1) and compound (22). 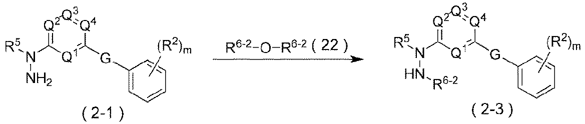 [In the formula, Q¹, Q², Q³, Q⁴, R², R⁵, G, and m have the same meanings as above and R⁶⁻² represents a benzoyl group optionally substituted by a group selected from Group E2, C₂-C₆ alkylcarbonyl group, or C₂-C₆ alkoxycarbonyl group.]
The reaction can also be carried out using a solvent if necessary.
Examples of the solvent include tetrahydrofuran, diethyl ether, tert-butyl methyl ether, ethylene glycol dimethyl ether, 1,4-dioxane, and other such ethers; N,N-dimethylformamide and other such acid amides; acetonitrile and other such nitriles; toluene, xylene, and other such aromatic hydrocarbons; ethyl acetate and other such esters; dimethyl sulfoxide and other such sulfoxides; sulfolane; 1,2-dichloroethane, chloroform, chlorobenzene, and other such halogenated hydrocarbons; and mixtures of these.
The reaction can also be carried out in the presence of a base if necessary.
Examples of the base used include sodium hydride and other such alkali metal hydrides; potassium carbonate and other such carbonates; potassium tert-butoxide and other such alkali metal alkoxides; and triethylamine, pyridine, 4-(dimethylamino)pyridine, imidazole, and other such organic amines.
In the above reaction, compound (22) is usually used in a quantity of 1-10 mol per mol of compound (2-1). If necessary, compound (22) can also be used as a solvent.
When it is necessary to add the above base, it is usually used in a quantity of 1-10 mol per mol of compound (2-1). The reaction temperature is usually in the 0-100°C range, and the reaction time is usually in the 0.5-24 hour range.
After the reaction has been completed, compound (2-3) can also be isolated by extracting the reaction mixture with an organic solvent and conducting drying, concentration, and other such post-treatment procedures. The isolated compound (2-3) can also be refined further by chromatography, recrystallization, and the like.

### Reference production process 5:

Compounds (6-1), which are compounds (6) in which R⁵ is a hydrogen atom, can be produced by reducing compound (11) by any of the following methods (i)-(iii). 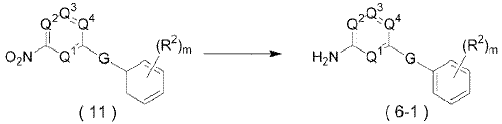 [In the formula, Q¹, Q², Q³, Q⁴, R², G, and m have the same meanings as above.]

### (i) Method of reacting with hydrogen gas in the presence of a transition metal catalyst.

The reaction is carried out in a solvent.
Examples of the solvent used in the reaction include ethyl acetate and other such esters; ethanol, methanol, and other such alcohols; water, acetic acid, hydrochloric acid, and mixtures of these.
Examples of the transition metal catalyst used in the reaction include Raney nickel, palladium-carbon, platinum dioxide, and the like.
The amount of transition metal catalyst used in the reaction is usually a proportion of 0.01-0.5 mol per mol of compound (11).
The amount of hydrogen gas is usually a proportion of 1-100 mol per mol of compound (11).
The reaction time [sic; temperature] of the reaction is usually in the 0-80°C range, and the reaction time is usually in the 0.1-24 hour range.
After the reaction has been completed, the compound shown by formula (6-1) can be isolated by filtering the reaction mixture, extracting by organic solvent if necessary, and conducting drying, concentration, and other such post-treatment procedures. The isolated compound shown by formula (6-1) can also be refined further by chromatography, recrystallization, and the like.

### (ii) Method of reacting with hydrazine in the presence of a base

The reaction is carried out in a solvent.
Examples of the solvent used in the reaction include diethylene glycol, triethylene glycol, and other such ethers; water, and mixtures of these.
Examples of the base used in the reaction include potassium hydroxide and other such alkali metal hydroxides. Examples of the hydrazine used in the reaction include hydrazine hydrate.
The amounts of reagents used in the reaction are usually a proportion of 1-10 mol of base and 1-10 mol of hydrazine per mol of compound (11).
The reaction time [sic; temperature] of the reaction is usually in the 0-100°C range, and the reaction time is usually in the 0.5-24 hour range.
After the reaction has been completed, the compound shown by formula (6-1) can be isolated by extracting the reaction mixture by an organic solvent and conducting drying, concentration, and other such post-treatment procedures. The isolated compound shown by formula (6-1) can also be refined further by chromatography, recrystallization, and the like.

### (iii) Method of reacting with a metal in the presence of an acid

The reaction is usually carried out in a solvent.
Examples of the solvent used in the reaction include ethanol and other such alcohols; water, and mixtures of these. Examples of the metal used in the reaction include iron, tin, and tin(II) chloride.
Examples of the acid used in the reaction include acetic acid, hydrochloric acid, and sulfuric acid.
The amounts of reagents used in the reaction are usually a proportion of 2-20 mol of metal and 0.1-10 mol of acid per mol of compound (11).
The reaction temperature of the reaction is usually in the 0-100°C range, and the reaction time is usually in the 0.5-12 hour range.
After the reaction has been completed, the compound shown by formula (6-1) can be isolated by filtering the reaction mixture, extracting by an organic solvent if necessary, and conducting drying, concentration, and other such post-treatment procedures. The isolated compound shown by formula (6-1) can also be refined further by chromatography, recrystallization, and the like.

### Reference production process 6:

Compounds (6-2), which are compounds (6) in which R⁵ is R⁵⁻¹, can be produced by reacting compound (6-1) and compound (12). 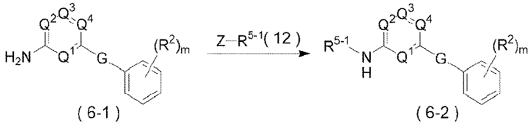 [In the formula, Q¹, Q², Q³, Q⁴, R², G, Z, and m have the same meanings as above and R⁵⁻¹ represents a C₁-C₁₂ chain hydrocarbon group optionally substituted by a group selected from Group E1, benzoyl group optionally substituted by a group selected from Group E2, C₂-C₆ alkylcarbonyl group, C₂-C₆ alkoxycarbonyl group, C₃-C₁₂ cycloalkyl group, or formyl group.]
The reaction is usually carried out in a solvent.
Examples of the solvent used in the reaction include tetrahydrofuran, diethyl ether, tert-butyl methyl ether, ethylene glycol dimethyl ether, 1,4-dioxane, and other such ethers; N,N-dimethylformamide and other such acid amides; acetonitrile and other such nitriles; toluene, xylene, and other such aromatic hydrocarbons; ethyl acetate and other such esters; dimethyl sulfoxide and other such sulfoxides; sulfolane; 1,2-dichloroethane, chloroform, chlorobenzene, and other such halogenated hydrocarbons; and mixtures of these.
The reaction is usually carried out in the presence of a base.
Examples of the base used in the reaction include sodium hydride and other such alkali metal hydrides; potassium carbonate and other such carbonates; potassium tert-butoxide and other such alkali metal alkoxides; and triethylamine, pyridine, and other such organic amines.
The amounts of reagents used in the reaction are usually a proportion of 1-10 mol of compound (12) and 1-10 mol of base per mol of compound (6-1).
The reaction temperature of this reaction is usually in the 0-100°C range, and the reaction time is usually in the 0.5-24 hour range.
After the reaction has been completed, the compound (6-2) can be isolated by extracting the reaction mixture by an organic solvent and conducting drying, concentration, and other such post-treatment procedures. The isolated compound (6-2) can also be refined further by chromatography, recrystallization, and the like.

### Reference production process 7:

Compounds (6-3), which are compounds (6) in which R⁵ is R⁵⁻², can be produced by reacting compound (6-1) and compound (20). 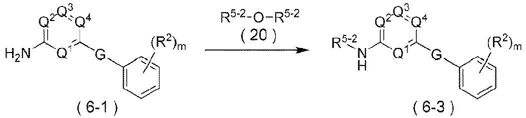 [In the formula, Q¹, Q², Q³, Q⁴ , R², R⁵⁻², G, and m have the same meanings as above.]
The reaction can also be carried out using a solvent if necessary.
Examples of the solvent include tetrahydrofuran, diethyl ether, tert-butyl methyl ether, ethylene glycol dimethyl ether, 1,4-dioxane, and other such ethers; N,N-dimethylformamide and other such acid amides; acetonitrile and other such nitriles; toluene, xylene, and other such aromatic hydrocarbons; ethyl acetate and other such esters; dimethyl sulfoxide and other such sulfoxides; sulfolane; 1,2-dichloroethane, chloroform, chlorobenzene, and other such halogenated hydrocarbons; and mixtures of these.
The reaction can also be carried out in the presence of a base if necessary.
Examples of the base include sodium hydride and other such alkali metal hydrides; potassium carbonate and other such carbonates; potassium tert-butoxide and other such alkali metal alkoxides; and triethylamine, pyridine, 4-(dimethylamino)pyridine, imidazole, and other such organic bases.
In the above reaction, compound (20) is usually used in a quantity of 1-10 mol per mol of compound (6-1) and can also be used as a solvent if necessary. When it is necessary to add the above base, it is usually used in a quantity of 1-10 mol per mol of compound (6-1).
The reaction temperature is usually in the 0-100°C range, and the reaction time is usually in the 0.5-24 hour range. After the reaction has been completed, the compound (6-3) can also be isolated by extracting the reaction mixture by an organic solvent and conducting drying, concentration, and other such post-treatment procedures. The isolated compound (6-3) can also be refined further by chromatography, recrystallization, and the like.

### Reference production process 8:

Compounds (11-1), which are compounds (11) in which G is a group shown by G-1 and Y¹ is an oxygen atom, can be produced by reacting compound (13) with a base and then reacting with compound (14). 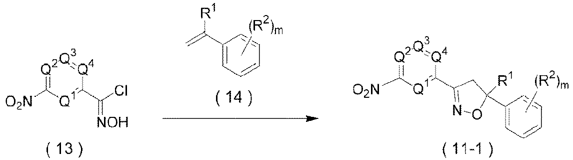 [In the formula, Q¹, Q², Q³, Q⁴, R¹, R², and m have the same meanings as above.]
The reaction is usually carried out in a solvent.
Examples of the solvent used in the reaction include tetrahydrofuran, diethyl ether, tert-butyl methyl ether, ethylene glycol dimethyl ether, 1,4-dioxane, and other such ethers; N,N-dimethylformamide and other such acid amides; acetonitrile and other such nitriles; toluene and other such hydrocarbons; ethyl acetate and other such esters; dimethyl sulfoxide and other such sulfoxides; and mixtures of these.
Examples of the base used in the reaction include sodium hydride and other such alkali metal hydrides; potassium carbonate and other such carbonates; potassium tert-butoxide and other such alkali metal alkoxides; and triethylamine, pyridine, and other such organic amines.
The amounts of reagents used in the reaction are usually a proportion of 1-10 mol of compound (14) and 1-10 mol of base per mol of compound (13).
The reaction temperature in the step of this reaction that reacts compound (13) and a base is usually in the 0-80°C range, and the reaction time is usually in the 0.5-24 hour range.
The reaction mixture obtained by the step that reacts compound (13) and a base can be used as it is in the step in which it is reacted with compound (14). The reaction temperature in this step is usually in the 0-80°C range, and the reaction time is usually in the 0.5-24 hour range.
After the reaction has been completed, the compound (11-1) can be isolated by extracting the reaction mixture by an organic solvent and conducting drying, concentration, and other such post-treatment procedures. The isolated compound (11-1) can also be refined further by chromatography, recrystallization, and the like.

### Reference production process 9:

Compound (13) can be produced by reacting compound (15) with a chlorinating agent (16). 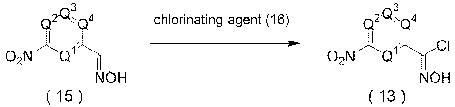 [In the formula, Q¹, Q², Q³, and Q⁴ have the same meanings as above.]
The reaction is usually carried out in a solvent.
Examples of the solvent used in the reaction include tetrahydrofuran, diethyl ether, tert-butyl methyl ether, ethylene glycol dimethyl ether, 1,4-dioxane, and other such ethers; toluene and other such hydrocarbons; ethyl acetate and other such esters; N,N-dimethylformamide and other such acid amides; acetonitrile and other such nitriles; dimethyl sulfoxide and other such sulfoxides; and mixtures of these.
Examples of the chlorinating agent (16) used in the reaction include chlorine gas and N-chlorosuccinimide.
The amounts of reagents used in the reaction are usually a proportion of 1-10 mol of chlorinating agent (16) per mol of compound (15).
The reaction temperature of the reaction is usually in the -20 to 80°C range, and the reaction time is usually in the 0.5-24 hour range.
After the reaction has been completed, compound (13) can be isolated by extracting the reaction mixture by an organic solvent and conducting drying, concentration, and other such post-treatment procedures. The isolated compound (13) can also be refined further by chromatography, recrystallization, and the like.

### Reference production process 10:

Compound (15) can be produced by reacting compound (17) and hydroxylamine. 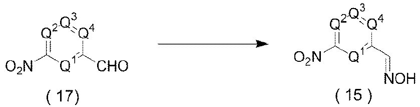 [In the formula, Q¹, Q², Q³, and Q⁴ have the same meanings as above.]
The reaction is usually carried out in a solvent.
Examples of the solvent used in the reaction include tetrahydrofuran, diethyl ether, tert-butyl methyl ether, ethylene glycol dimethyl ether, 1,4-dioxane, and other such ethers; ethyl acetate and other such esters; N,N-dimethylformamide and other such acid amides; ethanol, methanol, and other such alcohols; acetonitrile and other such nitriles; dimethyl sulfoxide and other such sulfoxides; water and mixtures of these.
Examples of the hydroxylamine used in this reaction include hydroxylamine hydrochloride and compounds that can produce hydroxylamine in the reaction system in the form of hydroxylamine sulfate or another such salt of hydroxylamine and a mineral acid. The reaction is carried out in the presence of a base in such cases. Examples of the base used in such cases include triethylamine and other such organic amines; sodium carbonate and other such carbonates; and sodium hydroxide and other such alkali metal hydroxides.
The amounts of reagents used in the reaction are usually a proportion of 1-10 mol of hydroxylamine per mol of compound (17). When a salt of hydroxylamine and a mineral acid is used, the amount of base used is usually 1-10 mol per mol of salt of hydroxylamine and mineral acid.
The reaction temperature of the reaction is usually in the 0-80°C range, and the reaction time is usually in the 0.5-24 hour range.
After the reaction has been completed, compound (15) can be isolated by extracting the reaction mixture by an organic solvent and conducting drying, concentration, and other such post-treatment procedures. The isolated compound (15) can also be refined further by chromatography, recrystallization, and the like.

### Reference production process 11:

Compounds (4-1), which are compounds (4) in which G is a group shown by G-1 and Y¹ is an oxygen atom, can be produced by reacting compound (18) with a base and then reacting with compound (14). 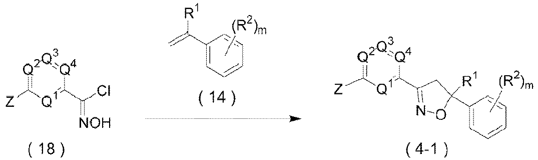 [In the formula, Q¹, Q², Q³, Q⁴, R¹, R², Z, and m have the same meanings as above.]
The reaction is usually carried out in a solvent.
Examples of the solvent used in the reaction include tetrahydrofuran, diethyl ether, tert-butyl methyl ether, ethylene glycol dimethyl ether, 1,4-dioxane, and other such ethers; N,N-dimethylformamide and other such acid amides; acetonitrile and other such nitriles; toluene and other such hydrocarbons; ethyl acetate and other such esters; dimethyl sulfoxide and other such sulfoxides; and mixtures of these.
Examples of the base used in the reaction include sodium hydride and other such alkali metal hydrides; potassium carbonate and other such carbonates; potassium tert-butoxide and other such alkali metal alkoxides; and triethylamine, pyridine, and other such organic amines.
The amounts of reagents used in the reaction are usually a proportion of 1-10 mol of compound (14) and 1-10 mol of base per mol of compound (18).
The reaction temperature in the step of this reaction that reacts compound (18) and a base is usually in the 0-80°C range, and the reaction time is usually in the 0.5-24 hour range.
The reaction mixture obtained in the step that reacts compound (18) and a base can be used as it is in the step in which it is reacted with compound (14). The reaction temperature in this step is usually in the 0-80°C range, and the reaction time is usually in the 0.5-24 hour range.
After the reaction has been completed, compound (4-1) can be isolated by extracting the reaction mixture by an organic solvent and conducting drying, concentration, and other such post-treatment procedures. The isolated compound (4-1) can also be refined further by chromatography, recrystallization, and the like.

### Reference production process 12:

Compounds shown by formula (4-2), which *are* compounds (4) in which G is a group shown by G-1 and Y¹ is an NR⁷ group, can be produced in accordance with the method described, for example, in WO 2007/123855. 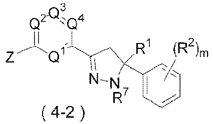 [In the formula, Q¹, Q², Q³, Q⁴, R¹, R², R⁷, Z, and m have the same meanings as above.]

### Reference production process 13:

Compounds shown by formula (4-3), which are compounds (4) in which G is a group shown by G-2 and Y² is Y²⁻¹, can be produced in accordance with the method described, for example, in Japanese Unexamined Patent Application Publication No. 2007-91708. 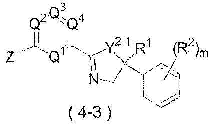 [In the formula, Q¹, Q², Q³, Q⁴, R¹, R², Z, and m have the same meanings as above and Y²⁻¹ represents an oxygen atom, sulfur atom, or methylene group.]

### Reference production process 14:

Compounds shown by formula (4-4), which are compounds (4) in which G is a group shown by G-3 and Y³ is Y³⁻¹, can be produced in accordance with the method described, for example, in WO 2007/123853. 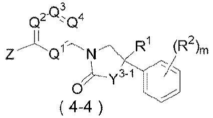 [In the formula, Q¹, Q², Q³, Q⁴, R¹, R², Z, and m have the same meanings as above and Y³⁻¹ represents an oxygen atom or NR⁷, and R⁷ has the same meaning as above.]

### Reference production process 15:

Compounds shown by formula (4-5), which are compounds (4) in which G is a group shown by G-3 and Y³ is a methylene group, can be produced in accordance with the method described, for example, in Japanese Unexamined Patent Application Publication No. 2008-110971. 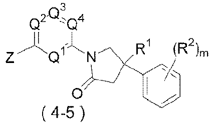 [In the formula, Q¹, Q², Q³, Q⁴, R¹, R², Z, and m have the same meanings as above.]

Pyriproxyfen (4-phenoxyphenyl=2-(pyridyloxy)propyl=ether) is a compound shown by the following formula (II) and is a compound described in Japanese Unexamined Patent Application Publication No. 60-215671.

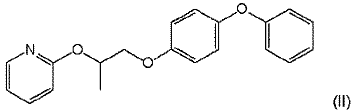

Pyriproxyfen can be produced, for example, by the method described in Japanese Unexamined Patent Application Publication No. 60-215671. Compounds used in commercial agricultural chemical formulations can also be used.

Harmful insects and harmful mites and other such harmful arthropods can be given as examples of pests against which the pest control composition of the present invention is effective. The following are more specific examples.

Hemiptera pests: *Laodelphax striatellus, Nilaparvata lugens, Sogatella furcifera,* and other such planthoppers; *Nephotettix cincticeps, Nephotettix virescens, Empoasca onukii,* and other such leafhoppers; *Aphis gossypii, Myzus persicae, Brevicoryne brassicae, Aphis spiraecola, Macrosiphum euphorbiae, Aulacorthum solani, Rhopalosiphum padi, Toxoptera citricidus, Hyalopterus pruni,* and other such aphids; *Nezara antennata, Riptortus clavetus, Leptocorisa chinensis, Eysarcoris parvus, Halyomorpha mista,* and other such stink bugs; *Triatoma rubrofasciata* and other such assassin bugs; *Trialeurodes vaporariorum, Bemisia tabaci, Dialeurodes citri, Aleurocanthus spiniferus,* and other such whiteflies; *Aonidiella aurantii, Comstockaspis perniciosa, Unaspis citri, Ceroplastes rubens, Icerya purchase, Planococcus kraunhiae, Planococcus citri, Pseudococcus longispinis, Pseudaulacaspis pentagona,* and other such scales; lace bugs; *Cimex lectularius, Cimex hemipterus,* and other such chinch bugs; *Cacopsylla pyricola* and other such psyllids, and the like.

Lepidoptera pests: *Chilo suppressalis, Tryporyza incertulas, Cnaphalocrocis medinalis, Notarcha derogata, Plodia interpunctella, Ostrinia furnacalis, Hellula undalis, Pediasia teterrellus,* and other such moths; *Spodoptera litura, Spodoptera exigua, Pseudaletia separata, Mamestra brassicae, Agrotis ipsilon, Autographa nigrisigna,* Trichoplusia, Heliotis, Helicoverpa, and other such noctuid moths; *Pieris rapae* and other such pierid butterflies; Adoxophyes; *Grapholita molesta, Leguminivora glycinivorella, Matsumuraeses azukivora, Adoxophyes orana fasciata, Adoxophyes honmai., Homona magnanima, Archips fuscocupreanus, Cydia pomonella,* and other such tortrix moths; *Caloptilia theivora, Phyllonorycter ringoneela,* and other such gracillariids; *Carposina niponensis* and other such carposinid moths; *Tuta absoluta,* Lyonetia, and other such lyonetiid moths; Lymantria, Euproctis, and other such lymantriid moths; *Plutella xylostella* and other such ermine moths; *Pectinophora gossypiella, Phthorimaea operculella,* and other such gelechiid moths; *Hyphantria cunea* and other such tiger moths; *Tinea translucens, Tineola bisselliella,* and other such tineid moths, and the like.

Thysanoptera pests: *Frankliniella occidentalis, Thrips parmi, Scirtothrips dorsalia, Thrips tabaci, Frankliniella intonsa,* and other such thrips, and the like.

Diptera pests: *Culex pipiens pallens, Culex tritaeniorhynchus, Culex quinquefasciatus,* and other such culicine mosquitoes; *Aedes aegypti, Aedes albopictus,* and other such aedes mosquitoes; *Anopheles sinensis, Anopheles gambiae, Anopheles minimus, Anopheles stephensi, Anopheles albimanus,* and other such anopheles mosquitoes; Chironomidae, *Musca domestica, Musca stabulans,* and other such house flies; blow flies; flesh flies; little house flies; *Glossina palpalis* and other such louse flies; *Delia platura, Delia antiqua,* and other such root maggots; *Agromyza oryzae, Hydrellia griseola, Liriomyza sativae, Liriomyza trifolii, Chromatomyia horticola,* and other such agromyzids; *Chlorops oryzae* and other such rice stem maggots; *Dacus cucurbitae, Ceratitis capitata,* and other such fruit flies; drosophila, *Megaselia spiracularis* and other such phorid flies; *Glogmia albipunctata, Phlebotomus squamirostris, Lutzomyia longipalpis,* and other such sand flies; black flies, *Tabanus trigonus* and other such tabanid flies; stable flies, and the like.

Coleoptera pests: *Diabrotica virgifera virgifera, Diabrotica undecimpunctata howardi,* and other such corn rootworms; *Anomala cuprea, Anomala rufocuprea, Popillia japonica,* and other such chafer beetles; *Sitophilus zeamais, Lissorhoptrus oryzophilus, Callosobruchuys chienensis, Echinocnemus squameus, Anthonomus grandis, Sphenophorus venatus, Rhynchophorus ferrugineus,* and other such weevils; *Tenebrio molitor, Tribolium castaneum,* and other such darkling beetles; *Oulema oryzae, Aulacophora femoralis, Phyllotreta striolata, Leptinotarsa decemlineata,* and other such chrysomelids; *Anthrenus verbasci, Dermestes maculates,* and other such carpet beetles; *Lasioderma serricorne* and other such death watch beetles; *Epilachna vigintioctopunctata* and other such ladybird beetles; *Lyctus brunneus, Tomicus piniperda,* and other such bark beetles; bamboo powderpost beetles, ptinid beetles, *Anoplophora malasiaca* and other such long-horned beetles; *Agriotes* spp., *Paederus fuscipes,* and the like.

Orthoptera pests: *Locusta migratoria, Gryllotalpa Africana, Oxya yezoensis, Oxya japonica,* crickets, and the like.

Siphonaptera pests: *Pulex irritans, ctenocephalides felis, Ctenocephalides canis, Xenopsylla cheopis, Tunga penetrans, Echidnophaga gallinacean, Nosopsyllus fasciatus,* and the like.

Anoplura pests: *Pediculus humanus corporis, Pediculus humanus humanus, Phthirus pubis, Haematopinus eurysternus, Dalmalinia ovis, Haematopinus suis,* and the like.

Hymenoptera pests: *Monomorium pharaosis, Formica fusca japonica, Ochetellus glaber, Pristomyrmex pungens, Pheidole noda, Acromyrmex* spp., *Solenopsis* spp., *Linepithema humile,* and other such ants; hornets, bethylid wasps, *Athalia* rosae, *Athalia japonica,* and other such saw flies, and the like.

Blatteria pests: *Blatella germanica, Periplaneta fuliginosa, Periplaneta americana, Periplaneta brunnea, Blatta orientalis,* and other such cockroaches; *Reticulitermes speratus, Coptotermes formosanus, Incisitermes minor, Cryptotermes domesticus, Odontotermes formosanus, Neotermes koshunensis, Glyptotermes satsumensis, Glyptotermes nakajimai, Glyptotermes fuscus, Glyptotermes kodamai, Glyptotermes kushimensis, Hodotermopsis japonica, Coptotermes guangzhoensis, Reticulitermes miyatakei, Reticulitermes flaviceps amamianus, Reticulitermes* sp., *Nasutitermes takasagoensis, Pericapritermes nitobei, Sinocapritermes mushae,* and other such termites, and the like.

Acari pests: *Tetranychus urticae, Tetranychus kanzawai, Panonychus citri, Panonychus ulmi,* Oligonychus, and other such spider mites; *Aculops pelekassi, Phyllocoptruta citri, Aculops lycopersici, Calacarus carinatus, Acaphylla theavagrans, Eriophyes chibaensis, Aculus schlechtendali,* and other such gall mites; *Polyphagotarsonemus latus, Acarapis woodi,* and other such tarsonemid mites; *Brevipalpus phoenicis* and other such false spider mites; tuckerellid mites, *Amblyomma americanum, Ambryomma maculatum, Boophilus microplus, Boophilus annulatus, Dermacentor variabilis, Dermacentor taiwanicus, Dermacentor andersoni, Haemaphysalis longicornis, Haemaphysalis flava, Haemaphysalis campanulata, Ixodes ovatus, Ixodes persulcatus, Ixodes scapularis, Ixodes pacificus, Ixodes holocyclus, Rhipicephalus sanguineus, Rhipicephalus appendiculatus,* and other such ticks; *Argas persicus* and other such argasids; Otodectes *cynotis* and other such ear mites; Sarcoptes *scabiei* and other such itch mites; *Listrophorus gibbus* and other such listrophorid mites; *Demodex canis* and other such face mites; *Tyrophagus putrescentiae, Tyrophagus similis,* and other such mold mites; *Dermatophagoides farina, Dermatophagoides ptrenyssnus,* and other such dust mites; *Cheyletus eruditus, Cheyletus malaccensis, Cheyletus moorei,* and other such cheyletid mites; *Ornithonyssus bacoti, Ornithonyssus sylvairum, Varroa jacobsoni,* and other such gamasid mites; *Dermanyssus gallinae* and other such red mites; *Leptotrombidium akamushi* and other such trombiculid mites; and the like, *Chiracanthium japonicum, Latrodectus hasseltii,* and other such spiders, and the like.

Chilopoda: *Thereuonema hilgendorfi, Scolopendra subspinipes,* and the like.
Diplopoda: *Oxidus gracilis, Nedyopus tambanus,* and the like.
Isopoda: *Armadillidium vulgare,* and the like.
Gastropoda: *Limax marginatus, Limax flavus,* and the like.

The pest control composition of the present invention may be only the hydrazide compound and pyriproxyfen, but they are usually mixed with a solid carrier, liquid carrier and/or gaseous carrier and made into an emulsion, oil, oily liquid, aqueous liquid, solution, shampoo, suspension, or other such liquid, powder, granule, paste, cream, ointment, microcapsule, foam, aerosol, carbon dioxide formulation, tablet, chewable tablet, bolus, capsule, animal feed premix, syrup, sheet, film, resin, injection, implant, suppository, or other such formulation by adding surfactant and other formulation adjuvants as needed. These formulations are also used processed into baits, mosquito coils, electric mosquito repellant mats, smoking agents, fumigants, and sheets.
These formulations usually contain 0.1-95 wt% by total weight of the hydrazide compound and pyriproxyfen.

Examples of solid carriers used in making a formulation include clays (kaolin clay, diatomaceous earth, bentonite, Fubasami clay, acid clay, and the like), synthetic hydrated silicon oxide, talc, ceramic, other inorganic minerals (sericite, quartz, sulfur, activated charcoal, calcium carbonate, hydrated silica, and the like), chemical fertilizers (ammonium sulfate, ammonium phosphate, ammonium nitrate, ammonium chloride, urea, and the like), and other such fine powders and granules.

Examples of liquid carriers include aromatic or aliphatic hydrocarbons (xylene, toluene, alkyl naphthalene, phenyl xylyl ethane, kerosene, light oil, hexane, cyclohexane, and the like), halogenated hydrocarbons (chlorobenzene, dichloromethane, dichloroethane, trichloroethane, and the like), alcohols (methanol, ethanol, isopropyl alcohol, butanol, hexanol, ethylene glycol, and the like), ethers (diethyl ether, ethylene glycol dimethyl ether, diethylene glycol monomethyl ether, diethylene glycol monoethyl ether, propylene glycol monomethyl ether, tetrahydrofuran, dioxane, and the like), esters (ethyl acetate, butyl acetate, and the like), fatty acid esters (diisopropyl adipate, diisobutyl adipate, isopropyl myristate, and the like), ketones (acetone, methyl ethyl ketone, methyl isobutyl ketone, cyclohexanone, and the like), nitriles (acetonitrile, isobutyronitrile, and the like), sulfoxides (dimethyl sulfoxide and the like), acid amides (N,N-dimethylformamide, N,N-dimethylacetamide, and the like), pyrrolidones (N-methyl-2-pyrrolidone, N-octyl-2-pyrrolidone, and the like), propylene carbonate, ethyl lactate, 1,3-dimethyl-2-imidazolidinone, vegetable oils (soybean oil, cottonseed oil, and the like), refined vegetable oils (orange oil, hyssop oil, lemon oil, and the like), silicone oils (dimethyl silicone oil, highly polymerized dimethyl silicone oil, cyclic silicone oil, polyether-modified silicone oil, amino-modified silicone oil, methyl phenyl silicone oil, and the like), and water and the like.

Examples of gaseous carriers include butane gas, Freon gas, liquefied propane gas (LPG), dimethyl ether, carbon dioxide, and the like.

Examples of surfactants include alkyl sulfuric acid ester salts, alkyl sulfonates, alkyl aryl sulfonates, alkyl aryl ethers and polyoxyethylenated forms thereof, polyethylene glycol ethers, polyhydric alcohol esters, and sugar alcohol derivatives.

Examples of other formulation adjuvants include adhesives, dispersing agents, stabilizers, and the like. Specific examples include casein, gelatin, polysaccharides (starch, gum Arabic, cellulose derivatives, alginic acid, and the like), lignin derivatives, bentonite, sugars, synthetic water-soluble polymers (polyvinyl alcohol, polyvinyl pyrrolidine, polyacrylic acid, and the like), PAP (acidic isopropyl phosphate), BHT (2,6-di-tert-butyl-4-methylphenol), BHA (mixture of 2-tert-butyl-4-methoxyphenol and 3-tert-butyl-4-methoxyphenol), vegetable oils, mineral oils, fatty acids, and fatty acid esters.

Examples of the base material of a resin formulation include vinyl chloride polymers, polyurethane, and the like. Phthalic acid esters (dimethyl phthalate, dioctyl phthalate, and the like), adipic acid esters, stearic acid, and other such plasticizers may be added as needed to these base materials. After kneading the compounds into the base material using a kneading machine, a resin formulation is obtained by injection molding, extrusion molding, press molding, or another such molding method, and can be processed into a plate, film, tape, cord, or other such resin formulation by further molding, cutting, and other such steps as needed. These resin formulations are processed, for example, into animal collars, animal ear tags, sheets, training string, and gardening posts.
Examples of the base material of a bait include grains, vegetable oils, sugars, crystalline cellulose, and the like. Dibutyl hydroxy toluene, nordihydroguaiuretic acid, and other such antioxidants, dehydroacetic acid and other such preservatives, powdered capsicum and other such agents to prevent accidental ingestion by children and pets, cheese flavoring, onion flavoring, peanut oil, and other such flavorings to attract pests, and the like are added as needed to these base materials.

The pest control method of the present invention comprises a step of applying effective amounts of the hydrazide compound and pyriproxyfen directly to a pest and/or to the habitat of a pest (body of plants, body of animals, rooms, soil, and the like). The hydrazide compound and pyriproxyfen may be applied separately within the same time frame, but they are usually applied as a pest control composition of the present invention for the sake of simplicity during application.

When this hydrazide compound and pyriproxyfen are used to control agricultural and forestry pests, the amount applied is usually 1-10,000 g/ha, preferably 10-500 g/ha, by total weight of hydrazide compound and pyriproxyfen. Emulsions, wettable powders, flowable powders, microcapsules, and other such formulations are usually used diluted by water so that the total of hydrazide compound and pyriproxyfen will be 1-1000 ppm. Powders, granules, and the like are usually used as they are. These formulations may be dispersed directly on the plants that are to be protected from pests. Pests that live in the soil can also be controlled by treating the soil with these formulations. These formulations can also be used to treat the seedling bed before planting or to treat the planting hole or stalk at the time of planting. Sheets of the pest control agent of the present invention can also be used by wrapping them around plants, placing them near plants, covering the soil surface near the stalk, and other such methods.

The pest control agent of the present invention can be used in farmland where the following "crops" are grown. Agricultural Crops: Corn, rice, wheat, barley, rye, oats, sorghum, cotton, soybeans, peanuts, buckwheat, sugar beet, rapeseed, sunflower, sugarcane, tobacco, and the like,
Vegetables: Solanaceous vegetables (eggplant, tomatoes, peppers, hot peppers, potatoes, and the like), cucurbitaceous vegetables (cucumber, pumpkin, zucchini, watermelon, melon, and the like), cruciferous vegetables (radishes, turnips, horseradish, kohlrabi, Chinese cabbage, cabbage, mustard greens, broccoli, cauliflower, and the like), composite vegetables (burdock, crown daisy, artichoke, lettuce, and the like), Liliaceae vegetables (leek, onion, garlic, asparagus), Umbelliferae vegetables (carrot, parsley, celery, parsnip, and the like), Chenopodiaceae vegetables (spinach, Swiss chard, and the like), Labiatae vegetables (beefsteak plant, mint, basil, and the like), strawberries, sweet potato, yam, taro, and the like,
Flowers,
Decorative plants,
Fruit trees: Pome fleshy fruits (apples, pears, Japanese pears, Chinese quince, quince, and the like), stone fleshy fruits (peach, plum, nectarine, Japanese plum, cherry, apricot, prune, and the like), citrus (Satsuma mandarin, orange, lemon, lime, grapefruit, and the like), nuts (chestnuts, walnuts, hazelnut, almonds, pistachios, cashews, macadamia nuts, and the like), berries (blueberries, cranberries, blackberries, raspberries, and the like), grapes, persimmons, olives, loquat, banana, coffee, dates, coconut, and the like,
Trees other than fruit trees: Tea, mulberry, flowering trees, street trees (ash, birch, dogwood, eucalyptus, ginkgo, lilac, maple, oak, poplar, redbud, sweet gum tree, sycamore, zelkova, Japanese arbovitae, fir trees, hemlock, juniper, pine, spruce, yew), and the like.

"Crops" also includes genetically engineered crops.

When the hydrazide compound and pyriproxyfen are used for epidemic prevention, the amount applied, as the total of hydrazide compound and pyriproxyfen, is usually 0.001-10 mg/m³ when applied in the air and 0.001-100 mg/m² when applied to a surface. Emulsions, wettable powders, flowable powders, and the like are usually applied diluted by water so that the concentration of the total of hydrazide compound and pyriproxyfen will be 0.01-10,000 ppm. Oils, aerosols, smoking agents, baits, and the like are usually applied as they are.

When the hydrazide compound and pyriproxyfen are used to control external parasites on cows, horses, pigs, sheep, goats, poultry, and other such livestock and dogs, cats, rats, mice, and other such small animals, they can be used on the animals by an oral or parenteral administration method known in veterinary medicine. Examples of specific methods of use include, when used for whole-body control, tablets (including pills, sugar-coated tablets, and film-coated tablets), chewable tablets, capsules, granules (coarse granules, fine granules, powders, and the like), liquids (emulsions, suspensions, and the like), film-shaped formulations, and other such oral preparations; and injections (e.g., subcutaneous injections, intravenous injections, intramuscular injections, intraperitoneal injections, infusions, sustained-release injections), suppositories (e.g., rectal suppositories, vaginal suppositories), implants (including implant tablets, those formed using a biodegradable polymer as the base material, those that release the active ingredients at a constant rate by encapsulation in a capsule made of titanium or another biocompatible metal), and other such parenteral preparations. Furthermore, in the case of oral administration, the above formulations can be used mixed with feed.
When used for non-whole-body control, methods are used such as spraying an oily or aqueous liquid, moistening with a cream, ointment, or the like, pour-on or spot-on treatment by a liquid, washing the animal with a shampoo formulation, making a resin preparation into a collar or ear tag and attaching it to the animal, or the like. The total amount of hydrazide compound and pyriproxyfen is usually in the 0.1-1000 mg per kg animal weight range when administering them to an animal.

Various organic and inorganic carriers commonly used as formulation materials are used in the pharmaceutical dosage forms used in the above veterinary methods of administration. Excipients, lubricants, binders, disintegrants, and the like are combined in solid formulations; solvents, solubilizers, suspending agents, isotonicity agents, buffers, analgesic agents, and the like are combined in liquid formulations. Preservatives, antioxidants, colorings, sweeteners, and other such formulation additives can also be used as needed. Preferred examples of excipients include lactose, saccharose, D-mannitol, D-sorbitol, starch, α-starch, dextrin, crystalline cellulose, low-substituted hydroxypropyl cellulose, carboxymethyl cellulose sodium, gum Arabic, pullulan, light silicic anhydride, synthetic aluminum silicate, magnesium aluminometasilicate, and the like. Preferred examples of lubricants include magnesium stearate, calcium stearate, talc, colloidal silica, and the like. Preferred examples of binders include α-starch, sucrose, gelatin, gum Arabic, methyl cellulose, carboxymethyl cellulose, carboxymethyl cellulose sodium, crystalline cellulose, saccharose, D-mannitol, trehalose, dextrin, pullulan, hydroxypropyl cellulose, hydroxypropyl methyl cellulose, polyvinyl pyrrolidine, and the like. Preferred examples of disintegrants include lactose, saccharose, starch, carboxymethyl cellulose, carboxymethyl cellulose calcium, croscarmellose sodium, carboxymethyl starch sodium, light silicic anhydride, low-substituted hydroxypropyl cellulose, and the like. Preferred examples of solvents include water for injection, physiological saline, Ringer's solution, alcohol, propylene glycol, polyethylene glycol, sesame oil, corn oil, olive oil, cottonseed oil, and the like. Preferred examples of solubilizers include polyethylene glycol, propylene glycol, D-mannitol, trehalose, benzyl benzoate, ethanol, tris aminomethane, cholesterol, triethanolamine, sodium carbonate, sodium citrate, sodium salicylate, sodium acetate, and the like. Preferred examples of suspending agents include stearyl triethanolamine, sodium lauryl sulfate, lauryl aminopropionic acid, lecithin, benzalkonium chloride, benzethonium chloride, glycerin monostearate, and other such surfactants; for example, polyvinyl alcohol, polyvinyl pyrrolidone, carboxymethyl cellulose sodium, methyl cellulose, hydroxymethyl cellulose, hydroxyethyl cellulose, hydroxypropyl cellulose, and other such hydrophilic polymers; polysorbates, polyoxyethylene hydrogenated castor oil, and the like. Preferred examples of isotonicity agents include sodium chloride, glycerin, D-mannitol, D-sorbitol, glucose, and the like. Preferred examples of buffers include phosphate, acetate, carbonate, citrate, and other such buffers, and the like. Preferred examples of analgesics include benzyl alcohol and the like. Preferred examples of preservatives include p-oxybenzoic acid esters, chlorobutanol, benzyl alcohol, phenethyl alcohol, dehydroacetic acid, sorbic acid, and the like. Preferred examples of antioxidants include sulfites, ascorbates, and the like. Preferred examples of colorings include water-soluble food coal-tar dyes (e.g., Food Red Nos. 2 and 3, Food Yellow Nos. 4 and 5, Food Blue Nos. 1 and 2, and other such food dyes), water-insoluble Lake dyes (e.g., aluminum salts of the aforementioned water-soluble food coal-tar dyes and the like), natural colors (e.g., β-carotene, chlorophyll, colcothar, and the like), and the like.
An injection is produced by dissolving, suspending, or emulsifying the active ingredients together with a dispersing agent (e.g., Polysorbate 80, polyoxyethylene hydrogenated castor oil 60, and the like, polyethylene glycol, carboxymethyl cellulose, sodium alginate, and the like), preservative (e.g., methyl paraben, propyl paraben, benzyl alcohol, chlorobutanol, phenol, and the like), isotonicity agent (e.g.,. sodium chloride, glycerin, D-mannitol, D-sorbitol, glucose, and the like), and the like in an aqueous solvent (e.g., distilled water, physiological saline, Ringer's solution, and the like) or oily solvent (e.g., olive oil, sesame oil, cottonseed oil, corn oil, and other such vegetable oils, propylene glycol, and the like) and the like. A solubilizer (e.g., sodium salicylate, sodium acetate, and the like), stabilizer (e.g., human serum albumin and the like), analgesic (e.g., benzyl alcohol and the like), and other such additives may also be used as desired in this case. Injections are usually packaged in suitable ampules.

The pest control composition of the present invention can also be used as a sustained-release formulation. Sustained-release formulations include microcapsules (e.g., microspheres, microcapsules, microparticles, and the like), those formed from biocompatible polymers, and the like, produced by methods such as in-water drying (o/w methods, w/o/w methods, and the like), phase separation, spray drying, and methods that accord with these.

The pest control composition of the present invention can also be used in combination with other insecticides, nematocides, miticides, fungicides, herbicides, plant growth regulators, synergists, fertilizers, soil conditioners, animal feeds, and the like.

### EXAM PLES

The present invention is explained more specifically below through production examples of the hydrazide compound and production intermediates of the hydrazide compound, formulation examples of the pest control composition of the present invention, and test cases. The present invention, however, is not limited to these examples.
Furthermore, the abbreviations used in this specification have the following meanings.
Me: Methyl group, Et: ethyl group, Ph: phenyl group

First, production examples of the hydrazide compound appear below.

### Production Example 1:

A quantity of 1.39 g of the tert-butyl N-{3-[5-(3,5-dichlorophenyl)-5-trifluoromethyl-4,5-dihydroisoxazol-3-yl]phenyl}carbazate obtained by Reference Production Example 6 and 330 mg of triethylamine were dissolved in 12 mL of tetrahydrofuran. After adding 257 mg of acetyl chloride dropwise at 0°C and stirring for one hour at 0°C, the mixture was allowed to stand for 13 hours at room temperature. Water was added to the reaction mixture, and it was extracted by ethyl acetate. The organic layer was dried by anhydrous sodium sulfate and concentrated under reduced pressure. The residue obtained was subjected to silica gel column chromatography, and 1.30 g of tert-butyl N'-acetyl-N-{3-[5-(3,5-dichlorophenyl)-5-trifluoromethyl-4,5-dihydroisoxazol-3-yl]phenyl}carbazate (refer to as hydrazide compound (1) in this specification) was obtained.

### Hydrazide compound (1)

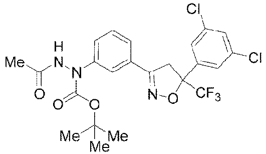

Melting point: 111°c

### Production Example 2:

A quantity of 250 mg of the tert-butyl N'-acetyl-N-{3-[5-(3,5-dichlorophenyl)-5-trifluoromethyl-4,5-dihydroisoxazol-3-yl]phenyl}carbazate obtained by Production Example 1 was dissolved in 1 mL of tetrahydrofuran, and 1.5 mL of trifluoroacetic acid was added dropwise at room temperature and stirred for one hour. Saturated sodium bicarbonate aqueous solution was added to the reaction mixture, and it was extracted by ethyl acetate. The organic layer was dried by anhydrous sodium sulfate and concentrated under reduced pressure. The residue obtained was subjected to silica gel column chromatography, and 179 mg of N'-{3-[5-(3,5-dichlorophenyl)-5-trifluoromethyl-4,5-dihydroisoxazol-3-yl]phenyl}acetohydrazide (refer to as hydrazide compound (2) in this specification) was obtained.

### Hydrazide compound (2)

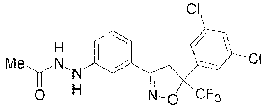

Melting point: 100°C

### Production Example 3:

A quantity of 78 mg of sodium hydride (60% in oil) was suspended in 4 mL of tetrahydrofuran, and a solution of 800 mg of the tert-butyl N'-acetyl-N-{3-[5-(3,5-dichlorophenyl)-5-trifluoromethyl-4,5-dihydroisoxazol-3-yl]phenyl}carbazate obtained by Production Example 1 dissolved in 6 mL of tetrahydrofuran was added dropwise at room temperature. After stirring for 30 minutes at the same temperature, 355 mg of methyl iodide was added at room temperature and stirred for 10 hours at the same temperature. Saturated sodium bicarbonate aqueous solution was added to the mixture, and it was extracted by ethyl acetate. The organic layer was dried by anhydrous sodium sulfate and concentrated under reduced pressure. The residue obtained was subjected to silica gel column chromatography, and 697 mg of tert-butyl N'-acetyl-N'-methyl-N-{3-[5-(3,5-dichlorophenyl)-5-trifluoromethyl-4,5-dihydroisoxazol-3-yl]phenyl}carbazate (refer to as hydrazide compound (3) in this specification) was obtained.

### Hydrazide compound (3)

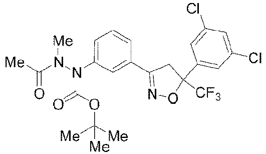

Melting point: 79°C

### Production Example 4:

A quantity of 324 mg of the tert-butyl N'-acetyl-N'-methyl-N-{3-[5-(3,5-dichlorophenyl)-5-trifluoromethyl-4,5-dihydroisoxazol-3-yl]phenyl}carbazate obtained by Production Example 3 was added to 5 mL of trifluoroacetic acid at room temperature and stirred for 30 minutes at the same temperature. The reaction mixture was concentrated under reduced pressure, and ethyl acetate was added to the residue. The organic layer was washed with saturated sodium bicarbonate aqueous solution. The organic layer was dried by anhydrous sodium sulfate and concentrated under reduced pressure. The residue obtained was subjected to silica gel column chromatography, and 290 mg of N-methyl-N'-{3-[5-(3,5-dichlorophenyl)-5-trifluoromethyl-4,5-dihydroisoxazol-3-yl]phenyl}acetohydrazide (refer to as hydrazide compound (4) in this specification) was obtained.

### Hydrazide compound (4)

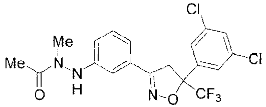

Melting point: 88°C

### Production Example 5:

A quantity of 1.00 g of the crude N-methyl-N-{3-[5-(3,5-dichlorophenyl)-5-trifluoromethyl-4,5-dihydroisoxazol-3-yl]phenyl}hydrazine obtained by Reference Production Example 10 and 180 mg of triethylamine were dissolved in 3 mL of tetrahydrofuran, and 139 mg of acetyl chloride was added dropwise at 0°C and stirred for one hour at the same temperature. Saturated sodium bicarbonate aqueous solution was added to the reaction mixture, and it was extracted with ethyl acetate. The organic layer was dried by anhydrous sodium sulfate and concentrated under reduced pressure. The residue obtained was subjected to silica gel column chromatography, and 498 mg of N'-methyl-N'-{3-[5-(3,5-dichlorophenyl)-5-trifluoromethyl-4,5-dihydroisoxazol-3-yl]phenyl}acetohydrazide (refer to as hydrazide compound (5) in this specification) was obtained.
Hydrazide compound (5) 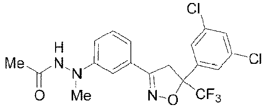 Melting point: 87°C

### Production Example 6:

A quantity of 248 mg of the N'-methyl-N'-{3-[5-(3,5-dichlorophenyl)-5-trifluoromethyl-4,5-dihydroisoxazol-3-yl]phenyl}acetohydrazide obtained by Production Example 5 was dissolved in 2 mL of N,N-dimethylformamide, and 92 mg of sodium carbonate and 87 mg of methyl iodide were added at room temperature. After stirring for five hours at the same temperature, 20 mL of tert-butyl methyl ether was added, and the precipitate was filtered out. The filtrate was concentrated under reduced pressure, the residue obtained was subjected to silica gel column chromatography, and 140 mg of N-methyl-N'-methyl-N'-{3-[5-(3,5-dichlorophenyl)-5-trifluoromethyl-4,5-dihydroisoxazol-3-yl]phenyl}acetohydrazide (refer to as hydrazide compound (6) in this specification) was obtained.

### Hydrazide compound (6)

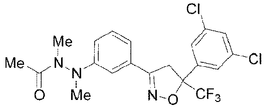

Melting point: 151°C

### Production Example 7:

A quantity of 1.04 g of the crude 3-[5-(3,5-dichlorophenyl)-5-trifluoromethyl-4,5-dihydroisoxazol-3-yl]phenylhydrazine obtained by Reference Production Example 3 and 269 mg of triethylamine were dissolved in 5 mL of tetrahydrofuran, and 391 mg of 3,3,3-trifluoropropionyl chloride was added dropwise at 0°C and stirred for four hours at room temperature. Saturated sodium bicarbonate aqueous solution was added to the reaction mixture, and it was extracted by ethyl acetate. The organic layer was dried by anhydrous sodium sulfate and concentrated under reduced pressure. The residue obtained was subjected to silica gel column chromatography, and 639 mg of N'-{3-[5-(3,5-dichlorophenyl)-5-trifluoromethyl-4,5-dihydroisoxazol-3-yl]phenyl}-3,3,3-trifluoropropionohydrazide (refer to as hydrazide compound (7) in this specification) was obtained.

### Hydrazide compound (7)

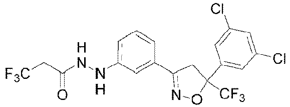

Melting point: 75°C

### Production Example 8:

A quantity of 220 mg of the crude 5-[5-(3,5-dichlorophenyl)-5-trifluoromethyl-4,5-dihydroisoxazol-3-yl]-2-methylphenylhydrazine obtained by Reference Production Example 14 and 43 mg of pyridine were dissolved in 2 mL of ethyl acetate, and 80 mg of 3,3,3-trifluoropropionyl chloride was added dropwise at 0°C and stirred for four hours at room temperature. Water was added to the reaction mixture, and it was extracted by ethyl acetate. The organic layer was dried by anhydrous sodium sulfate and concentrated under reduced pressure. The residue obtained was subjected to silica gel column chromatography, and 162 mg of N'-{5-[5-(3,5-dichlorophenyl)-5-trifluoromethyl-4,5-dihydroisoxazol-3-yl]-2-methylphenyl}-3,3,3-trifluoropropionohydrazide (refer to as hydrazide compound (8) in this specification) was obtained.

### Hydrazide compound (8)

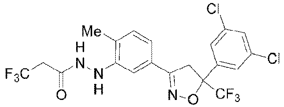

¹H-NMR (CDCl₃) δ: 8.01-7.96 (1H, br m), 7.48-7.42 (3H, m), 7.15-7.04 (3H, m), 6.11-6.00 (1H, m), 4.04-4.00 (1H, m), 3.63 (1H, d, J = 17.1 Hz), 3.25-3.19 (2H, m), 2.26 (3H, s).

### Production Example 9:

A quantity of 220 mg of the crude 5-[5-(3,5-dichlorophenyl)-5-trifluoromethyl-4,5-dihydroisoxazol-3-yl]-2-methylphenylhydrazine obtained by Reference Production Example 14 and 43 mg of pyridine were dissolved in 2 mL of ethyl acetate, and 80 mg of isopropyl chloroformate was added dropwise at 0°C and stirred for four hours at room temperature. Water was added to the reaction mixture, and it was extracted by ethyl acetate. The organic layer was dried by anhydrous sodium sulfate and concentrated under reduced pressure. The residue obtained was subjected to silica gel column chromatography, and 127 mg of isopropyl N'-{5-[5-(3,5-dichlorophenyl)-5-trifluoromethyl-4,5-dihydroisoxazol-3-yl]-2-methylphenyl}carbazate (refer to as hydrazide compound (9) in this specification) was obtained.

### Hydrazide compound (9)

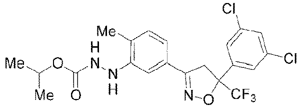

Melting point: 71°C

### Production Example 10:

A quantity of 412 mg of the crude 5-[5-(3,5-dichlorophenyl)-5-trifluoromethyl-4,5-dihydroisoxazol-3-yl]-2-fluorophenylhydrazine obtained by Reference Production Example 18 and 102 mg of triethylamine were dissolved in 6 mL of tetrahydrofuran, and 148 mg of 3,3,3-trifluoropropionyl chloride was added dropwise at 0°C and stirred for four hours at room temperature. Saturated sodium bicarbonate aqueous solution was added to the reaction mixture, and it was extracted by ethyl acetate. The organic layer was dried by anhydrous sodium sulfate and concentrated under reduced pressure. The residue obtained was subjected to silica gel column chromatography, and 167 mg of N'-{5-[5-(3,5-dichlorophenyl)-5-trifluoromethyl-4,5-dihydroisoxazol-3-yl]-2-fluorophenyl}-3,3,3-trifluoropropionohydrazide (refer to as hydrazide compound (10) in this specification) was obtained.

### Hydrazide compound (10)

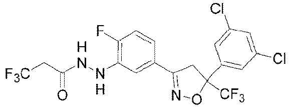

¹H-NMR (CDCl₃) δ: 7.89-7.55 (1H, m), 7.46-7.42 (3H, m), 7.28 (1H, dd, J = 7.9, 1.8 Hz), 7.18-7.00 (2H, m), 6.39-6.29 (1H, m), 4.03-3.98 (1H, m), 3.65-3.60 (1H, m), 3.21 (2H, q, J = 10.3 Hz).

### Production Example 11:

A quantity of 510 mg of the crude 5-[5-(3,5-dichlorophenyl)-5-trifluoromethyl-4,5-dihydroisoxazol-3-yl]-2-chlorophenylhydrazine obtained by Reference Production Example 21 and 123 mg of triethylamine were dissolved in 6 mL of tetrahydrofuran, and 179 mg of 3,3,3-trifluoropropionyl chloride was added dropwise at 0°C and stirred for 2.5 hours at room temperature. Saturated sodium bicarbonate aqueous solution was added to the reaction mixture, and it was extracted by ethyl acetate. The organic layer was dried by anhydrous sodium sulfate and concentrated under reduced pressure. The residue obtained was subjected to silica gel column chromatography, and 175 mg of N'-{5-[5-(3,5-dichlorophenyl)-5-trifluoromethyl-4,5-dihydroisoxazol-3-yl]-2-chlorophenyl}-3,3,3-trifluoropropionohydrazide (refer to as hydrazide compound (11) in this specification) was obtained.

### Hydrazide compound (11)

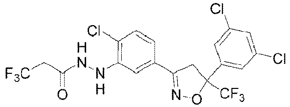

Melting point: 89°C

### Production Example 12:

A quantity of 110 mg of tert-butyl N-{2-chloro-5-[5-(3,5-dichlorophenyl)-5-trifluoromethyl-4,5-dihydroisoxazol-3-yl]phenyl}carbazate obtained by Reference Production Example 23 and 22 mg of triethylamine were dissolved in 2 mL of tetrahydrofuran, and 23 mg of cyclopropane carbonyl chloride was added dropwise at 0°C and stirred for one hour at room temperature. Water was added to the reaction mixture, and it was extracted by ethyl acetate. The organic layer was dried by anhydrous sodium sulfate and concentrated under reduced pressure. The residue obtained was subjected to silica gel column chromatography, and 101 mg of tert-butyl N'-cyclopropanecarbonyl-N-{2-chloro-5-[5-(3,5-dichlorophenyl)-5-trifluoromethyl-4,5-dihydroisoxazol-3-yl]phenyl}carbazate (refer to as hydrazide compound (12) in this specification) was obtained.

### Hydrazide compound (12)

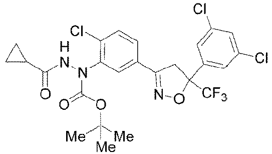

Melting point: 180°C

### Production Example 13:

A quantity of 272 mg of the tert-butyl N'-cyclopropanecarbonyl-N-{2-chloro-5-[5-(3,5-dichlorophenyl)-5-trifluoromethyl-4,5-dihydroisoxazol-3-yl]phenyl}carbazate obtained by Production Example 12 was added to 2 mL of trifluoroacetic acid at room temperature and stirred for one hour at the same temperature. The reaction mixture was concentrated under reduced pressure. Ethyl acetate was added to the residue, and it was washed with saturated sodium bicarbonate aqueous solution. The organic layer was dried by anhydrous sodium sulfate and concentrated under reduced pressure. The residue obtained was subjected to silica gel column chromatography, and 214 mg of N'-{2-chloro-5-[5-(3,5-dichlorophenyl)-5-trifluoromethyl-4,5-dihydroisoxazol-3-yl]phenyl}cyclopropanecarbohydrazide (refer to as hydrazide compound (13) in this specification) was obtained.

### Hydrazide compound (13)

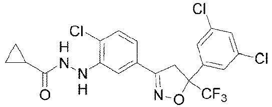

Melting point: 100°C

### Production Example 14:

A quantity of 262 mg of the tert-butyl N-{2-chloro-5-[5-(3,5-dichlorophenyl)-5-trifluoromethyl-4,5-dihydroisoxazol-3-yl]phenyl}carbazate obtained by Reference Production Example 23 and 61 mg of triethylamine were dissolved in 2 mL of tetrahydrofuran, and 72 mg of isovaleryl chloride was added dropwise at 0°C and stirred for nine hours at room temperature. Water was added to the reaction mixture, and it was extracted by ethyl acetate. The organic layer was dried by anhydrous sodium sulfate and concentrated under reduced pressure. The residue obtained was subjected to silica gel column chromatography, and 280 mg of tert-butyl N'-isovaleryl-N-{2-chloro-5-[5-(3,5-dichlorophenyl)-5-trifluoromethyl-4,5-dihydroisoxazol-3-yl]phenyl}carbazate (refer to as hydrazide compound (14) in this specification) was obtained.

### Hydrazide compound (14)

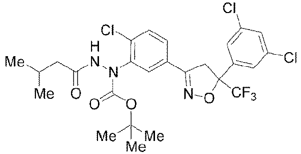

¹H-NMR (CDCl₃) δ: 7.82-7.70 (3H, m), 7.48-7.44 (4H, m), 4.08-4.04 (1 H, m), 3.71-3.66 (1 H, m), 2.18-2.10 (3H, m), 1.45 (9H, d, J = 52.9 Hz), 0.98 (6H, d, J = 6.1 Hz).

### Production Example 15:

A quantity of 280 mg of the tert-butyl N'-isovaleryl-N-{2-chloro-5-[5-(3,5-dichlorophenyl)-5-trifluoromethyl-4,5-dihydroisoxazol-3-yl]phenyl}carbazate obtained by Production Example 14 was added to 2 mL of trifluoroacetic acid at room temperature and stirred for two hours at the same temperature. The reaction mixture was concentrated under reduced pressure. Ethyl acetate was added to the residue, and it was washed with saturated sodium bicarbonate aqueous solution. The organic layer was dried by anhydrous sodium sulfate and concentrated under reduced pressure. The residue obtained was subjected to silica gel column chromatography, and 222 mg of N'-{2-chloro-5-[5-(3,5-dichlorophenyl)-5-trifluoromethyl-4,5-dihydroisoxazol-3-yl]phenyl}isovalerohydrazide (refer to as hydrazide compound (15) in this specification) was obtained.

### Hydrazide compound (15)

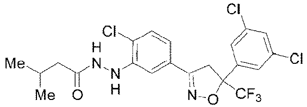

Melting point: 84°C

### Production Example 16:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 57 mg of triethylamine were dissolved in 1.5 mL of tetrahydrofuran, and 79 mg of benzoyl chloride was added dropwise at 0°C and stirred for two hours at room temperature. The reaction mixture was concentrated under reduced pressure. The residue obtained was subjected to silica gel column chromatography, and 220 mg of N'-{5-[5-(3,5-dichlorophenyl)-5-trifluoromethyl-4,5-dihydroisoxazol-3-yl]-2-chlorophenyl}benzohydrazide (refer to as hydrazide compound (16) in this specification) was obtained.

### Hydrazide compound (16)

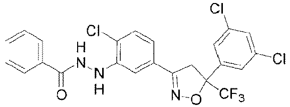

Melting point: 105°C

### Production Example 17:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 57 mg of triethylamine were dissolved in 2 mL of tetrahydrofuran, and 90 mg of 4,4,4-trifluorobutyryl chloride was added dropwise at 0°C and stirred for two hours at room temperature. The reaction mixture was concentrated under reduced pressure. The residue obtained was subjected to silica gel column chromatography, and 201 mg of N'-{5-[5-(3,5-dichlorophenyl)-5-trifluoromethyl-4,5-dihydroisoxazol-3-yl]-2-chlorophenyl}-4,4,4-trifluorobutyrohydrazide (refer to as hydrazide compound (17) in this specification) was obtained.

### Hydrazide compound (17)

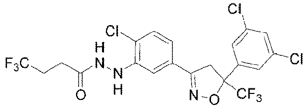

Melting point: 82°C

### Production Example 18:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 57 mg of triethylamine were dissolved in 4 mL of tetrahydrofuran, and 44 mg of acetyl chloride was added dropwise at 0°C and stirred for two hours at room temperature. The reaction mixture was concentrated under reduced pressure. The residue obtained was subjected to silica gel column chromatography, and 168 mg of N'-{5-[5-(3,5-dichlorophenyl)-5-trifluoromethyl-4,5-dihydroisoxazol-3-yl]-2-chlorophenyl}acetohydrazide (refer to as hydrazide compound (18) in this specification) was obtained.

### Hydrazide compound (18)

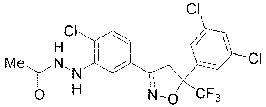

Melting point: 94°C

### Production Example 19:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 57 mg of triethylamine were dissolved in 4 mL of tetrahydrofuran, and 52 mg of propionyl chloride was added dropwise at 0°C and stirred for two hours at room temperature. The reaction mixture was concentrated under reduced pressure. The residue obtained was subjected to silica gel column chromatography, and 195 mg of N'-{5-[5-(3,5-dichlorophenyl)-5-trifluoromethyl-4,5-dihydroisoxazol-3-yl]-2-chlorophenyl}propionohydrazide (refer to as hydrazide compound (19) in this specification) was obtained.

### Hydrazide compound (19)

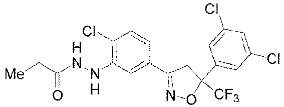

Melting point: 92°C

### Production Example 20:

A quantity of 260 mg of the crude 5-[5-(3,5-dichlorophenyl)-5-trifluoromethyl-4,5-dihydroisoxazol-3-yl]-2-chlorophenylhydrazine obtained by Reference Production Example 21 and 60 mg of triethylamine were dissolved in 2 mL of tetrahydrofuran, and 150 mg of trifluoroacetic anhydride was added dropwise at 0°C and stirred for two hours at room temperature. The reaction mixture was concentrated under reduced pressure. The residue obtained was subjected to silica gel column chromatography, and 175 mg of N'-{5-[5-(3,5-dichlorophenyl)-5-trifluoromethyl-4,5-dihydroisoxazol-3-yl]-2-chlorophenyl}-2,2,2-trifluoroacetohydrazide (refer to as hydrazide compound (20) in this specification) was obtained.

### Hydrazide compound (20)

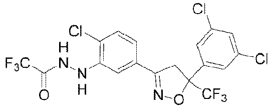

Melting point: 64°C

### Production Example 21:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 95 mg of triethylamine were dissolved in 4 mL of tetrahydrofuran, and 84 mg of nicotinoyl chloride hydrochloride was added dropwise at 0°C and stirred for two hours at room temperature. The reaction mixture was concentrated under reduced pressure. The residue obtained was subjected to silica gel column chromatography, and 198 mg of N'-{5-[5-(3,5-dichlorophenyl)-5-trifluoromethyl-4,5-dihydroisoxazol-3-yl]-2-chlorophenyl}nicotinohydrazide (refer to as hydrazide compound (21) in this specification) was obtained.

### Hydrazide compound (21)

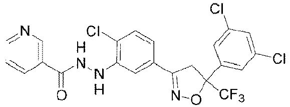

Melting point: 205°C

### Production Example 22:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 95 mg of triethylamine were dissolved in 4 mL of tetrahydrofuran, and 84 mg of isonicotinoyl chloride hydrochloride was added dropwise at 0°C and stirred for two hours at room temperature. The reaction mixture was concentrated under reduced pressure. The residue obtained was subjected to silica gel column chromatography, and 169 mg of N'-{5-[5-(3,5-dichlorophenyl)-5-trifluoromethyl-4,5-dihydroisoxazol-3-yl]-2-chlorophenyl}isonicotinohydrazide (refer to as hydrazide compound (22) in this specification) was obtained.
Hydrazide compound (22) 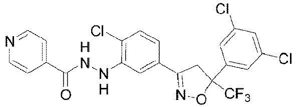 Melting point: 115°C

### Production Example 23:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 52 mg of triethylamine were dissolved in 4 mL of tetrahydrofuran, and 62 mg of pivaloyl chloride was added dropwise at 0°C and stirred for two hours at room temperature. The reaction mixture was concentrated under reduced pressure. The residue obtained was subjected to silica gel column chromatography, and 198 mg of N'{5-[5-(3,5-dichlorophenyl)-5-trifluoromethyl-4,5-dihydroisoxazol-3-yl]-2-chlorophenyl}pivalohydrazide (refer to as hydrazide compound (23) in this specification) was obtained.

### Hydrazide compound (23)

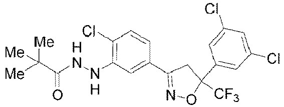

Melting point: 106°C

### Production Example 24:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 57 mg of triethylamine were dissolved in 4 mL of tetrahydrofuran, and 67 mg of dimethylcarbamoyl chloride was added dropwise at 0°C and stirred for two hours at room temperature. The reaction mixture was concentrated under reduced pressure. The residue obtained was subjected to silica gel column chromatography, and 70 mg of 4,4-dimethyl-1-{5-[5-(3,5-dichlorophenyl)-5-trifluoromethyl-4,5-dihydroisoxazol-3-yl]-2-chlorophenyl}semicarbazide (refer to as hydrazide compound (24) in this specification) was obtained.

### Hydrazide compound (24)

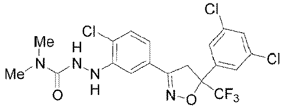

Melting point: 212°C

### Production Example 25:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 51 mg of triethylamine were dissolved in 4 mL of tetrahydrofuran, and 37 mg of ethyl isocyanate was added dropwise at 0°C and stirred for two hours at room temperature. The reaction mixture was concentrated under reduced pressure. The residue obtained was subjected to silica gel column chromatography, and 149 mg of 4-ethyl-1-{5-[5-(3,5-dichlorophenyl)-5-trifluoromethyl-4,5-dihydroisoxazol-3-yl]-2-chlorophenyl}semicarbazide (refer to as hydrazide compound (25) in this specification) was obtained.

### Hydrazide compound (25)

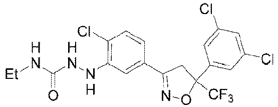

Melting point: 102°C

### Production Example 26:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 57 mg of triethylamine were dissolved in 4 mL of tetrahydrofuran, and 79 mg of phenyl acetyl chloride was added dropwise at 0°C and stirred for two hours at room temperature. The reaction mixture was concentrated under reduced pressure. The residue obtained was subjected to silica gel column chromatography, and 211 mg of N'-{5-[5-(3,5-dichlorophenyl)-5-trifluoromethyl-4,5-dihydroisoxazol-3-yl]-2-chlorophenyl}phenylacetohydrazide (refer to as hydrazide compound (26) in this specification) was obtained.

### Hydrazide compound (26)

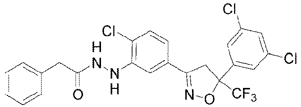

Melting point: 173°C

### Production Example 27:

A quantity of 500 mg of tert-butyl N-{2-chloro-5-[5-(3,5-dichlorophenyl)-5-trifluoromethyl-4,5-dihydroisoxazol-3-yl]phenyl}carbazate obtained by Reference Production Example 23 and 122 mg of acrylic acid were dissolved in 2 mL of N,N-dimethylformamide, and 319 mg of 1-ethyl-3-(3-dimethylaminopropyl)carbodiimide hydrochloride was added at room temperature and stirred for three hours. Water was added to the reaction mixture, and it was extracted by ethyl acetate. The organic layer was dried by anhydrous sodium sulfate and concentrated under reduced pressure. The residue obtained was subjected to silica gel column chromatography, and 384 mg of tert-butyl N'-acryloyl-N-{2-chloro-5-[5-(3,5-dichlorophenyl)-5-trifluoromethyl-4,5-dihydroisoxazol-3-yl]phenyl}carbazate (refer to as hydrazide compound (27) in this specification) was obtained.

### Hydrazide compound (27)

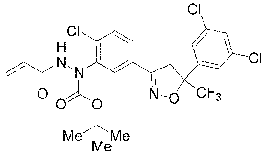

Melting point: 119°C

### Production Example 28:

A quantity of 2 mL of trifluoroacetic acid was added at room temperature to 309 mg the of the tert-butyl N'-acryloyl-N-{2-chloro-5-[5-(3,5-dichlorophenyl)-5-trifluoromethyl-4,5-dihydroisoxazol-3-yl]phenyl}carbazate obtained by Production Example 27 and stirred for two hours at the same temperature. The reaction mixture was concentrated under reduced pressure. Ethyl acetate was added to the residue, and the organic layer was washed with saturated sodium bicarbonate aqueous solution. The organic layer was dried by anhydrous sodium sulfate and concentrated under reduced pressure. The residue obtained was subjected to silica gel column chromatography, and 238 mg of N'-{2-chloro-5-[5-(3,5-dichlorophenyl)-5-trifluoromethyl-4,5-dihydroisoxazol-3-yl]phenyl}acrylohydrazide (refer to as hydrazide compound (28) in this specification) was obtained.

### Hydrazide compound (28)

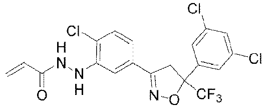

Melting point: 90°C

### Production Example 29:

A quantity of 200 mg of the N-methyl-N-{2-chloro-5-[5-(3,5-dichlorophenyl)-5-trifluoromethyl-4,5-dihydroisoxazol-3-yl]phenyl}hydrazine obtained by Reference Production Example 28 and 57 mg of triethylamine were dissolved in 2.0 mL of tetrahydrofuran, and 58 mg of cyclopropane carbonyl chloride was added dropwise at room temperature and stirred for 30 minutes at the same temperature. The reaction mixture was concentrated under reduced pressure. The residue obtained was subjected to silica gel column chromatography, and 225 mg of N'-methyl-N'{2-chloro-5-[5-(3,5-dichlorophenyl)-5-trifluoromethyl-4,5-dihydroisoxazol-3-yl]phenyl}cyclopropanecarbohydrazide (refer to as hydrazide compound (29) in this specification) was obtained.

### Hydrazide compound (29)

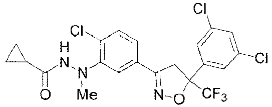

Melting point: 176°C

### Production Example 30:

A quantity of 200 mg of the N-methyl-N-{2-chloro-5-[5-(3,5-dichlorophenyl)-5-trifluoromethyl-4,5-dihydroisoxazol-3-yl]phenyl}hydrazine obtained by Reference Production Example 28 and 57 mg of triethylamine were dissolved in 2.0 mL of tetrahydrofuran, and 81 mg of 3,3,3-trifluoropropionyl chloride was added dropwise at room temperature. After stirring for 30 minutes at the same temperature, the reaction mixture was concentrated under reduced pressure. The residue obtained was subjected to silica gel column chromatography, and 241 mg of N'-methyl-N'-{2-chloro-5-[5-(3,5-dichlorophenyl)-5-trifluoromethyl-4,5-dihydroisoxazol-3-yl]phenyl}-3,3,3-trifluoropropionohydrazide (refer to as hydrazide compound (30) in this specification) was obtained.

### Hydrazide compound (30)

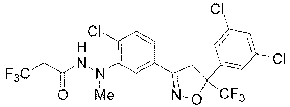

Melting point: 81°C

### Production Example 31:

A quantity of 200 mg of the N-methyl-N-{2-chloro-5-[5-(3,5-dichlorophenyl)-5-trifluoromethyl-4,5-dihydroisoxazol-3-yl]phenyl}hydrazine obtained by Reference Production Example 28 and 57 mg of triethylamine were dissolved in 2.0 mL of tetrahydrofuran, and 88 mg of 4,4,4-trifluorobutyryl chloride was added dropwise at room temperature. After stirring for one hour at the same temperature, the reaction mixture was concentrated under reduced pressure. The residue obtained was subjected to silica gel column chromatography, and 258 mg of N'-methyl-N'-{2-chloro-5-[5-(3,5-dichlorophenyl)-5-trifluoromethyl-4,5-dihydroisoxazol-3-yl]phenyl}-4,4,4-trifluorobutyrohydrazide (refer to as hydrazide compound (31) in this specification) was obtained.

### Hydrazide compound (31)

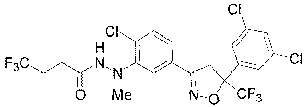

Melting point: 77°C

### Production Example 32:

A quantity of 200 mg of the N-methyl-N-{2-chloro-5-[5-(3,5-dichlorophenyl)-5-trifluoromethyl-4,5-dihydroisoxazol-3-yl]phenyl}hydrazine obtained by Reference Production Example 28 and 57 mg of triethylamine were dissolved in 2.0 mL of tetrahydrofuran, and 43 mg of acetyl chloride was added dropwise at room temperature. After stirring for one hour at the same temperature, the reaction mixture was concentrated under reduced pressure. The residue obtained was subjected to silica gel column chromatography, and 204 mg of N'-methyl-N'-{2-chloro-5-[5-(3,5-dichlorophenyl)-5-trifluoromethyl-4,5-dihydroisoxazol-3-yl]phenyl}acetohydrazide (refer to as hydrazide compound (32) in this specification) was obtained.

### Hydrazide compound (32)

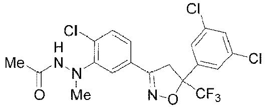

¹H-NMR (CDCl₃) δ: 7.88-7.24 (7H, m), 4.09-4.04 (1 H, m), 3.70-3.66 (1 H, m), 3.29-3.07 (3H, m), 2.17-1.91 (3H, m).

### Production Example 33:

A quantity of 525 mg of the tert-butyl N-{2-chloro-5-[5-(3,5-dichlorophenyl)-5-trifluoromethyl-4,5-dihydroisoxazol-3-yl]phenyl}carbazate obtained by Reference Production Example 23 and 121 mg of triethylamine were dissolved in 4 mL of tetrahydrofuran, and 223 mg of 4-bromobutyryl chloride was added dropwise at room temperature and stirred for one hour. Water was added to the reaction mixture, and it was extracted by ethyl acetate. The organic layer was dried by anhydrous sodium sulfate and concentrated under reduced pressure, and 699 mg of crude tert-butyl N'-(4-bromobutyryl)-N-{2-chloro-5-[5-(3,5-dichlorophenyl)-5-trifluoromethyl-4,5-dihydroisoxazol-3-yl]phenyl}carbazate (refer to as hydrazide compound (33) in this specification) was obtained.

### Hydrazide compound (33)

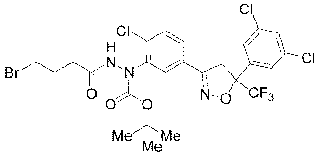

### Production Example 34:

A quantity of 2 mL of trifluoroacetic acid was added to 309 mg of the tert-butyl N'-(4-bromobutyryl)-N-{2-chloro-5-[5-(3,5-dichlorophenyl)-5-trifluoromethyl-4,5-dihydroisoxazol-3-yl]phenyl}carbazate obtained by Production Example 33 and stirred for two hours at room temperature. The reaction mixture was concentrated under reduced pressure. Ethyl acetate was added to the residue, and the organic layer was washed with saturated sodium bicarbonate aqueous solution. The organic layer was dried by anhydrous sodium sulfate and concentrated under reduced pressure. The residue obtained was subjected to silica gel column chromatography, and 573 mg of N'-{2-chloro-5-[5-(3,5-dichlorophenyl)-5-trifluoromethyl-4,5-dihydroisoxazol-3-yl]phenyl}-4-bromobutyrohydrazide (refer to as hydrazide compound (34) in this specification) was obtained.

### Hydrazide compound (34)

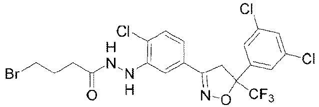

Melting point: 59°C

### Production Example 35:

A quantity of 350 mg of the tert-butyl N-{2-chloro-5-[5-(3,5-dichlorophenyl)-5-trifluoromethyl-4,5-dihydroisoxazol-3-yl]phenyl}carbazate obtained by Reference Production Example 23 and 187 mg of 5,5,5-trifluoropentanoic acid were dissolved in 2 mL of N,N-dimethylformamide, and 153 mg of 1-ethyl-3-(3-dimethylaminopropyl)carbodiimide hydrochloride was added at room temperature and stirred for three hours. Water was added to the reaction mixture, and it was extracted by ethyl acetate. The organic layer was dried by anhydrous sodium sulfate and concentrated under reduced pressure, and 350 mg of crude tert-butyl N'-(5,5,5-trifluoropentanoyl)-N-{2-chloro-5-[5-(3,5-dichlorophenyl)-5-trifluoromethyl-4,5-dihydroisoxazol-3-yl]phenyl}carbazate (refer to as hydrazide compound (35) in this specification) was obtained.

### Hydrazide compound (35)

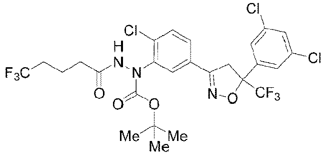

### Production Example 36:

A quantity of 2 mL of trifluoroacetic acid was added to 350 mg of the crude tert-butyl N'-(5,5,5-trifluoropentanoyl)-N-{2-chloro-5-[5-(3,5-dichlorophenyl)-5-trifluoromethyl-4,5-dihydroisoxazol-3-yl]phenyl}carbazate obtained by Production Example 35 at room temperature and stirred for two hours at the same temperature. The reaction mixture was concentrated under reduced pressure. Ethyl acetate was added to the residue, and the organic layer was washed with saturated sodium bicarbonate aqueous solution. The organic layer was dried by anhydrous sodium sulfate and concentrated under reduced pressure. The residue obtained was subjected to silica gel column chromatography, and 269 mg of N'-{2-chloro-5-[5-(3,5-dichlorophenyl)-5-trifluoromethyl-4,5-dihydroisoxazol-3-yl]phenyl}-5,5,5-trifluoropentanohydrazide (refer to as hydrazide compound (36) in this specification) was obtained.

### Hydrazide compound (36)

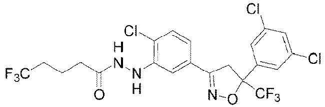

Melting point: 163°C

### Production Example 37:

A quantity of 367 mg of the tert-butyl N-{2-chloro-5-[5-(3,5-dichlorophenyl)-5-trifluoromethyl-4,5-dihydroisoxazol-3-yl]phenyl}carbazate obtained by Reference Production Example 23 and 84 mg of triethylamine were dissolved in 2 mL of tetrahydrofuran, and 91 mg of methoxyacetyl chloride was added dropwise at room temperature and stirred for one hour. Ethyl acetate was added to the reaction mixture, and the organic layer was washed by water. The organic layer was dried by anhydrous sodium sulfate and concentrated under reduced pressure, and 377 mg of crude tert-butyl N'-methoxyacetyl-N-{2-chloro-5-[5-(3,5-dichlorophenyl)-5-trifluoromethyl-4,5-dihydroisoxazol-3-yl]phenyl}carbazate (refer to as hydrazide compound (37) in this specification) was obtained.

### Hydrazide compound (37)

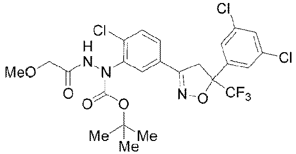

### Production Example 38:

A quantity of 2 mL of trifluoroacetic acid was added to 309 mg of the crude tert-butyl N'-methoxyacetyl-N-{2-chloro-5-[5-(3,5-dichlorophenyl)-5-trifluoromethyl-4,5-dihydroisoxazol-3-yl]phenyl}carbazate obtained by Production Example 37 at room temperature and stirred for two hours at the same temperature. The reaction mixture was concentrated under reduced pressure. Ethyl acetate was added to the residue, and the organic layer was washed with saturated sodium bicarbonate aqueous solution. The organic layer was dried by anhydrous sodium sulfate and concentrated under reduced pressure. The residue obtained was subjected to silica gel column chromatography, and 276 mg of N'-{2-chloro-5-[5-(3,5-dichlorophenyl)-5-trifluoromethyl-4,5-dihydroisoxazol-3-yl]phenyl}methoxyacetohydrazide (refer to as hydrazide compound (38) in this specification) was obtained.

### Hydrazide compound (38)

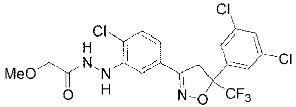

Melting point: 178°C

### Production Example 39:

A quantity of 524 mg of the tert-butyl N-{2-chloro-5-[5-(3,5-dichlorophenyl)-5-trifluoromethyl-4,5-dihydroisoxazol-3-yl]phenyl}carbazate obtained by Reference Production Example 23 and 121 mg of triethylamine were dissolved in 4 mL of tetrahydrofuran, and 186 mg of 3-chloropivaloyl chloride was added dropwise at room temperature and stirred for one hour at the same temperature. Ethyl acetate was added to the reaction mixture, and the organic layer was washed by water. The organic layer was dried by anhydrous sodium sulfate and concentrated under reduced pressure, and 643 mg of crude tert-butyl N'-(3-chloropivaloyl)-N-{2-chloro-5-[5-(3,5-dichlorophenyl)-5-trifluoromethyl-4,5-dihydroisoxazol-3-yl]phenyl}carbazate (refer to as hydrazide compound (39) in this specification) was obtained.

### Hydrazide compound (39)

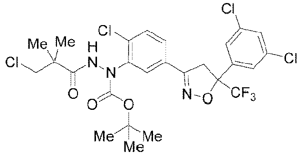

### Production Example 40:

A quantity of 5 mL of trifluoroacetic acid was added to 643 mg of the crude tert-butyl N'-(3-chloropivaloyl)-N-{2-chloro-5-[5-(3,5-dichlorophenyl)-5-trifluoromethyl-4,5-dihydroisoxazol-3-yl]phenyl}carbazate obtained by Production Example 39 and stirred for two hours at room temperature. The reaction mixture was concentrated under reduced pressure. Ethyl acetate was added to the residue, and the organic layer was washed with saturated sodium bicarbonate aqueous solution. The organic layer was dried by anhydrous sodium sulfate and concentrated under reduced pressure, and 520 mg of N'-{2-chloro-5-[5-(3,5-dichlorophenyl)-5-trifluoromethyl-4,5-dihydroisoxazol-3-yl]phenyl}-3-chloropivalohydrazide (refer to as hydrazide compound (40) in this specification) was obtained.

### Hydrazide compound (40)

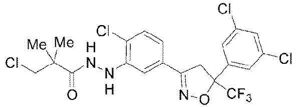

¹H-NMR (CDCl₃) δ: 7.68 (1 H, d, J = 3.2 Hz), 7.47 (2H, d, J = 1.7 Hz), 7.42 (1 H, t, J = 2.0 Hz), 7.32 (1 H, d, J = 8.3 Hz), 7.26 (1H, d, J = 1.5 Hz), 7.06 (1H, dd, J = = 8.2, 2.1 Hz), 6.45 (1 H, d, J = 3.2 Hz), 4.00 (1 H, d, J = 17.6 Hz), 3.68 (2H, s), 3.63 (1H, d, J = 17.6 Hz), 1.42 (3H, s), 1.41 (3H, s).

### Production Example 41:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 56 mg of triethylamine were dissolved in 4 mL of tetrahydrofuran, and 103 mg of 4-nitrobenzoyl chloride was added at 0°C and stirred for 10 minutes at room temperature. The reaction mixture was concentrated under reduced pressure. The residue obtained was subjected to silica gel column chromatography, and 166 mg of N'-{5-[5-(3,5-dichlorophenyl)-5-trifluoromethyl-4,5-dihydroisoxazol-3-yl]-2-chlorophenyl}-4-nitrobenzohydrazide (refer to as hydrazide compound (41) in this specification) was obtained.

### Hydrazide compound (41)

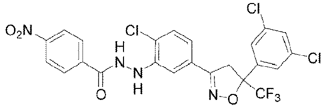

Melting point: 231°C

### Production Example 42:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 57 mg of triethylamine were dissolved in 4 mL of tetrahydrofuran, and 50 mg of butyryl chloride was added at 0°C and stirred for 20 minutes at room temperature. The reaction mixture was concentrated under reduced pressure. The residue obtained was subjected to silica gel column chromatography, and 121 mg of N'-{5-[5-(3,5-dichlorophenyl)-5-trifluoromethyl-4,5-dihydroisoxazol-3-yl]-2-chlorophenyl}butyrohydrazide (refer to as hydrazide compound (42) in this specification) was obtained.

### Hydrazide compound (42)

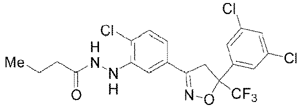

Melting point: 82°C

### Production Example 43:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 57 mg of triethylamine were dissolved in 4 mL of tetrahydrofuran, and 57 mg of pentanoyl chloride was added at 0°C and stirred for two hours at room temperature. The reaction mixture was concentrated under reduced pressure. The residue obtained was subjected to silica gel column chromatography, and 164 mg of N'-{5-[5-(3,5-dichlorophenyl)-5-trifluoromethyl-4,5-dihydroisoxazol-3-yl]-2-chlorophenyl}pentanohydrazide (refer to as hydrazide compound (43) in this specification) was obtained.

### Hydrazide compound (43)

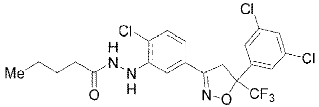

Melting point: 89°C

### Production Example 44:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 57 mg of triethylamine were dissolved in 4 mL of tetrahydrofuran, and 63 mg of hexanoyl chloride was added at 0°C and stirred for 20 minutes at room temperature. The reaction mixture was concentrated under reduced pressure. The residue obtained was subjected to silica gel column chromatography, and 134 mg of N'-{5-[5-(3,5-dichlorophenyl)-5-trifluoromethyl-4,5-dihydroisoxazol-3-yl]-2-chlorophenyl}hexanohydrazide (refer to as hydrazide compound (44) in this specification) was obtained.

### Hydrazide compound (44)

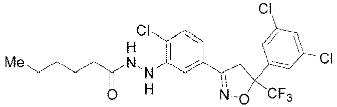

Melting point: 80°C

### Production Example 45:

A quantity of 200 mg of the crude 5-[5-(3,5-dichlorophenyl)-5-trifluoromethyl-4,5-dihydroisoxazol-3-yl]-2-chlorophenylhydrazine obtained by Reference Production Example 21 and 57 mg of triethylamine were dissolved in 4 mL of tetrahydrofuran, and 78 mg of cinnamoyl chloride was added at 0°C and stirred for 20 minutes at room temperature. The reaction mixture was concentrated under reduced pressure. The residue obtained was subjected to silica gel column chromatography, and 161 mg of N'-{5-[5-(3,5-dichlorophenyl)-5-trifluoromethyl-4,5-dihydroisoxazol-3-yl]-2-chlorophenyl}-3-phenylacrylohydrazide (refer to as hydrazide compound (45) in this specification) was obtained.

### Hydrazide compound (45)

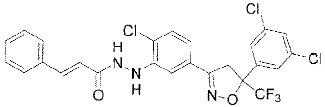

Melting point: 205°C

### Production Example 46:

A quantity of 247 mg of the tert-butyl N-{2-chloro-5-[5-(3,5-dichlorophenyl)-5-trifluoromethyl-4,5-dihydroisoxazol-3-yl]phenyl}carbazate obtained by Reference Production Example 23 and 56 mg of triethylamine were dissolved in 2 mL of tetrahydrofuran, and 95 mg of 4-methoxybenzoyl chloride was added at room temperature and stirred for one hour. Ethyl acetate was added to the reaction mixture, and the organic layer was washed by water. The organic layer was dried by anhydrous sodium sulfate and concentrated under reduced pressure, and 240 mg of crude tert-butyl N'-(4-methoxybenzoyl)-N-{2-chloro-5-[5-(3,5-dichlorophenyl)-5-trifluoromethyl-4,5-dihydroisoxazol-3-yl]phenyl}carbazate (refer to as hydrazide compound (46) in this specification) was obtained.

### Hydrazide compound (46)

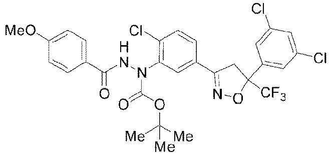

### Production Example 47:

A quantity of 2 mL of trifluoroacetic acid was added to 240 mg of the crude tert-butyl N'-(4-methoxybenzoyl)-N-{2-chloro-5-[5-(3,5-dichlorophenyl)-5-trifluoromethyl-4,5-dihydroisoxazol-3-yl]phenyl}carbazate obtained by Production Example 46 and stirred for one hour at room temperature. The reaction mixture was concentrated under reduced pressure. Ethyl acetate was added to the residue, and the organic layer was washed with saturated sodium bicarbonate aqueous solution. The organic layer was dried by anhydrous sodium sulfate and concentrated under reduced pressure, and 221 mg of N'-{2-chloro-5-[5-(3,5-dichlorophenyl)-5-trifluoromethyl-4,5-dihydroisoxazol-3-yl]phenyl}-4-methoxybenzohydrazide (refer to as hydrazide compound (47) in this specification) was obtained.

### Hydrazide compound (47)

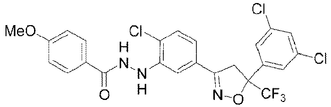

Melting point: 131°C

### Production Example 48:

A quantity of 1.31 mg of the 5-[5-(3,5-dichlorophenyl)-5-trifluoromethyl-4,5-dihydroisoxazol-3-yl]-2-ethylphenylhydrazine obtained by Reference Production Example 31 and 200 mg of triethylamine were dissolved in 4 mL of tetrahydrofuran, and 290 mg of 3,3,3-trifluoropropionyl chloride was added dropwise at room temperature. After stirring for one hour at the same temperature, the reaction mixture was concentrated under reduced pressure. The residue obtained was subjected to silica gel column chromatography, and 426 mg of N'-{5-[5-(3,5-dichlorophenyl)-5-trifluoromethyl-4,5-dihydroisoxazol-3-yl]-2-ethylphenyl}-3,3,3-propionohydrazide (refer to as hydrazide compound (48) in this specification) was obtained.

### Hydrazide compound (48)

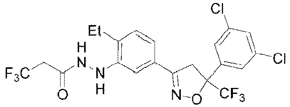

Melting point: 138.7°C

### Production Example 49:

A quantity of 200 mg of the compound obtained by Reference Production Example 33 and 65 mg of triethylamine were dissolved in 2 mL of tetrahydrofuran, and 54 mg of cyclopropane carbonyl chloride was added dropwise at room temperature and stirred for one hour at the same temperature. Ethyl acetate was added to the reaction mixture, and the organic layer was washed with water. The organic layer was dried by anhydrous sodium sulfate and concentrated under reduced pressure. The residue obtained was subjected to silica gel column chromatography, and 216 mg of a compound shown by the following formula (refer to as hydrazide compound (49) in this specification) was obtained.

### Hydrazide compound (49)

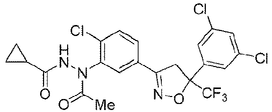

Melting point: 160°C

### Production Example 50:

A quantity of 200 mg of the compound obtained by Reference Production Example 33 and 65 mg of triethylamine were dissolved in 2 mL of tetrahydrofuran, and 55 mg of methoxyacetyl chloride was added dropwise at room temperature and stirred for one hour at the same temperature. Ethyl acetate was added to the reaction mixture, and the organic layer was washed with water. The organic layer was dried by anhydrous sodium sulfate and concentrated under reduced pressure. The residue obtained was subjected to silica gel column chromatography, and 130 mg of a compound shown by the following formula (refer to as hydrazide compound (50) in this specification) was obtained.

### Hydrazide compound (50)

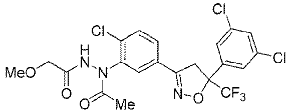

Melting point: 164°C

### Production Example 51:

A quantity of 200 mg of the compound obtained by Reference Production Example 33 and 65 mg of triethylamine were dissolved in 2 mL of tetrahydrofuran, and 40 mg of acetyl chloride was added dropwise at room temperature and stirred for one hour at the same temperature. Ethyl acetate was added to the reaction mixture, and the organic layer was washed with water. The organic layer was dried by anhydrous sodium sulfate and concentrated under reduced pressure. The residue obtained was subjected to silica gel column chromatography, and 140 mg of a compound shown by the following formula (refer to as hydrazide compound (51) in this specification) was obtained.

### Hydrazide compound (51)

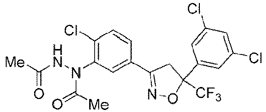

Melting point: 108°C

### Production Example 52:

A quantity of 200 mg of the compound obtained by Reference Production Example 33 and 65 mg of triethylamine were dissolved in 2 mL of tetrahydrofuran, and 72 mg of benzoyl chloride was added dropwise at room temperature and stirred for one hour at the same temperature. Ethyl acetate was added to the reaction mixture, and the organic layer was washed with water. The organic layer was dried by anhydrous sodium sulfate and concentrated under reduced pressure. The residue obtained was subjected to silica gel column chromatography, and 281 mg of a compound shown by the following formula (refer to as hydrazide compound (52) in this specification) was obtained.

### Hydrazide compound (52)

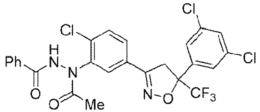

Melting point: 107°C

### Production Example 53:

A quantity of 200 mg of the compound obtained by Reference Production Example 33 and 65 mg of triethylamine were dissolved in 2 mL of tetrahydrofuran, and 90 mg of 4,4,4-trifluorobutyryl chloride was added dropwise at room temperature and stirred for one hour at the same temperature. Ethyl acetate was added to the reaction mixture, and the organic layer was washed with water. The organic layer was dried by anhydrous sodium sulfate and concentrated under reduced pressure. The residue obtained was subjected to silica gel column chromatography, and 207 mg of a compound shown by the following formula (refer to as hydrazide compound (53) in this specification) was obtained.

### Hydrazide compound (53)

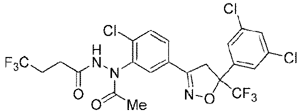

Melting point: 117°C

### Production Example 54:

A quantity of 200 mg of the compound obtained by Reference Production Example 35 and 58 mg of triethylamine were dissolved in 2 mL of tetrahydrofuran, and 38 mg of acetyl chloride was added dropwise at room temperature and stirred for one hour at the same temperature. Ethyl acetate was added to the reaction mixture, and the organic layer was washed with water. The organic layer was dried by anhydrous sodium sulfate and concentrated under reduced pressure. The residue obtained was subjected to silica gel column chromatography, and 156 mg of a compound shown by the following formula (refer to as hydrazide compound (54) in this specification) was obtained.

### Hydrazide compound (54)

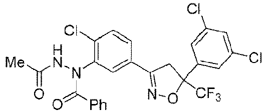

Melting point: 142°C

### Production Example 55:

A quantity of 200 mg of the compound obtained by Reference Production Example 35 and 51 mg of triethylamine were dissolved in 2 mL of tetrahydrofuran, and 54 mg of cyclopropane carbonyl chloride was added dropwise at room temperature and stirred for one hour at the same temperature. Ethyl acetate was added to the reaction mixture, and the organic layer was washed with water. The organic layer was dried by anhydrous sodium sulfate and concentrated under reduced pressure. The residue obtained was subjected to silica gel column chromatography, and 103 mg of a compound shown by the following formula (refer to as hydrazide compound (55) in this specification) was obtained.

### Hydrazide compound (55)

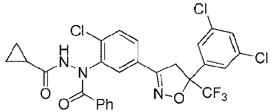

Melting point: 172°C

### Production Example 56:

A quantity of 200 mg of the compound obtained by Reference Production Example 35 and 65 mg of triethylamine were dissolved in 2 mL of tetrahydrofuran, and 78 mg of 4,4,4-trifluorobutyryl chloride was added dropwise at room temperature and stirred for one hour at the same temperature. Ethyl acetate was added to the reaction mixture, and the organic layer was washed with water. The organic layer was dried by anhydrous sodium sulfate and concentrated under reduced pressure. The residue obtained was subjected to silica gel column chromatography, and 211 mg of a compound shown by the following formula (refer to as hydrazide compound (56) in this specification) was obtained.

### Hydrazide compound (56)

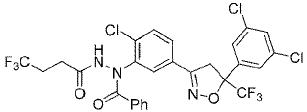

Melting point: 157°C

### Production Example 57:

A quantity of 300 mg of the compound obtained by Reference Production Example 35 and 85 mg of triethylamine were dissolved in 2 mL of tetrahydrofuran, and 79 mg of methoxyacetyl chloride was added dropwise at room temperature and stirred for one hour at the same temperature. Ethyl acetate was added to the reaction mixture, and the organic layer was washed with water. The organic layer was dried by anhydrous sodium sulfate and concentrated under reduced pressure. The residue obtained was subjected to silica gel column chromatography, and 297 mg of a compound shown by the following formula (refer to as hydrazide compound (57) in this specification) was obtained.

### Hydrazide compound (57)

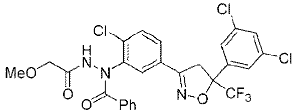

Melting point: 92°C

### Production Example 58:

A quantity of 241 mg of the crude compound obtained by Reference Production Example 21 was dissolved in 2 mL of tetrahydrofuran, and 82 mg of phenyl isocyanate was added dropwise at room temperature and stirred for three hours at room temperature. The reaction mixture was concentrated under reduced pressure. The residue obtained was subjected to silica gel column chromatography, and 187 mg of a compound shown by the following formula (refer to as hydrazide compound (58) in this specification) was obtained.

### Hydrazide compound (58)

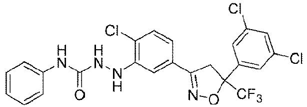

Melting point: 131°C

### Production Example 59:

A quantity of 200 mg of the crude compound obtained by Reference Production Example 21 was dissolved in 6 mL of tetrahydrofuran, and 85 mg of 4-methoxyphenyl isocyanate was added dropwise at room temperature and stirred for three hours at room temperature. The reaction mixture was concentrated under reduced pressure. The residue obtained was subjected to silica gel column chromatography, and 191 mg of a compound shown by the following formula (refer to as hydrazide compound (59) in this specification) was obtained.

### Hydrazide compound (59)

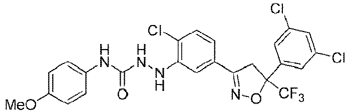

Melting point: 131 °C

### Production Example 60:

A quantity of 196 mg of the crude compound obtained by Reference Production Example 21 was dissolved in 5 mL of tetrahydrofuran, and 136 mg of 4-nitrophenyl isocyanate was added dropwise at room temperature and stirred for three hours at room temperature. The reaction mixture was concentrated under reduced pressure. The residue obtained was subjected to silica gel column chromatography, and 110 mg of a compound shown by the following formula (refer to as hydrazide compound (60) in this specification) was obtained.

### Hydrazide compound (60)

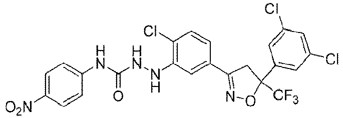

Melting point: 201 °C

### Production Example 61:

A quantity of 220 mg of the crude compound obtained by Reference Production Example 21 was dissolved in 6 mL of tetrahydrofuran, and 79 mg of cyclohexyl isocyanate was added dropwise at room temperature and stirred for three hours at room temperature. The reaction mixture was concentrated under reduced pressure. The residue obtained was subjected to silica gel column chromatography, and 100 mg of a compound shown by the following formula (refer to as hydrazide compound (61) in this specification) was obtained.

### Hydrazide compound (61)

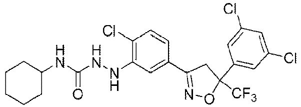

Melting point: 101°C

### Production Example 62:

A quantity of 340 mg of the crude compound obtained by Reference Production Example 21 was dissolved in 6 mL of tetrahydrofuran, and 173 mg of cyclohexyl isothiocyanate was added dropwise at room temperature and stirred for three hours at room temperature. The reaction mixture was concentrated under reduced pressure. The residue obtained was subjected to silica gel column chromatography, and 135 mg of a compound shown by the following formula (refer to as hydrazide compound (62) in this specification) was obtained.

### Hydrazide compound (62)

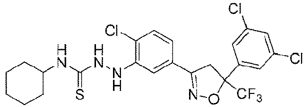

Melting point: 126°C

### Production Example 63:

A quantity of 240 mg of the crude compound obtained by Reference Production Example 21 was dissolved in 6 mL of tetrahydrofuran, and 114 mg of phenyl isothiocyanate was added dropwise at room temperature and stirred for three hours at room temperature. The reaction mixture was concentrated under reduced pressure. The residue obtained was subjected to silica gel column chromatography, and 200 mg of a compound shown by the following formula (refer to as hydrazide compound (63) in this specification) was obtained.

### Hydrazide compound (63)

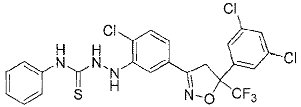

Melting point: 213°C

Reference production examples concerning the manufacture of production intermediates appear below.

### Reference Production Example 1:

A quantity of 249 mg of 3-nitrobenzaldoxime was dissolved in 15 mL of N,N-dimethylformamide, and 201 mg of N-chlorosuccinimide was added at room temperature and stirred for one hour at 60°C. A quantity of 362 mg of 2-(3,5-dichlorophenyl)-3,3,3-trifluoro-1-propene, followed by 152 mg of triethylamine, was added to the reaction solution that had been cooled to room temperature and stirred for six hours at room temperature. Water was added to the reaction mixture, and it was extracted by ethyl acetate. The organic layer was dried by anhydrous sodium sulfate and concentrated under reduced pressure. The residue obtained was subjected to silica gel column chromatography, and 232 mg of 3-[5-(3,5-dichlorophenyl)-5-trifluoromethyl-4,5-dihydroisoxazol-3-yl]nitrobenzene was obtained. 3-[5-(3,5-Dichlorophenyl)-5-trifluoromethyl-4,5-dihydroisoxazol-3-yl]nitrobenzene 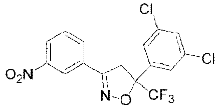 ¹H-NMR (CDCl₃) δ: 8.43 (1 H, br s), 8.34-8.32 (1 H, m), 8.10 (1 H, d, J = 8.0 Hz), 7.67-7.65 (1 H, m), 7.52 (2H, s), 7.45-7.45 (1H, m), 4.14 (1H, d, J = 17.3 Hz), 3.76 (1H, d, J = 17.3 Hz).

### Reference Production Example 2:

A quantity of 192 mg of iron powder (10-20 mesh) was added to 1 mL of 2.5% acetic acid aqueous solution, and 1.5 mL of an ethanol suspension of 232 mg of the 3-[5-(3,5-dichlorophenyl)-5-trifluoromethyl-4,5-dihydroisoxazol-3-yl]nitrobenzene produced by Reference Production Example 1 was added at 75°C. After stirring for 15 minutes at the same temperature, another 300 mg of iron powder was added and stirred for one hour at room temperature. The reaction mixture that had been cooled to room temperature was filtered and washed with ethyl acetate. Water and ethyl acetate were added to the filtrate, and the mixture was extracted. The organic layer was dried by anhydrous sodium sulfate and concentrated under reduced pressure. The residue obtained was subjected to silica gel column chromatography, and 198 mg of 3-[5-(3,5-dichlorophenyl)-5-trifluoromethyl-4,5-dihydroisoxazol-3-yl]aniline was obtained.
3-[5-(3,5-Dichlorophenyl)-5-trifluoromethyl-4,5-dihydroisoxazol-3-yl]aniline 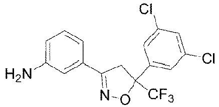 ¹H-NMR (CDCl₃) δ: 7.51 (2H, br s), 7.42 (1H, t, J = 1.9 Hz), 7.20 (1H, t, J = 7.8 Hz), 7.04 (1H, t, J = 1.9 Hz), 6.95-6.93 (1H, m), 6.77-6.75 (1H, m), 4.05 (1H, d, J = 17.1 Hz), 3.77 (2H, br s), 3.66 (1H, d, J = 17.1 Hz).

### Reference Production Example 3:

A quantity of 1.0 g of 3-[5-(3,5-dichlorophenyl)-5-trifluoromethyl-4,5-dihydroisoxazol-3-yl]aniline was dissolved in 4 mL of 1,4-dioxane, and 7 mL of concentrated hydrochloric acid was added at room temperature. After stirring for 20 minutes at the same temperature, the solution was cooled to 0°C, and a solution obtained by dissolving 184 mg of sodium nitrite in 4 mL of water was added dropwise. After stirring for 15 minutes at the same temperature, a solution obtained by dissolving 1.11 g of tin(II) chloride in 2 mL of concentrated hydrochloric acid was added dropwise to this reaction solution. 2N sodium hydroxide was added to the reaction mixture and it was neutralized, and the water layer was extracted by ethyl acetate. After drying by anhydrous sodium sulfate, the organic layer was concentrated under reduced pressure, and 1.0 g of crude 3-[5-(3,5-dichlorophenyl)-5-trifluoromethyl-4,5-dihydroisoxazol-3-yl]phenylhydrazine was obtained.
3-[5-(3,5-Dichlorophenyl)-5-trifluoromethyl-4,5-dihydroisoxazol-3-yl]phenylhydrazine

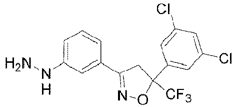

### Reference Production Example 4:

A quantity of 3.0 g of the 3-[5-(3,5-dichlorophenyl)-5-trifluoromethyl-4,5-dihydroisoxazol-3-yl]aniline produced by Reference Production Example 2 and 971 mg of triethylamine were dissolved in 20 mL of tetrahydrofuran, and 1.85 g of trifluoroacetic anhydride was added dropwise at 0°C. After stirring for 15 minutes at the same temperature, saturated sodium bicarbonate aqueous solution was added, and the mixture was extracted by ethyl acetate. The organic layer was dried by anhydrous sodium sulfate and concentrated under reduced pressure, and 3.84 g of N-{3-[5-(3,5-dichlorophenyl)-5-trifluoromethyl-4,5-dihydroisoxazol-3-yl]phenyl}2,2,2-trifluoroacetamide was obtained. N-{3-[5-(3,5-Dichlorophenyl)-5-trifluoromethyl-4,5-dihydroisoxazol-3-yl]phenyl}2,2,2-trifluoroacetamide 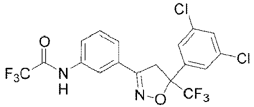 ¹H-NMR (CDCl₃) δ: 8.02 (1 H, br s), 7.94 (1 H, t, J = 1.8 Hz), 7.66-7.64 (1 H, m), 7.57-7.55 (1 H, m), 7.49-7.43 (4H, m), 4.09 (1H, d, J = 17.3 Hz), 3.71 (1H, d, J = 17.3 Hz).

### Reference Production Example 5:

A quantity of 3.84 g of the N-{3-[5-(3,5-dichlorophenyl)-5-trifluoromethyl-4,5-dihydroisoxazol-3-yl]phenyl}2,2,2-trifluoroacetamide produced by Reference Production Example 4 and 8.21 g of di-tert-butyl dicarbonate were dissolved in 20 mL of tetrahydrofuran, and 195 mg of 4-dimethylpyridine was added at room temperature. After stirring for 1.5 hour at the same temperature, ethyl acetate was added to the reaction mixture, and the organic layer was washed with 2N hydrochloric acid and then with saturated sodium bicarbonate aqueous solution. The residue obtained by drying the organic layer with anhydrous sodium sulfate and concentrating under reduced pressure was dissolved in 20 mL of methanol, and 10 mL of water and 2.76 g of sodium carbonate were added at room temperature. After stirring for two hours at the same temperature, water was added, and the mixture was extracted by ethyl acetate. The organic layer was dried by anhydrous sodium sulfate and concentrated under reduced pressure, and 3.5 g of tert-butyl {3-[5-(3,5-dichlorophenyl)-5-trifluoromethyl-4,5-dihydroisoxazol-3-yl]phenyl}carbamate was obtained.
tert-Butyl {3-[5-(3,5-dichlorophenyl)-5-trifluoromethyl-4,5-dihydroisoxazol-3-yl]phenyl}carbamate 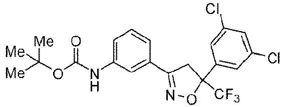 ¹H-NMR (CDCl₃) δ: 7.81 (1 H, s), 7.51 (2H, s), 7.42-7.39 (2H, m), 7.35-7.31 (2H, m), 6.55 (1 H, br s), 4.11 (1H, d, J = 16.9 Hz), 3.70 (1H, d, J = 16.9 Hz), 1.53 (9H, s).

### Reference Production Example 6:

A quantity of 3.50 g of the tert-butyl {3-[5-(3,5-dichlorophenyl)-5-trifluoromethyl-4,5-dihydroisoxazo1-3-yl]phenyl}carbamate produced by Reference Production Example 5 was dissolved in 22 mL of tert-butyl methyl ether, and 23 mL of 28% sodium hydroxide, 7 mL of ammonia water, 2.56 g of ammonium chloride, and 100 mg of trioctylmethyl ammonium chloride were added. A quantity of 53 mL of 5% sodium hypochlorite aqueous solution was added dropwise to this mixture over 20 minutes at room temperature. After stirring for 12 hours at the same temperature, the organic layer was separated. tert-Butyl methyl ether was added to the water layer, and the mixture was again extracted. The combined organic layers were dried by anhydrous sodium sulfate and concentrated under reduced pressure. The residue obtained was subjected to silica gel column chromatography, and 1.52 g of tert-butyl N-{3-[5-(3,5-dichlorophenyl)-5-trifluoromethyl-4,5-dihydroisoxazol-3-yl]phenyl}carbazate was obtained. tert-Butyl N-{3-[5-(3,5-dichlorophenyl)-5-trifluoromethyl-4,5-dihydroisoxazol-3-yl]phenyl}carbazate 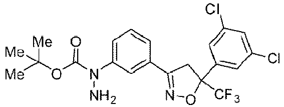 ¹H-NMR (CDCl₃) δ: 7.87 (1 H, s), 7.72-7.29 (6H, m), 4.42 (2H, br s), 4.09 (1 H, d, J = 17.2 Hz), 3.69 (1 H, d, J = 17.2 Hz), 1.53 (9H, s).

### Reference Production Example 7:

A quantity of 3.71 g of the N-{3-[5-(3,5-dichlorophenyl)-5-trifluoromethyl-4,5-dihydroisoxazol-3-yl]phenyl}2,2,2-trifluoroacetamide produced by Reference Production Example 4 and 1.34 g of methyl iodide were dissolved in 20 mL of N,N-dimethylformamide, and 1.31 g of sodium bicarbonate was added at room temperature and stirred for 12 hours at the same temperature. Ethyl acetate was added to the reaction mixture, and it was washed sequentially with 2N hydrochloric acid and saturated sodium bicarbonate aqueous solution. The organic layer was dried by anhydrous sodium sulfate and concentrated under reduced pressure, and 3.70 g of N-methyl-N-{3-[5-(3,5-dichlorophenyl)-5-trifluoromethyl-4,5-dihydroisoxazol-3-yl]phenyl}2,2,2-trifluoroacetamide was obtained.
N-methyl-N-{3-[5-(3,5-dichlorophenyl)-5-trifluoromethyl-4,5-dihydroisoxazol-3-yl]phenyl}2,2,2-trifluoroacetamide 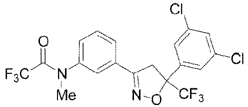 ¹H-NMR (CDCl₃) δ: 7.69-7.35 (7H, m), 4.09 (1H, d, J = 17.3 Hz), 3.71 (1H, d, J = 17.3 Hz), 3.46-3.43 (3H, m).

### Reference Production Example 8:

A quantity of 3.52 g of the N-methyl-N-{3-[5-(3,5-dichlorophenyl)-5-trifluoromethyl-4,5-dihydroisoxazol-3-yl]phenyl}2,2,2-trifluoroacetamide produced by Reference Production Example 7 was dissolved in 15 mL of methanol, and 2.00 g of sodium carbonate and 5 mL of water were added at room temperature. After stirring for two hours at the same temperature, ethyl acetate was added, and the water layer was extracted by ethyl acetate. The organic layer was washed sequentially with 2% hydrochloric acid and saturated sodium bicarbonate aqueous solution. The organic layer was dried by anhydrous sodium sulfate and concentrated under reduced pressure, and 2.80 g of N-methyl-3-[5-(3,5-dichlorophenyl)-5-trifluoromethyl-4,5-dihydroisoxazol-3-yl]aniline was obtained. N-methyl-3-[5-(3,5-dichlorophenyl)-5-trifluoromethyl-4,5-dihydroisoxazol-3-yl]aniline 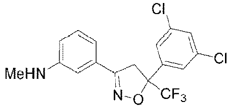 ¹H-NMR (CDCl₃) δ: 7.51 (2H, d, J = 1.2 Hz), 7.41 (1 H, t, J = 1.8 Hz), 7.21 (1 H, t, J = 7.9 Hz), 6.95 (1 H, t, J = 2.0 Hz), 6.87 (1 H, ddd, J = 7.6, 1.5, 1.0 Hz), 6.69 (1 H, ddd, J = 8.3, 2.4, 0.7 Hz), 4.07 (1 H, d, J = 17.3 Hz), 3.85 (1 H, br s), 3.67 (1H, d, J = 17.3 Hz), 2.86 (3H, s).

### Reference Production Example 9:

A quantity of 2.6 g of the N-methyl-N-{3-[5-(3,5-dichlorophenyl)-5-trifluoromethyl-4,5-dihydroisoxazol-3-yl]phenyl}aniline produced by Reference Production Example 8 was dissolved in 4 mL of tetrahydrofuran, and 1.5 mL of concentrated hydrochloric acid and 3.0 mL of water were added at room temperature. After stirring for 15 minutes at room temperature, a solution obtained by dissolving 581 mg of sodium nitrite in 5 mL of water was added dropwise to this mixture at 0°C. After stirring for one hour at the same temperature, saturated sodium bicarbonate aqueous solution was added, and the water layer was extracted by ethyl acetate. The organic layer was dried by anhydrous sodium sulfate and concentrated under reduced pressure, and 2.78 g of N-methyl-N-nitroso-3-[5-(3,5-dichlorophenyl)-5-trifluoromethyl-4,5-dihydroisoxazol-3-yl]aniline was obtained.
N-methyl-N-nitroso-3-[5-(3,5-dichlorophenyl)-5-trifluoromethyl-4,5-dihydroisoxazol-3-yl]aniline 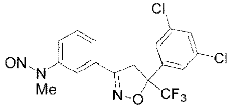 ¹H-NMR (CDCl₃) δ: 7.89-7.88 (1H, m), 7.67-7.64 (2H, m), 7.56-7.53 (3H, m), 7.43-7.43 (1H, m), 4.14 (1H, d, J = 17.4 Hz), 3.76 (1H, d, J = 17.4 Hz), 3.47 (3H, s).

### Reference Production Example 10:

A quantity of 695 mg of zinc was added to a mixture of 1.00 g of the N-methyl-N-nitroso-3-[5-(3,5-dichlorophenyl)-5-trifluoromethyl-4,5-dihydroisoxazol-3-yl]aniline produced by Reference Production Example 9, 2 mL of ethanol, 2 mL of water, and 2 mL of acetic acid at room temperature. After stirring for five hours at room temperature, the mixture was filtered. Anhydrous sodium bicarbonate was added to the filtrate, and the mixture was extracted by chloroform. The organic layer was dried by anhydrous sodium sulfate and concentrated under reduced pressure. The residue obtained was subjected to silica gel column chromatography, and 1.1 g of N-methyl-N-{3-[5-(3,5-dichlorophenyl)-5-trifluoromethyl-4,5-dihydroisoxazol-3-yl]phenyl}hydrazine was obtained.
N-methyl-N-{3-[5-(3,5-dichlorophenyl)-5-trifluoromethyl-4,5-dihydroisoxazol-3-yl]phenyl}hydrazine

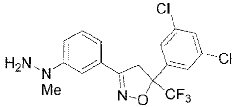

### Reference Production Example 11:

A quantity of 2.24 g of sodium acetate was added at room temperature to a mixture of 3.00 g of 4-methyl-3-nitrobenzaldehyde, 1.64 g of hydroxylamine hydrochloride, 30 mL of ethanol, and 15 mL of water and stirred for one hour at room temperature. The reaction mixture was added to water, and it was extracted by ethyl acetate. The organic layer was dried by anhydrous sodium sulfate and concentrated under reduced pressure, and 2.77 g of 5-hydroxyiminomethyl-2-methylnitrobenzene was obtained.
5-hydroxyiminomethyl-2-methylnitrobenzene 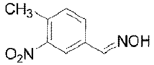 ¹H-NMR (DMSO-d₆) δ: 11.53 (1H, s), 8.24 (1H, s), 8.17 (1H, d, J = = 1.7 Hz), 7.84 (1H, dd, J = 8.0, 1.7 Hz), 7.54 (1 H, d, J = 8.0 Hz), 2.52 (3H, s).

### Reference Production Example 12:

A quantity of 2.77 g of the 5-hydroxyiminomethyl-2-methylnitrobenzene obtained by Reference Production Example 11 and 2.06 g of N-chlorosuccinimide were dissolved in 30 mL of N,N-dimethylformamide and stirred for one hour at 50°C. A quantity of 3.71 g of 2-(3,5-dichlorophenyl)-3,3,3-trifluoro-1-propene, followed by 1.56 g of triethylamine, was added to the reaction solution that had been cooled to room temperature and stirred for six hours at room temperature. Water was added to the reaction mixture, and it was extracted by ethyl acetate. The organic layer was dried by anhydrous sodium sulfate and concentrated under reduced pressure. The residue obtained was subjected to silica gel column chromatography, and 4.99 g of 5-[5-(3,5-dichlorophenyl)-5-trifluoromethyl-4,5-dihydroisoxazol-3-yl]-2-methylnitrobenzene was obtained.
5-[5-(3,5-Dichlorophenyl)-5-trifluoromethyl-4,5-dihydroisoxazol-3-yl]-2-methylnitrobenzene 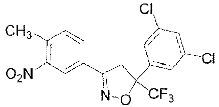 ¹H-NMR (CDCl₃) δ: 8.16 (1H, d, J = 1.9 Hz), 7.90 (1 H, dd, J = 8.1, 1.9 Hz), 7.51 (2H, d, J = 1.2 Hz), 7.45-7.43 (2H, m), 4.11 (1H, d, J = 17.1 Hz), 3.73 (1H, d, J = 17.1 Hz), 2.66 (3H, s).

### Reference Production Example 13:

A quantity of 1.89 g of iron powder (10-20 mesh) was added to 19 mL of 2.5% acetic acid aqueous solution, and 29 mL of an ethanol suspension of 4.62 g of the 5-[5-(3,5-dichlorophenyl)-5-trifluoromethyl-4,5-dihydroisoxazol-3-yl]-2-methylnitrobenzene produced by Reference Production Example 12 was added at 75°C. After stirring for 15 minutes at the same temperature, another 1.80 g of iron powder was added at the same temperature and stirred for one hour at the same temperature. The reaction mixture that had been cooled to room temperature was filtered and washed with ethyl acetate. Saturated sodium bicarbonate aqueous solution and ethyl acetate were added to the filtrate, and the mixture was extracted. The organic layer was dried by anhydrous sodium sulfate and concentrated under reduced pressure. The residue obtained was subjected to silica gel column chromatography, and 3.18 g of 5-[5-(3,5-dichlorophenyl)-5-trifluoromethyl-4,5-dihydroisoxazol-3-yl]-2-methylaniline was obtained.
5-[5-(3,5-dichlorophenyl)-5-trifluoromethyl-4,5-dihydroisoxazol-3-yl]-2-methylaniline 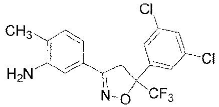 ¹H-NMR (CDCl₃) δ: 7.51 (2H, d, J = 1.4 Hz), 7.41 (1 H, t, J = 1.8 Hz), 7.08 (1 H, d, J = 7.8 Hz), 7.05 (1 H, d, J = 1.8 Hz), 6.88 (1 H, dd, J = 7.8, 1.7 Hz), 4.04 (1 H, d, J = 17.1 Hz), 3.71 (2H, br s), 3.65 (1 H, d, J = 17.1 Hz), 2.19 (3H, s).

### Reference Production Example 14:

A quantity of 2 mL of concentrated hydrochloric acid was added at room temperature to 420 mg of the 5-[5-(3,5-dichlorophenyl)-5-trifluoromethyl-4,5-dihydroisoxazol-3-yl]-2-methylaniline produced by Reference Production Example 13. After stirring for 20 minutes at the same temperature, the solution was cooled to 0°C, and a solution obtained by dissolving 82 mg of sodium nitrite in 0.5 mL of water was added dropwise. After stirring for 10 minutes at the same temperature, a solution obtained by dissolving 451 mg of tin(II) chloride in 0.5 mL of concentrated hydrochloric acid was added dropwise to the reaction solution. Saturated sodium bicarbonate aqueous solution was then added to the reaction mixture, and it was neutralized. The water layer was extracted by ethyl acetate. The organic layer was dried by anhydrous sodium sulfate and concentrated under reduced pressure, and 420 mg of crude 5-[5-(3,5-dichlorophenyl)-5-trifluoromethyl-4,5-dihydroisoxazol-3-yl]-2-methylphenylhydrazine was obtained. 5-[5-(3,5-dichlorophenyl)-5-trifluoromethyl-4,5-dihydroisoxazol-3-yl]-2-methylphenylhydrazine

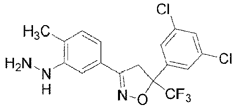

### Reference Production Example 15:

A quantity of 2 g of 4-fluoro-3-nitrobenzaldehyde, 1.07 g of hydroxylamine hydrochloride, and 1.45 g of sodium acetate were dissolved in a mixture of 20 mL of ethanol and 10 mL of water and stirred for six hours at room temperature. The reaction mixture was added to water and extracted by ethyl acetate. A quantity of 1.95 g of 2-fluoro-5-hydroxyiminomethylnitrobenzene was obtained by concentration under reduced pressure after drying the organic layer by anhydrous sodium sulfate.
2-Fluoro-5-hydroxyiminomethylnitrobenzene 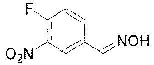 ¹H-NMR (DMSO-D₆) δ: 11.63 (1 H, s), 8.34 (1 H, dd, J = 7.2, 2.2 Hz), 8.28 (1 H, s), 8.04-8.02 (1 H, m), 7.65-7.62 (1 H, m).

### Reference Production Example 16:

A quantity of 1.95 g of the 2-fluoro-5-hydroxyiminomethylnitrobenzene obtained by Reference Production Example 15 and 1.42 g of N-chlorosuccinimide were dissolved in 20 mL of dimethylformamide and stirred for one hour at 60°C. A quantity of 2.55 g of 2-(3,5-dichlorophenyl)-3,3,3-trifluoro-1-propene, followed by 1.07 g of triethylamine, was added to the reaction mixture that had been cooled to room temperature and stirred for six hours at the same temperature. Water was added to the reaction mixture, and it was extracted by ethyl acetate. The organic layer was dried by anhydrous sodium sulfate and concentrated under reduced pressure. The residue obtained was subjected to silica gel column chromatography, and 1.40 g of 5-[5-(3,5-dichlorophenyl)-5-trifluoromethyl-4,5-dihydroisoxazol-3-yl]-2-fluoronitrobenzene was obtained.
5-[5-(3,5-Dichlorophenyl)-5-trifluoromethyl-4,5-dihydroisoxazol-3-yl]-2-fluoronitrobenzene 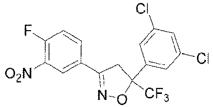 ¹H-NMR (CDCl₃) δ: 8.26 (1 H, dd, J = 6.9, 2.3 Hz), 8.08-8.05 (1 H, m), 7.51 (2H, d, J = 1.2 Hz), 7.45 (1 H, t, J = 1.9 Hz), 7.41 (1H, dd, J = 10.1, 8.7 Hz), 4.11 (1H, d, J = 17.4 Hz), 3.73 (1H, d, J = = 17.9 Hz).

### Reference Production Example 17:

A quantity of 1.85 g of iron powder was added at room temperature to a mixture of 0.2 g of acetic acid and 7 mL of water, and 15 mL of an ethanol suspension of 1.40 g of the 5-[5-(3,5-dichlorophenyl)-5-trifluoromethyl-4,5-dihydroisoxazol-3-yl]-2-fluoronitrobenzene obtained by Reference Production Example 16 was added at 75°C and stirred for 20 minutes at 75°C. The reaction mixture was filtered, and the filtrate was concentrated under reduced pressure. The residue obtained was subjected to silica gel column chromatography, and 806 mg of 5-[5-(3,5-dichlorophenyl)-5-trifluoromethyl-4,5-dihydroisoxazol-3-yl]-2-fluoronitroaniline was obtained.
5-[5-(3,5-Dichlorophenyl)-5-trifluoromethyl-4,5-dihydroisoxazol-3-yl]-2-fluoronitroaniline 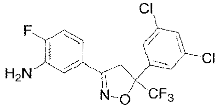 ¹H-NMR (CDCl₃) δ: 7.50 (2H, d, J = 1.4 Hz), 7.42 (1 H, t, J = 1.8 Hz), 7.18 (1H, dd, J = 8.5, 2.2 Hz), 7.01 (1 H, dd, J = 10.6, 8.5 Hz), 6.90-6.87 (1 H, m), 4.03 (1 H, d, J = 17.0 Hz), 3.85 (2H, br s), 3.64 (1 H, d, J = 17.0 Hz).

### Reference Production Example 18:

A quantity of 500 mg of the 5-[5-(3,5-dichlorophenyl)-5-trifluoromethyl-4,5-dihydroisoxazol-3-yl]-2-fluoronitroaniline produced by Reference Production Example 17 was dissolved in 2 mL of 1,4-dioxane, and 4 mL of concentrated hydrochloric acid was added at room temperature. After stirring for 20 minutes at the same temperature, the solution was cooled to 0°C and a solution obtained by dissolving 96 mg of sodium nitrite in 5 mL of water was added dropwise. After stirring for 15 minutes at the same temperature, a solution obtained by dissolving 528 mg of tin(II) chloride in 1 mL of concentrated hydrochloric acid was added dropwise to the reaction solution. Next, after adding 2N sodium hydroxide to the reaction mixture and neutralizing it, the water layer was extracted by ethyl acetate. The organic layer was dried by anhydrous sodium sulfate and concentrated under reduced pressure, and 412 mg of crude 5-[5-(3,5-dichlorophenyl)-5-trifluoromethyl-4,5-dihydroisoxazol-3-yl]-2-fluorophenylhydrazine was obtained.
5-[5-(3,5-Dichlorophenyl)-5-trifluoromethyl-4,5-dihydroisoxazol-3-yl]-2-fluorophenylhydrazine

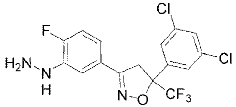

### Reference Production Example 19:

A quantity of 2.92 g of 2-chloro-5-hydroxyiminomethylnitrobenzene and 1.94 g of N-chlorosuccinimide were dissolved in 30 mL of dimethylformamide and stirred for one hour at 60°C. A quantity of 3.50 g of 2-(3,5-dichlorophenyl)-3,3,3-trifluoro-1-propene, followed by 1.46 g of triethylamine, was added to the mixture that had been cooled to room temperature and stirred for six hours. Water was added to the reaction mixture, and it was extracted by ethyl acetate. The organic layer was dried by anhydrous sodium sulfate and concentrated under reduced pressure. The residue obtained was subjected to silica gel column chromatography, and 4.42 g of 5-[5-(3,5-dichlorophenyl)-5-trifluoromethyl-4,5-dihydroisoxazol-3-yl]-2-chloronitrobenzene was obtained.
5-[5-(3,5-Dichlorophenyl)-5-trifluoromethyl-4,5-dihydroisoxazol-3-yl]-2-chloronitrobenzene 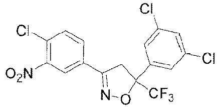 ¹H-NMR (CDCl₃) δ: 8.09 (1H, d, J = 2.1 Hz), 7.89 (1 H, dd, J = 8.5, 2.1 Hz), 7.65 (1 H, d, J = 8.5 Hz), 7.50 (2H, d, J = 1.6 Hz), 7.45 (1 H, t, J = 1.6 Hz), 4.09 (1H, d, J = 17.3 Hz), 3.71 (1 H, d, J = 17.3 Hz).

### Reference Production Example 20:

A quantity of 3.46 g of iron powder was added at room temperature to a mixture of 0.38 g of acetic acid, 15 mL of water, and 30 mL of ethanol, and 2.73 g of the 5-[5-(3,5-dichlorophenyl)-5-trifluoromethyl-4,5-dihydroisoxazol-3-yl]-2-chloronitrobenzene obtained by Reference Production Example 19 was added at 75°C and stirred for 50 minutes at 75°C. The reaction mixture was filtered, and the filtrate was concentrated under reduced pressure. The residue obtained was subjected to silica gel column chromatography, and 1.65 g of 5-[5-(3,5-dichlorophenyl)-5-trifluoromethyl-4,5-dihydroisoxazol-3-yl]-2-chloroaniline was obtained.
5-[5-(3,5-Dichlorophenyl)-5-trifluoromethyl-4,5-dihydroisoxazol-3-yl]-2-chloroaniline 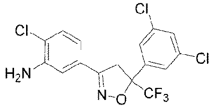 ¹H-NMR (CDCl₃) δ: 7.49 (2H, d, J = 1.7 Hz), 7.42 (1 H, t, J = 1.7 Hz), 7.29 (1 H, d, J = 8.4 Hz), 7.13 (1 H, d, J = 2.0 Hz), 6.89 (1H, dd, J = 8.4, 2.0 Hz), 4.18 (2H, br s), 4.03 (1H, d, J = 17.1 Hz), 3.64 (1H, d, J = 16.4 Hz).

### Reference Production Example 21:

A quantity of 500 mg of the 5-[5-(3,5-dichlorophenyl)-5-trifluoromethyl-4,5-dihydroisoxazol-3-yl]-2-chloroaniline produced by Reference Production Example 20 was dissolved in 2 mL of 1,4-dioxane, and 6 mL of concentrated hydrochloric acid was added at room temperature. After stirring for 20 minutes at the same temperature, the solution was cooled to 0°C, and a solution obtained by dissolving 93 mg of sodium nitrite in 3 mL of water was added dropwise. After stirring for 15 minutes at the same temperature, a solution obtained by dissolving 507 mg of tin(II) chloride in 4 mL of concentrated hydrochloric acid was added dropwise to this reaction solution. After then adding 2N sodium hydroxide to the reaction mixture and neutralizing it, the water layer was extracted by tert-butyl methyl ether. The organic layer was dried by anhydrous sodium sulfate and concentrated under reduced pressure, and 510 mg of crude 5-[5-(3,5-dichlorophenyl)-5-trifluoromethyl-4,5-dihydroisoxazol-3-yl]-2-chlorophenylhydrazine was obtained.
5-[5-(3,5-Dichlorophenyl)-5-trifluoromethyl-4,5-dihydroisoxazol-3-yl]-2-chlorophenylhydrazine

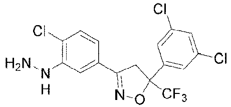

### Reference Production Example 22:

A quantity of 6.3 g of triphosgene was dissolved in 50 mL of toluene, and a solution obtained by dissolving 8.7 g of the 5-[5-(3,5-dichlorophenyl)-5-trifluoromethyl-4,5-dihydroisoxazol-3-yl]-2-chloroaniline obtained by Reference Production Example 20 in 50 mL of toluene and 10 mL of tetrahydrofuran was added dropwise at room temperature. Another 50 mL of toluene was added to the reaction solution, and it was stirred for one hour at 80°C. The reaction mixture that had been cooled to room temperature was concentrated under reduced pressure, and 100 mL of tert-butanol was added. A quantity of 14.6 g of triethylamine was added dropwise to this solution at room temperature, and it was stirred for 16 hours at the same temperature. Saturated sodium bicarbonate aqueous solution was added to the reaction mixture, and it was extracted by chloroform. The organic layer was dried by anhydrous sodium sulfate and concentrated under reduced pressure. The residue obtained was subjected to silica gel column chromatography, and 9.81 g of tert-butyl {2-chloro-5-[5-(3,5-dichlorophenyl)-5-trifluoromethyl-4,5-dihydroisoxazol-3-yl]phenyl}carbamate was obtained.
tert-Butyl {2-chloro-5-[5-(3,5-dichlorophenyl)-5-trifluoromethyl-4,5-dihydroisoxazol-3-yl]phenyl}carbamate 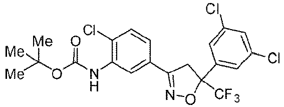 ¹H-NMR (CDCl₃) δ: 8.39 (1H, d, J = 2.1 Hz), 7.52 (2H, d, J = 1.8 Hz), 7.47 (1 H, dd, J = 8.5, 2.1 Hz), 7.42 (1 H, t, J = 1.8 Hz), 7.39 (1H, d, J = = 8.5 Hz), 7.09 (1H, br s), 4.11 (1H, d, J = 17.3 Hz), 3.70 (1H, d, J = = 17.3 Hz), 1.55 (9H, s).

### Reference Production Example 23:

A quantity of 760 mg of sodium hydride (60% in oil) was suspended in 200 mL of tetrahydrofuran, and 50 mL of a tetrahydrofuran solution of 8.80 g of the tert-butyl {2-chloro-5-[5-(3,5-dichlorophenyl)-5-trifluoromethyl-4,5-dihydroisoxazol-3-yl]phenyl}carbamate produced by Reference Production Example 22 was added dropwise at room temperature. After stirring for 20 minutes at the same temperature, 6.0 g of O-(diphenylphosphoryl)hydroxylamine was added at room temperature. After stirring for 15 minutes at the same temperature, water and ethyl acetate were added, and the water layer was extracted by ethyl acetate. The organic layer was dried by anhydrous sodium sulfate and concentrated under reduced pressure. The residue obtained was subjected to silica gel column chromatography, and 6.58 g of tert-butyl N-{2-chloro-5-[5-(3,5-dichlorophenyl)-5-trifluoromethyl-4,5-dihydroisoxazol-3-yl]phenyl}carbazate was obtained.
tert-Butyl N-{2-chloro-5-[5-(3,5-dichlorophenyl)-5-trifluoromethyl-4,5-dihydroisoxazol-3-yl]phenyl}carbazate 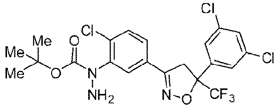 ¹H-NMR (CDCl₃) δ: 7.55-7.44 (6H, m), 4.07 (1H, d, J = 17.1 Hz), 3.68 (1H, d, J = 17.1 Hz), 1.41 (9H, br s).

### Reference Production Example 24:

A quantity of 3.04 g of the 5-[5-(3,5-dichlorophenyl)-5-trifluoromethyl-4,5-dihydroisoxazol-3-yl]-2-chloroaniline obtained by Reference Production Example 20 and 772 mg of triethylamine were dissolved in 20 mL of tetrahydrofuran, and 1.47 g of trifluoroacetic anhydride was added dropwise at 0°C. After stirring for 30 minutes at the same temperature, the reaction mixture was diluted by tert-butyl methyl ether. Ethyl acetate was added to the reaction mixture, and the organic layer was washed sequentially with 2N hydrochloric acid and saturated sodium bicarbonate aqueous solution. The organic layer was dried by anhydrous sodium sulfate and concentrated under reduced pressure, and 3.63 g of N-{2-chloro-5-[5-(3,5-dichlorophenyl)-5-trifluoromethyl-4,5-dihydroisoxazol-3-yl]phenyl}2,2,2-trifluoroacetamide was obtained.
N-{2-chloro-5-[5-(3,5-dichlorophenyl)-5-trifluoromethyl-4,5-dihydroisoxazol-3-yl]phenyl}-2,2,2-trifluoroacetamide 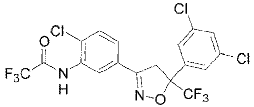 ¹H-NMR (CDCl₃) δ: 8.53 (1 H, d, J = 2.2 Hz), 8.48 (1 H, br s), 7.67 (1 H, dd, J = 8.5, 2.0 Hz), 7.52 (1 H, d, J = 8.5 Hz), 7.50 (2H, s), 7.43-7.42 (1H, m), 4.09 (1H, d, J = 17.3 Hz), 3.71 (1H, d, J = 17.3 Hz).

### Reference Production Example 25:

Sodium hydride (60% in oil) was suspended in 15 mL of N,N-dimethylformamide, and a solution obtained by dissolving 3.6 g of the N-{2-chloro-5-[5-(3,5-dichlorophenyl)-5-trifluoromethyl-4,5-dihydroisoxazol-3-yl]phenyl]2,2,2-trifluoroacetamide obtained by Reference Production Example 24 in 15 mL of N,N-dimethylformamide was added dropwise at room temperature. After stirring for 20 minutes at the same temperature, 1.52 g of methyl iodide was added and stirred for another hour. 2N hydrochloric acid was added to the reaction mixture, and it was extracted by tert-butyl methyl ether. The organic layer was dried by anhydrous sodium sulfate and concentrated under reduced pressure, and 3.73 g of N-methyl-N-{2-chloro-5-[5-(3,5-dichlorophenyl)-5-trifluoromethyl-4,5-dihydroisoxazol-3-yl]phenyl}-2,2,2-trifluoroacetamide was obtained.
N-methyl-N-{2-chloro-5-[5-(3,5-dichlorophenyl)-5-trifluoromethyl-4,5-dihydroisoxazol-3-yl]phenyl}-2,2,2-trifluoroacetamide 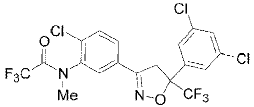 ¹H-NMR (CDCl₃) δ: 7.70-7.40 (6H, m), 4.06 (1H, dd, J = 17.2, 13.0 Hz), 3.73-3.64 (1H, m), 3.33-3.32 (3H, m).

### Reference Production Example 26:

A quantity of 3.6 g of the N-methyl-N-{2-chloro-5-[5-(3,5-dichlorophenyl)-5-trifluoromethyl-4,5-dihydroisoxazol-3-yl]phenyl}-2,2,2-trifluoroacetamide obtained by Reference Production Example 25 was dissolved in 20 mL of methanol, and 1.97 g of potassium carbonate was added at room temperature and stirred for three hours at the same temperature. The precipitate was filtered out, water was added to the filtrate, and the mixture was extracted by tert-butyl methyl ether. The organic layer was dried by anhydrous sodium sulfate and concentrated under reduced pressure, and 2.20 g of N-methyl-2-chloro-5-[5-(3,5-dichlorophenyl)-5-trifluoromethyl-4,5-dihydroisoxazol-3-yl]aniline was obtained.
N-methyl-2-chloro-5-[5-(3,5-dichlorophenyl)-5-trifluoromethyl-4,5-dihydroisoxazol-3-yl]aniline 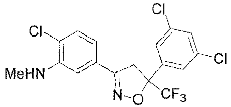 ¹H-NMR (CDCl₃) δ: 7.51 (2H, d, J = 1.8 Hz), 7.42 (1 H, t, J = 1.8 Hz), 7.28 (1 H, d, J = 8.0 Hz), 6.99 (1 H, d, J = 2.0 Hz), 6.78 (1H, dd, J = 8.0, 2.0 Hz), 4.48 (1H, d, J = 5.1 Hz), 4.07 (1H, d, J = 17.2 Hz), 3.67 (1H, d, J = 17.2 Hz), 2.94 (3H, d, J = 5.1 Hz).

### Reference Production Example 27:

A quantity of 2.55 g of the N-methyl-2-chloro-5-[5-(3,5-dichlorophenyl)-5-trifluoromethyl-4,5-dihydroisoxazol-3-yl]aniline produced by Reference Production Example 26 was dissolved in 4 mL of tetrahydrofuran, and 4.5 mL of concentrated hydrochloric acid was added, followed by 5.0 mL of water. After stirring for 10 minutes at room temperature, the mixture was cooled to 0°C, and a solution obtained by dissolving 539 mg of sodium nitrite in 5 mL of water was added dropwise. After stirring for one hour at the same temperature, adding saturated sodium bicarbonate aqueous solution, and neutralizing, the mixture was extracted by ethyl acetate. The organic layer was dried by anhydrous sodium sulfate and concentrated under reduced pressure, and 2.69 g of N-methyl-N-nitroso-2-chloro-5-[5-(3,5-dichlorophenyl)-5-trifluoromethyl-4,5-dihydroisoxazol-3-yl]aniline was obtained.
N-methyl-N-nitroso-2-chloro-5-[5-(3,5-dichlorophenyl)-5-trifluoromethyl-4,5-dihydroisoxazol-3-yl]aniline 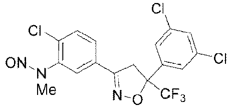 ¹H-NMR (CDCl₃) δ: 7.84-7.31 (6H, m), 4.09 (1H, d, J = = 17.3 Hz), 3.71 (1H, d, J = = 17.3 Hz), 3.41 (3H, s).

### Reference Production Example 28:

A quantity of 2.61 g of the N-methyl-N-nitroso-2-chloro-5-[5-(3,5-dichlorophenyl)-5-trifluoromethyl-4,5-dihydroisoxazol-3-yl]aniline produced by Reference Production Example 27 was dissolved in 4 mL of tetrahydrofuran; 8 mL of ethanol, 8 mL of water, and 8 mL of acetic acid were added at room temperature, and 695 mg of zinc was added to this mixture at room temperature. After stirring for three hours at room temperature, the mixture was filtered. Anhydrous sodium bicarbonate was added to the filtrate, and the mixture was extracted by ethyl acetate. The organic layer was dried by anhydrous sodium sulfate and concentrated under reduced pressure. The residue obtained was subjected to silica gel column chromatography, and 764 mg of N-methyl-N-{2-chloro-5-[5-(3,5-dichlorophenyl)-5-trifluoromethyl-4,5-dihydroisoxazol-3-yl]phenyl}hydrazine was obtained.
N-methyl-N-{2-chloro-5-[5-(3,5-dichlorophenyl)-5-trifluoromethyl-4,5-dihydroisoxazol-3-yl]phenyl}hydrazine 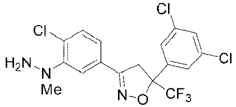 ¹H-NMR (CDCl₃) δ: 7.68-7.67 (1H, m), 7.51 (2H, s), 7.42-7.40 (2H, m), 7.23-7.20 (1H, m), 4.08 (1H, d, J = 17.2 Hz), 3.85 (2H, br s), 3.69 (1H, d, J = 17.2 Hz), 3.06 (3H, s).

### Reference Production Example 29:

A quantity of 4.30 g of 2-ethyl-5-hydroxyiminomethylnitrobenzene and 2.97 g of N-chlorosuccinimide were dissolved in 40 mL of dimethylformamide and stirred for one hour at 60°C. A quantity of 3.5 g of 2-(3,5-dichlorophenyl)-3,3,3-trifluoro-1-propene, followed by 1.7 g of triethylamine, was added to the reaction solution that had been cooled to room temperature and stirred for six hours. Water was added to the reaction mixture, and it was extracted by ethyl acetate. The organic layer was dried by anhydrous sodium sulfate and concentrated under reduced pressure. The residue obtained was subjected to silica gel column chromatography, and 5.74 g of 5-[5-(3,5-dichlorophenyl)-5-trifluoromethyl-4,5-dihydroisoxazol-3-yl]-2-ethylnitrobenzene was obtained.
5-[5-(3,5-dichlorophenyl)-5-trifluoromethyl-4,5-dihydroisoxazol-3-yl]-2-ethylnitrobenzene 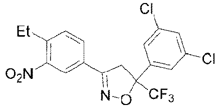 ¹H-NMR (CDCl₃) δ: 8.07 (1H, d, J = 1.9 Hz), 7.91 (1H, dd, J = 8.0, 1.9 Hz), 7.51 (2H, d, J = 1.6 Hz), 7.46 (1H, d, J = 8.0 Hz), 7.44 (1H, t, J = 1.6 Hz), 4.10 (1 H, d, J = 17.3 Hz), 3.72 (1H, d, J = 17.3 Hz), 2.96 (2H, q, J = 7.5 Hz), 1.30 (3H, t, J = 7.5 Hz).

### Reference Production Example 30:

A quantity of 4.33 g of iron power was added at room temperature to a mixture of 0.5 mL of acetic acid, 22 mL of water, and 34 mL of ethanol, and 5.60 g of the 5-[5-(3,5-dichlorophenyl)-5-trifluoromethyl-4,5-dihydroisoxazol-3-yl]-2-ethylnitrobenzene obtained by Reference Production Example 29 was added at 75°C and stirred for three hours at the same temperature. The reaction mixture that had been cooled to room temperature was filtered and washed with ethyl acetate. Saturated sodium bicarbonate aqueous solution was added to the filtrate, and the mixture was extracted by ethyl acetate. A quantity of 5.20 g of 5-[5-(3,5-dichlorophenyl)-5-trifluoromethyl-4,5-dihydroisoxazol-3-yl]-2-ethylaniline was obtained by concentration under reduced pressure after drying the organic layer by anhydrous sodium sulfate.
5-[5-(3,5-Dichlorophenyl)-5-trifluoromethyl-4,5-dihydroisoxazol-3-yl]-2-ethylaniline 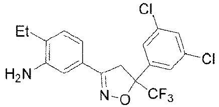 ¹H-NMR (CDCl₃) δ: 7.51 (2H, d, J = 1.7 Hz), 7.41 (1 H, t, J = 1.7 Hz), 7.10 (1 H, d, J = 7.8 Hz), 7.04 (1 H, d, J = 1.7 Hz), 6.93 (1 H, dd, J = 7.8, 1.7 Hz), 4.05 (1 H, d, J = 17.1 Hz), 3.74 (2H, br s), 3.65 (1 H, d, J = 17.1 Hz), 2.52 (2H, q, J = 7.5 Hz), 1.25 (3H, t, J = 7.5 Hz).

### Reference Production Example 31:

A quantity of 1.00 g of the 5-[5-(3,5-dichlorophenyl)-5-trifluoromethyl-4,5-dihydroisoxazol-3-yl]-2-ethylaniline produced by Reference Production Example 30 was dissolved in 2 mL of 1,4-dioxane, and 4 mL of concentrated hydrochloric acid was added at room temperature. After stirring for 20 minutes at the same temperature, the solution was cooled to 0°C, and a solution obtained by dissolving 188 mg of sodium nitrite in 1 mL of water was added dropwise. After stirring for 15 minutes at the same temperature, a solution obtained by dissolving 1.03 g of tin(II) chloride in 2 mL of concentrated hydrochloric acid was added dropwise to the reaction solution. 2N sodium hydroxide was added to the reaction mixture and it was neutralized, and the water layer was extracted by chloroform. The organic layer was dried by anhydrous sodium sulfate and concentrated under reduced pressure, and 1.31 g of crude 5-[5-(3,5-dichlorophenyl)-5-trifluoromethyl-4,5-dihydroisoxazol-3-yl]-2-ethylphenylhydrazine was obtained.
5-[5-(3,5-dichlorophenyl)-5-trifluoromethyl-4,5-dihydroisoxazol-3-yl]-2-ethylphenylhydrazine

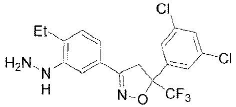

### Reference Production Example 32:

A quantity of 2.0 g of the compound obtained by Reference Production Example 20 was dissolved in 10 mL of acetic anhydride and stirred for 0.5 hour at room temperature. The reaction mixture was concentrated under reduced pressure, and the concentrate was dissolved in ethyl acetate and washed with saturated sodium bicarbonate aqueous solution and then with saturated saline. The organic layer was dried by anhydrous sodium sulfate and concentrated under reduced pressure, and 3.0 g of a crude compound shown by the following formula was obtained. 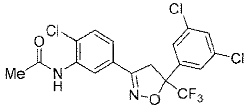 ¹H-NMR (CDCl₃) δ: 8.59 (1H, br s), 7.67 (1H, br s), 7.57 (1H, dd, J = 8.4, 2.1 Hz), 7.50 (2H, d, J = 1.2 Hz), 7.43-7.42 (2H, m), 4.09 (1H, d, J = 17.4 Hz), 3.70 (1H, d, J = 17.4 Hz), 2.28 (3H, s).

### Reference Production Example 33:

A quantity of 2.2 g of the compound obtained by Reference Production Example 32 was dissolved in 30 mL of tert-butyl methyl ether, and 14 mL of 28% sodium hydroxide aqueous solution, 4.5 mL of ammonia water, 1.56 g of ammonium chloride, and 274 mg of trioctylmethyl ammonium chloride were added. A quantity of 32 mL of 5% sodium hypochlorite aqueous solution was added dropwise over 20 minutes to this mixture at room temperature. After stirring for two hours at the same temperature, the organic layer was separated. tert-Butyl methyl ether was added to the water layer, and the mixture was extracted. The combined organic layers were dried by anhydrous sodium sulfate and concentrated under reduced pressure. The residue obtained was subjected to silica gel column chromatography, and 2.0 g of a compound shown by the following formula was obtained. 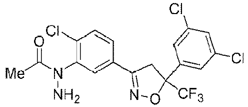 Melting point: 92°C

### Reference Production Example 34:

A quantity of 2.0 g of the compound obtained by Reference Production Example 20 was dissolved in 5 mL of pyridine, and 1.4 g of benzoyl chloride was added at room temperature. After stirring for 0.5 hour at the same temperature, ethyl acetate was added to the reaction mixture, and it was washed with 3% hydrochloric acid. The organic layer was dried by anhydrous sodium sulfate and concentrated under reduced pressure, and 2.4 g of a crude compound shown by the following formula was obtained. 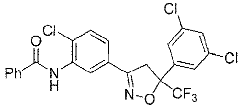 ¹H-NMR (CDCl₃) δ: 8.80 (1H, d), 8.53 (1H, br s), 7.94-7.92 (2H, m), 7.65-7.62 (2H, m), 7.58-7.48 (5H, m), 7.43 (1 H, t), 4.16 (1 H, d), 3.77 (1 H, d).

### Reference Production Example 35:

A quantity of 2.4 g of the compound obtained by Reference Production Example 34 was dissolved in 20 mL of tetrahydrofuran, and 14 mL of 28% sodium hydroxide aqueous solution, 4.5 mL of ammonia water, 2.56 g of ammonium chloride, and 274 mg of trioctylmethyl ammonium chloride were added. A quantity of 48 mL of 5% sodium hypochlorite aqueous solution was added dropwise over one hour to this mixture at room temperature. After stirring for two hours at the same temperature, the organic layer was separated. tert-Butyl methyl ether was added to the water layer, and the mixture was extracted. The combined organic layers were dried by anhydrous sodium sulfate and concentrated under reduced pressure. The residue obtained was subjected to silica gel column chromatography, and 1.8 g of a compound shown by the following formula was obtained. 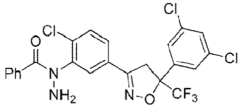 Melting point: 87°C

Formulation examples of the pest control composition of the present invention appear below. "Parts" means "parts by weight."

### Formulation Example 1:

2 parts of one hydrazide compound selected from the group consisting of hydrazide compounds (1)-(63) and 7 parts of pyriproxyfen are dissolved in 37.5 parts of xylene and 37.5 parts of N,N-dimethylformamide. 10 parts of polyoxyethylene styryl phenyl ether and 6 parts of calcium dodecyl benzenesulfonate are added to this, and an emulsion is obtained by stirring and mixing thoroughly.

### Formulation Example 2:

5 parts of one hydrazide compound selected from the group consisting of hydrazide compounds (1)-(63) and 4 parts of pyriproxyfen are dissolved in 37.5 parts of xylene and 37.5 parts of N,N-dimethylformamide. 10 parts of polyoxyethylene styryl phenyl ether and 6 parts of calcium dodecyl benzenesulfonate are added to this, and an emulsion is obtained by stirring and mixing thoroughly.

### Formulation Example 3:

5 parts of Sorpol 5060 (registered trade name of Toho Chemical Co., Ltd.) are added to a mixture of 20 parts of one hydrazide compound selected from the group consisting of hydrazide compounds (1)-(63) and 20 parts of pyriproxyfen and mixed well. 32 parts of Carplex #80 (registered trade name of Shionogi & Co., Ltd., synthetic hydrated silicon oxide fine powder) and 23 parts of 300 mesh diatomaceous earth are added, and a wettable powder is obtained by mixing by a juice mixer.

### Formulation Example 4:

1 part of one hydrazide compound selected from the group consisting of hydrazide compounds (1)-(63), 2 parts of pyriproxyfen, 5 parts of synthetic hydrated silicon oxide fine powder, 5 parts of sodium dodecyl benzenesulfonate, 30 parts of bentonite, and 57 parts of clay are added and mixed by stirring well. An appropriate amount of water is added to the mixture, and the mixture is stirred, made into granules by a granulator, and subjected to flow-through drying to obtain granules.

### Formulation Example 5:

1.5 part of one hydrazide compound selected from the group consisting of hydrazide compounds (1)-(63), 3 parts of pyriproxyfen, 1 part of synthetic hydrated silicon oxide fine powder, 1 part of Driless B (made by Sankyo Co., Ltd.) as flocculant, and 7 parts of clay are mixed well by mortar, then stirred and mixed by a juice mixer. 86.5 parts of cut clay is added to the mixture obtained, and it is adequately stirred and mixed, and a powder is obtained.

### Formulation Example 6:

5 parts of one hydrazide compound selected from the group consisting of hydrazide compounds (1)-(63), 5 parts of pyriproxyfen, 35 parts of white carbon containing 50 parts of polyoxyethylene alkyl ether sulfate ammonium salt, and 55 parts of water are mixed, and a formulation is obtained by grinding finely by a wet grinder.

### Formulation Example 7:

A mixture of 0.2 part of one hydrazide compound selected from the group consisting of hydrazide compounds (1)-(63) and 0.3 part of pyriproxyfen is dissolved in 10 parts of dichloromethane, and an oil is obtained by mixing this with 89.5 parts of Isopar M (isoparaffin: registered trade name of Exxon Mobil Corp.).

### Formulation Example 8:

0.05 part of one hydrazide compound selected from the group consisting of hydrazide compounds (1)-(63), 0.05 part of pyriproxyfen, and 49.9 parts of Neochiozol (Chuo Kasei Co., Ltd.) are placed in an aerosol can. After attaching an aerosol valve, the can is charged with 25 parts of dimethyl ether and 25 parts of LPG, and an oily aerosol is obtained by attaching an actuator.

### Formulation Example 9:

An aerosol container is charged with a dissolved mixture of 0.2 part of one hydrazide compound selected from the group consisting of hydrazide compounds (1)-(63), 0.4 part of pyriproxyfen, 0.01 part of BHT, 5 parts of xylene, 3.39 parts of deodorized kerosene, and 1 part of emulsifier {Atmos 300 (registered trade name of Atmos Chemical Co., Ltd.) and 50 parts of distilled water. A valve is attached, and an aqueous aerosol is obtained by pressurizing and charging with 40 parts of propellant (LPG) through the valve.

### Formulation Example 10:

2 parts of one hydrazide compound selected from the group consisting of hydrazide compounds (1)-(63) and 3 parts of pyriproxyfen are dissolved in 80 parts of diethylene glycol monoethyl ether, 15 parts of propylene carbonate are mixed with this, and a spot-on liquid is obtained.

### Formulation Example 11:

5 parts of one hydrazide compound selected from the group consisting of hydrazide compounds (1)-(63) and 5 parts of pyriproxyfen are dissolved in 70 parts of diethylene glycol monoethyl ether, 20 parts of 2-octyldodecanol are mixed with this, and a pour-on liquid is obtained.

### Formulation Example 12:

60 parts of Nikkol TEALS-42 (Nikko Chemicals Co., Ltd., 42% aqueous solution of triethanolamine lauryl sulfate) and 20 parts of propylene glycol are added to a mixture of 0.25 part of one hydrazide compound selected from the group consisting of hydrazide compounds (1)-(63) and 0.25 part of pyriproxyfen. After stirring and mixing enough to form a homogeneous solution, 19.5 parts of water is added and stirred and mixed adequately to obtain a homogeneous shampoo.

### Formulation Example 13:

80 mg of one hydrazide compound selected from the group consisting of hydrazide compounds (1)-(63), 20 mg of pyriproxyfen, 68.75 mg of lactose, 237.5 mg of corn starch, 43.75 mg of microcrystalline cellulose, 18.75 mg of polyvinyl pyrrolidone, 28.75 mg of sodium carboxymethyl starch, and 2.5 mg of magnesium stearate are mixed completely, and tablets of a suitable size are obtained by compressing the mixture.

### Formulation Example 14:

100 mg of one hydrazide compound selected from the group consisting of hydrazide compounds (1)-(63), 100 mg of pyriproxyfen, 148 mg of lactose, and 2 mg of magnesium stearate are mixed completely, packed into hard shell gelatin capsules or hydroxypropyl methylcellulose capsules, and capsules are obtained.

### Formulation Example 15:

2.5 parts of one hydrazide compound selected from the group consisting of hydrazide compounds (1)-(63) and 2.5 parts of pyriproxyfen are dissolved in 5 parts of Polysorbate 85, 3 parts of benzyl alcohol, and 30 parts of propylene glycol, brought to final volume by water after adjusting the pH to 6.0-6.5 using phosphate buffer, and a liquid for oral administration is obtained.

### Formulation Example 16:

3.6 parts of one hydrazide compound selected from the group consisting of hydrazide compounds (1)-(63), 3.6 parts of pyriproxyfen, and 92.8 parts of Vosco S-55 (made by Maruishi Pharmaceutical Co., Ltd.) are dissolved and mixed at 100°C, poured into a suppository mold, and a suppository is obtained by cooling and solidifying.

### Formulation Example 17:

A mixture of 0.05 g of one hydrazide compound selected from the group consisting of hydrazide compounds (1)-(63) and 0.05 g of pyriproxyfen is dissolved in 2 mL of propylene glycol, a 4.0 x 4.0 cm, 1.2 cm thick porous ceramic plate is impregnated, and a heat-type smoking agent is obtained.

### Formulation Example 18:

2.5 parts of one hydrazide compound selected from the group consisting of hydrazide compounds (1)-(63), 2.5 parts of pyriproxyfen, and 95 parts of ethylene-methyl methacrylate copolymer (proportion of methyl methacrylate in the copolymer: 10 wt%, Acryft WD301, made by Sumitomo Chemical Co., Ltd) are melt mixed by a sealed, pressurized kneader (made by Moriyama Co., Ltd.). The mixture obtained is extruded from a molding machine via a molding die, and 15 cm long, rod-shaped molded articles 3 mm in diameter are obtained.

### Formulation Example 19:

2.5 parts of one hydrazide compound selected from the group consisting of hydrazide compounds (1)-(63), 2.5 parts of pyriproxyfen, and 95 parts of soft vinyl chloride resin are melt mixed by a sealed, pressurized kneader (made by Moriyama Co., Ltd.). The mixture obtained is extruded from a molding machine via a molding die, and 15 cm long, rod-shaped molded articles 3 mm in diameter are obtained.

### Formulation Example 20:

Ten parts of one hydrazide compound selected from the group consisting of hydrazide compounds (1)-(63), 10 parts of pyriproxyfen, 35 parts of white carbon containing 50 parts of polyoxyethylene alkyl ether sulfate ammonium salt, and 55 parts of water are mixed, and a formulation is obtained by grinding finely by a wet grinder.

Test cases below show that the pest control composition of the present invention has an excellent control effect against pests.

### Test Case 1:

Formulations of hydrazide compound and pyriproxyfen obtained by Formulation Example 16 were diluted by water to made the concentration of active ingredients shown in Table 1, and a test chemical was prepared.
A quantity of 0.7 mL of the above test chemical was added to 100 mL of ion-exchanged water. Twenty last instar larvae of *Culex pipiens pallens* were released in the solution. Their survival was examined eight days later, and the mortality rate was determined. The results are shown below in Table 1.

**Table 1:**

| Hydrazide compound + pyriproxyfen | Concentration (ppm w/v) | Mortality rate (%) |
|---|---|---|
| Hydrazide compound (11) + pyriproxyfen | 500 + 500 | 100 |
| Hydrazide compound (13) + pyriproxyfen | 500 + 500 | 100 |
| Hydrazide compound (17) + pyriproxyfen | 500 + 500 | 100 |
| Hydrazide compound (30) + pyriproxyfen | 500 + 500 | 100 |
| Hydrazide compound (31) + pyriproxyfen | 500 + 500 | 100 |
| Hydrazide compound (38) + pyriproxyfen | 500 + 500 | 100 |

The results showed that the pest control compositions of the present invention have high control activity.

### Test Case 2:

Six gram quantities of medium for rearing fleas (mixed to make sand/powdered feed/dry yeast/dry bovine blood = 80/16/3/1 wt%) were placed in vials. Acetone solutions were prepared so that the hydrazide compounds and pyriproxyfen would have the concentrations (wt% versus the medium) shown in Table 2 in the treated medium for rearing fleas. The medium was treated by 1.0 mL of the acetone solution, stirred until homogeneous, and dried. Filter paper (TOYO No. 2; 3.8 cm in diameter) was placed on aluminum dishes 3.8 cm in diameter, and 20 flea eggs were placed on the filter paper using a suitably moistened brush. A quantity of 1.0 g of the dried, treated medium was placed evenly on top of the filter paper on which the eggs rested, and the aluminum dishes were placed in resin petri dishes and stored at a temperature of 26°C and humidity of 85-95%. Medium that had been treated only by acetone was also processed by the same method as a control group. After approximately three weeks, the emergence of the cat fleas was examined, and the emergence inhibition rate was calculated by the following formula.
Corrected emergency inhibition rate = (C -T) ÷ C x 100
C: Emergence rate of untreated control group
T: Emergence rate of treated group
The results are shown below in Table 2.

**Table 2:**

| Hydrazide compound | | Pyriproxyfen | Emergence inhibition rate (%) |
|---|---|---|---|
| Compound | Concentration (%) | Concentration (%) | |
| -- | -- | 10⁻⁸ | 4.0 |
| (17) | 0.4 x 10⁻⁴ | -- | 6.3 |
| (17) | 0.4 x 10⁻⁴ | 10⁻⁸ | 63 |
| (31) | 0.4 x 10⁻⁴ | -- | 34 |
| (31) | 0.4 x 10⁻⁴ | 10⁻⁸ | 86 |

The results showed that the pest control compositions of the present invention have high emergence-inhibiting activity.

The pest control compositions of the present invention have excellent control activity against pests and are useful.

## Claims

1. A pest control composition comprising the following (i) and (ii):
(i) a hydrazide compound shown by formula (1): 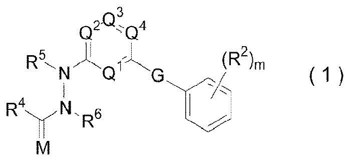 wherein
G represents a group shown by any of the following formulas G-1 to G-3: 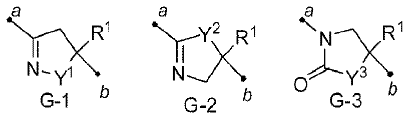 wherein each of a point (a) and point (b) represents a bond, and the point (b) represents a bond with a phenyl ring,
R¹ represents a C₁-C₄ haloalkyl group,
Y¹ represents: an oxygen atom; a sulfur atom; or an NR⁷ group,
Y² represents: an oxygen atom; a sulfur atom; an NR⁷ group; or a methylene group, and
Y³ represents: an oxygen atom; a sulfur atom; an NR⁷ group; or a methylene group, wherein R⁷ represents: a C₁-C₆ alkyl group; a C₂-C₆ alkenyl group; a C₂-C₆ alkynyl grou; a C₃-C₆ cycloalkyl group; a C₄-C₇ cycloalkylalkyl group; a C₂-C₆ alkylcarbonyl group; a C₂-C₆ alkoxycarbonyl group; a C₂-C₆ alkylaminocarbonyl group; a C₃-C₉ dialkylaminocarbonyl group; a phenyl group; a cyano group; a formyl group; or a hydrogen atom,
M represents: an oxygen atom; or a sulfur atom,
Q¹, Q², Q³, and Q⁴ are the same or different, each of which independently represents: a nitrogen atom; or a CR³ group,
wherein each R³ independently represents: a C₁-C₆ alkyl group optionally substituted by a halogen atom; a C₁-C₆ alkoxy group optionally substituted by a halogen atom; a nitro group; a cyano group; a halogen atom; or a hydrogen atom,
m represents an integer of from 0 to 5,
R² represents: a C₁-C₆ alkyl group optionally substituted by a halogen atom; a C₁-C₆ alkoxy group optionally substituted by a halogen atom; a C₁-C₆ alkylthio group; a C₁-C₆ alkylsulfinyl group; a C₁-C₆ alkylsulfonyl group; a nitro group; a cyano group; or a halogen atom, with the proviso that R² are the same or different when m is any integer of 2-5,
R⁵ and R⁶ are the same or different, each of which independently represents: a C₁-C₁₂ chain hydrocarbon group optionally substituted by a group selected from Group E1; a benzoyl group optionally substituted by a group selected from Group E2; a C₂-C₆ alkylcarbonyl group; a C₂-C₆ alkoxycarbonyl group; a C₃-C₁₂ cycloalkyl group; a formyl group; or a hydrogen atom,
R⁴ represents: a C₁-C₁₂ chain hydrocarbon group optionally substituted by a group selected from the Group E1; a C₃-C₁₂ cyclic hydrocarbon group optionally substituted by a group selected from the Group E2; a 5- to 6-membered heterocyclic group optionally substituted by a group selected from the Group E2; an OR⁸ group; an N(R⁹)R¹⁰ group; or a hydrogen atom,
wherein R⁸ represents: a C₁-C₁₂ chain hydrocarbon group optionally substituted by a group selected from the Group E1; a C₃-C₁₂ cyclic hydrocarbon group optionally substituted by a group selected from the Group E2; or a 5- to 6-membered heterocyclic group optionally substituted by a group selected from the Group E2,
R⁹ represents: a C₁-C₁₂ chain hydrocarbon group optionally substituted by a group selected from the Group E1; or a C₃-C₁₂ cyclic hydrocarbon group optionally substituted by a group selected from the Group E2, and R¹⁰ represents: a C₁-C₁₂ chain hydrocarbon group optionally substituted by a group selected from the Group E1; or a hydrogen atom, or R⁹ and R¹⁰ are bonded at the ends to represent a C₂-C₉ alkanediyl group,
said Group E1 consisting of: a C₃-C₁₂ cyclic hydrocarbon group optionally substituted by a group selected from the Group E2; a 5- to 6-membered heterocyclic group optionally substituted by a group selected from the Group E2; a phenoxy group optionally substituted by a group selected from the Group E2; a phenylamino group optionally substituted by a group selected from the Group E2; a C₂-C₆ alkylcarbonyl group; a C₂-C₆ alkoxycarbonyl group; a C₁-C₆ alkoxy group; a C₁-C₆ alkylamino group; a C₂-C₁₂ dialkylamino group; a nitro group; a cyano group; a formyl group; and a halogen atom,
said Group E2 consisting of: a C₁-C₆ alkyl group optionally substituted by a halogen atom; a C₁-C₆ alkoxy group optionally substituted by a halogen atom; a C₂-C₆ alkylcarbonyl group; a C₂-C₆ alkoxycarbonyl group; a C₁-C₆ alkylamino group; a C₂-C₁₂ dialkylamino group; a nitro group; a cyano group; a formyl group; and a halogen atom; and
(ii) pyriproxyfen.

2. The pest control composition according to claim 1, wherein in the formula (1), G is a group shown by G-1, Y¹ is an oxygen atom, R¹ is a trifluoromethyl group, Q¹, Q³, and Q⁴ are CH group, Q² is a CR³ group, R³ is a group as defined in claim 1, m is 2, (R²)ₘ represents substituents at position 3 and position 5, and R² is a chlorine atom.

3. The pest control composition according to claim 1 or 2, wherein in the formula (1), R⁶ is a hydrogen atom.

4. The pest control composition according to at least one of claims 1 to 3, wherein in the formula (1), R⁵ is a hydrogen atom or a methyl group.

5. The pest control composition according to at least one of claims 1 to 4, wherein in the formula (1), R³ is a halogen atom.

6. The pest control composition according to at least one of claims 1 to 5, wherein in the formula (1), R³ is a chlorine atom.

7. The pest control composition according to at least one of claims 1 to 6, wherein in the formula (1), R⁴ is a C₂-C₆ alkyl group, a C₁-C₆ haloalkyl group, a C₃-C₆ cycloalkyl group or a (C₁-C₆ alkoxy) C₁-C₆ alkyl group.

8. The pest control composition according to at least one of claims 1 to 7, wherein in the formula (1), R⁴ is a C₂-C₆ alkyl group.

9. The pest control composition according to at least one of claims 1 to 7, wherein in the formula (1), R⁴ is a C₁-C₆ haloalkyl group.

10. The pest control composition according to at least one of claims 1 to 7, wherein in the formula (1), R⁴ is a C₃-C₆ cycloalkyl group.

11. The pest control composition according to at least one of claims 1 to 7, wherein in the formula (1), R⁴ is a (C₁-C₆ alkoxy) C₁-C₆ alkyl group.

12. A pest control method comprising a step of applying effective amounts of the hydrazide compound shown by the formula (1) according to at least one of claims 1 to 11 and pyriproxyfen to pests or pest habitats.

13. A combination use of the hydrazide compound shown by the formula (1) according to at least one of claims 1 to 11 and pyriproxyfen to control pests.
